# EUROPEAN PATENT APPLICATION

(11) **EP 4 135 468 A1**
(43) Date of publication of application: **15.02.2023**
(21) Application number: 21785480.1
(22) Date of filing: 29.03.2021
(51) Int. Cl.: H04W 76/10, H04W 48/08, H04W 48/16

(54) **COMMUNICATION SYSTEM, COMMUNICATION TERMINAL, AND BASE STATION**

(30) Priority: 07.04.2020 JP 2020068994
(71) Applicant: MITSUBISHI ELECTRIC CORPORATION, Chiyoda-ku Tokyo 100-8310 (JP)
(72) Inventor: SHIMODA Tadahiro, Tokyo 100-8310 (JP); MOCHIZUKI Mitsuru, Tokyo 100-8310 (JP)
(74) Representative: Sajda, Wolf E.
(86) International application number: PCT/JP2021/013207
(87) International publication number: WO 2021/205923

(57) **Abstract**

Better communication is provided. A communication system includes a communication terminal (UE), and a base station (a gNB #1 or a gNB #2) configured to perform radio communication with the communication terminal. The communication terminal or the base station determines whether the base station supports a desired slice that is a Radio Access Network (RAN) slice that the communication terminal desires to use (Steps ST1420 to ST1426).

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

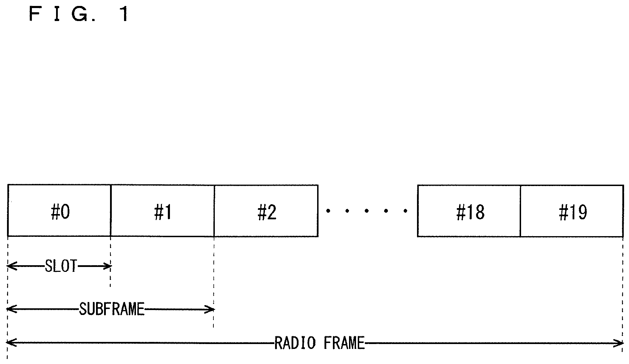

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgment (Ack) / negative acknowledgment (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a data demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions validly by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 V16.0.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. For example, Radio Access Network (RAN) slicing that allocates and uses RAN resources dedicatedly for each communication service has been studied (see Non-Patent Documents 16, 20, and 21). The RAN resources dedicatedly allocated for each communication service are sometimes referred to as RAN slices. Supporting services using sidelink (SL) communication not only in the EPS but also in the 5G core system has been studied (see Non-Patent Documents 1, 22, and 26 to 28). Examples of the services using the SL communication include V2X services and proximity services.

### Prior-Art Documents

### Non-Patent Documents

Non-Patent Document 1: 3GPP TS 36.300 V16.0.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V15.0.0
Non-Patent Document 11: 3GPP RP-172115
Non-Patent Document 12: 3GPP TS 37.340 V16.0.0
Non-Patent Document 13: 3GPP TS 38.211 V16.0.0
Non-Patent Document 14: 3GPP TS 38.213 V16.0.0
Non-Patent Document 15: 3GPP TS 38.214 V16.0.0
Non-Patent Document 16: 3GPP TS 38.300 V16.0.0
Non-Patent Document 17: 3GPP TS 38.321 V15.8.0
Non-Patent Document 18: 3GPP TS 38.212 V16.0.0
Non-Patent Document 19: 3GPP RP-161266
Non-Patent Document 20: 3GPP RP-193254
Non-Patent Document 21: 3GPP S2-2001467
Non-Patent Document 22: 3GPP TS 23.285 V16.2.0
Non-Patent Document 23: 3GPP TS 38.413 V16.0.0
Non-Patent Document 24: 3GPP TS 38.331 V15.8.0
Non-Patent Document 25: 3GPP TS 23.502 V16.3.0
Non-Patent Document 26: 3GPP TS 23.287 V16.1.0
Non-Patent Document 27: 3GPP TS 23.501 V16.3.0
Non-Patent Document 28: 3GPP TR 37.985 V1.1.0
Non-Patent Document 29: 3GPP TR 23.703 V12.0.0
Non-Patent Document 30: 3GPP TS 38.304 V15.6.0

### Summary

### Problems to be Solved by the Invention

When the UE is registered in a NW, the UE notifies the AMF of a RAN slice that the UE desires to use for communication. The AMF determines, using the notification and RAN slices supported by a cell to which the UE is connected, a RAN slice that is allowed for communication with the UE. However, the cell selected and/or reselected by the UE sometimes fails to support a slice desired by the UE. Here, the AMF does not allow the UE to be registered using the desired slice. This disables the UE from communicating using the desired slice. Consequently, the QoS of communication probably cannot be reserved.

Moreover, supporting various services using the SL communication (also referred to as the PC5 communication) not only in the EPS but also in the 5G core system has been studied (Non-Patent Documents 1, and 20 to 23). Communication is performed between devices in the SL communication. Another proposal is made on the indirect communication through a relay as well as the direct communication between devices in the SL communication (Non-Patent Document 24). In such indirect communication through a relay, how to satisfy the QoS required for the services, how to enhance the reliability of the services, and how to increase the use efficiency of resources to be used for the SL communication are problems.

In view of the problems, one of the objects of the present invention is to provide better communication through reserving the QoS required for the services.

### Means to Solve the Problems

A communication system according to the present invention is a communication system including: a communication terminal; and a base station configured to perform radio communication with the communication terminal, wherein the communication terminal or the base station determines whether the base station supports a desired slice that is a Radio Access Network (RAN) slice that the communication terminal desires to use.

A communication terminal according to the present invention is a communication terminal configured to perform radio communication with a base station, wherein the communication terminal determines whether the base station supports a desired slice that is a Radio Access Network (RAN) slice that the communication terminal desires to use.

A base station according to the present invention is a base station configured to perform radio communication with a communication terminal, wherein the base station determines whether to support a desired slice that is a Radio Access Network (RAN) slice that the communication terminal desires to use.

### Effects of the Invention

The present invention can provide better communication.

The object, features, aspects and advantages of the present invention will become more apparent from the following detailed description and the accompanying drawings of the present invention.

### Brief Description of Drawings

FIG. 1 is a diagram illustrating the configuration of a radio frame for use in an LTE communication system.
FIG. 2 is a block diagram showing the overall configuration of an LTE communication system 200 under discussion of 3GPP.
FIG. 3 is a block diagram illustrating an overall configuration of a NR communication system 210 that has been discussed in 3GPP.
FIG. 4 illustrates a structure of the DC to be performed by an eNB and a gNB that are connected to the EPC.
FIG. 5 illustrates a structure of the DC to be performed by gNBs that are connected to the NG core.
FIG. 6 illustrates a structure of the DC to be performed by the eNB and the gNB that are connected to the NG core.
FIG. 7 illustrates a structure of the DC to be performed by the eNB and the gNB that are connected to the NG core.
FIG. 8 is a block diagram showing the configuration of a user equipment 202 shown in FIG. 2.
FIG. 9 is a block diagram showing the configuration of a base station 203 shown in FIG. 2.
FIG. 10 is a block diagram showing the configuration of an MME.
FIG. 11 is a block diagram illustrating a configuration of the 5GC.
FIG. 12 is a flowchart showing an outline from a cell search to an idle state operation performed by a communication terminal (UE) in LTE communication system.
FIG. 13 illustrates an example structure of a cell in an NR system.
FIG. 14 is a sequence diagram illustrating operations for the UE to connect to a base station that can support a desired slice, using broadcast information from the base station according to the first embodiment.
FIG. 15 illustrates an example of assigning RAN slices to be supported to the PCI according to the first embodiment.
FIG. 16 is a sequence diagram illustrating operations for the UE to connect to the base station that can support the desired slice, using the PCI of a cell according to the first embodiment.
FIG. 17 is a sequence diagram illustrating operations for the UE to connect to the base station that can support the desired slice, using a random access response from the base station according to the first embodiment.
FIG. 18 is a sequence diagram illustrating operations when the base station determines whether to allow the registration of the UE according to the first embodiment.
FIG. 19 illustrates a sequence diagram of operations when the UE connected to a base station that does not support the desired slice is handed over to a base station that supports the desired slice according to the second embodiment.
FIG. 20 illustrates the sequence diagram of operations when the UE connected to the base station that does not support the desired slice is handed over to the base station that supports the desired slice according to the second embodiment.
FIG. 21 illustrates a sequence diagram of the first example operations when the UE connected to the base station that does not support the desired slice is reconnected to a cell of the base station that supports the desired slice according to the second embodiment.
FIG. 22 illustrates the sequence diagram of the first example operations when the UE connected to the base station that does not support the desired slice is reconnected to the cell of the base station that supports the desired slice according to the second embodiment.
FIG. 23 illustrates a sequence diagram of the second example operations when the UE connected to the base station that does not support the desired slice is reconnected to the cell of the base station that supports the desired slice according to the second embodiment.
FIG. 24 illustrates the sequence diagram of the second example operations when the UE connected to the base station that does not support the desired slice is reconnected to the cell of the base station that supports the desired slice according to the second embodiment.
FIG. 25 is a sequence diagram illustrating an example method for configuring the QoS and the SLRB in the UE-to-UE indirect communication through the relay UE according to the fourth embodiment.
FIG. 26 is a sequence diagram illustrating an example method for configuring the QoS and the SLRB in the UE-to-UE indirect communication through the relay UE according to the first modification of the fourth embodiment.
FIG. 27 is a sequence diagram illustrating an example method for configuring the QoS and the SLRB in the UE-to-UE indirect communication through the relay UE according to the seventh modification of the fourth embodiment.
FIG. 28 is a sequence diagram illustrating the example method for configuring the QoS and the SLRB in the UE-to-UE indirect communication through the relay UE according to the seventh modification of the fourth embodiment.
FIG. 29 is a sequence diagram illustrating the example method for configuring the QoS and the SLRB in the UE-to-UE indirect communication through the relay UE according to the seventh modification of the fourth embodiment.
FIG. 30 is a sequence diagram illustrating the first example method for configuring the QoS and the SLRB in the UE-to-UE indirect communication through the relay UE according to the eighth modification of the fourth embodiment.
FIG. 31 is a sequence diagram illustrating the first example method for configuring the QoS and the SLRB in the UE-to-UE indirect communication through the relay UE according to the eighth modification of the fourth embodiment.
FIG. 32 is a sequence diagram illustrating the second example method for configuring the QoS and the SLRB in the UE-to-UE indirect communication through the relay UE according to the eighth modification of the fourth embodiment.
FIG. 33 is a sequence diagram illustrating the second example method for configuring the QoS and the SLRB in the UE-to-UE indirect communication through the relay UE according to the eighth modification of the fourth embodiment.
FIG. 34 is a sequence diagram illustrating the third example method for configuring the QoS and the SLRB in the UE-to-UE indirect communication through the relay UE according to the eighth modification of the fourth embodiment.
FIG. 35 is a sequence diagram illustrating the third example method for configuring the QoS and the SLRB in the UE-to-UE indirect communication through the relay UE according to the eighth modification of the fourth embodiment.
FIG. 36 is a sequence diagrams illustrating the first example method for configuring the SLRB when the UE is handed over in the UE-to-UE direct communication using the SL according to the ninth modification of the fourth embodiment.
FIG. 37 is a sequence diagram illustrating the first example method for configuring the SLRB when the UE is handed over in the UE-to-UE direct communication using the SL according to the ninth modification of the fourth embodiment.
FIG. 38 is a sequence diagram illustrating the second example method for configuring the SLRB when the UE is handed over in the UE-to-UE direct communication using the SL according to the ninth modification of the fourth embodiment.
FIG. 39 is a sequence diagram illustrating the second example method for configuring the SLRB when the UE is handed over in the UE-to-UE direct communication using the SL according to the ninth modification of the fourth embodiment.
FIG. 40 is a sequence diagram illustrating the third example method for configuring the SLRB when the UE is handed over in the UE-to-UE direct communication using the SL according to the ninth modification of the fourth embodiment.
FIG. 41 is a sequence diagram illustrating the third example method for configuring the SLRB when the UE is handed over in the UE-to-UE direct communication using the SL according to the ninth modification of the fourth embodiment.
FIG. 42 is a sequence diagram illustrating the first example method for configuring the SLRB when the UE-TX is handed over in the UE-to-UE indirect communication using the SL according to the ninth modification of the fourth embodiment.
FIG. 43 is a sequence diagram illustrating the first example method for configuring the SLRB when the UE-TX is handed over in the UE-to-UE indirect communication using the SL according to the ninth modification of the fourth embodiment.
FIG. 44 is a sequence diagram illustrating the second example method for configuring the SLRB when the UE-TX is handed over in the UE-to-UE indirect communication using the SL according to the ninth modification of the fourth embodiment.
FIG. 45 is a sequence diagram illustrating the second example method for configuring the SLRB when the UE-TX is handed over in the UE-to-UE indirect communication using the SL according to the ninth modification of the fourth embodiment.
FIG. 46 is a sequence diagram illustrating the second example method for configuring the SLRB when the UE-TX is handed over in the UE-to-UE indirect communication using the SL according to the ninth modification of the fourth embodiment.
FIG. 47 is a sequence diagram illustrating the second example method for configuring the SLRB when the UE-TX is handed over in the UE-to-UE indirect communication using the SL according to the ninth modification of the fourth embodiment.
FIG. 48 is a sequence diagram illustrating the first example method for notifying the SLRB configuration from the UE-TX to the UE-RX in the UE-to-UE indirect communication using the SL according to the tenth modification of the fourth embodiment.
FIG. 49 is a sequence diagram illustrating the second example method for notifying the SLRB configuration from the UE-TX to the UE-RX in the UE-to-UE indirect communication using the SL according to the tenth modification of the fourth embodiment.

### Description of Embodiments

### The first embodiment

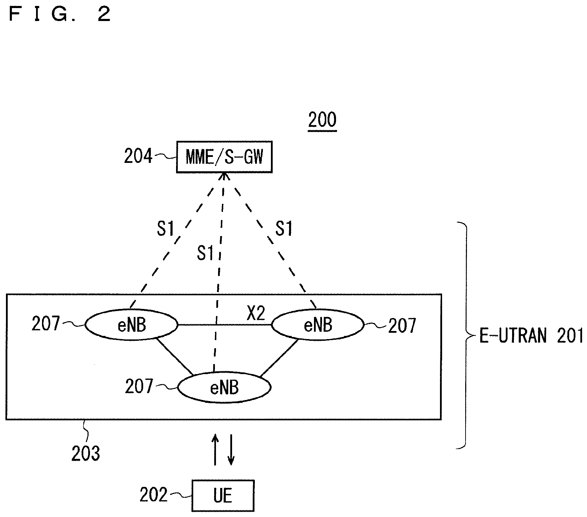

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC _IDLE, public land mobile network (PLMN) selection, system information (SI) broadcast, paging, cell reselection, mobility, and the like are performed. In RRC _CONNECTED, the user equipment has RRC connection and is capable of transmitting and receiving data to and from a network. In RRC_CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

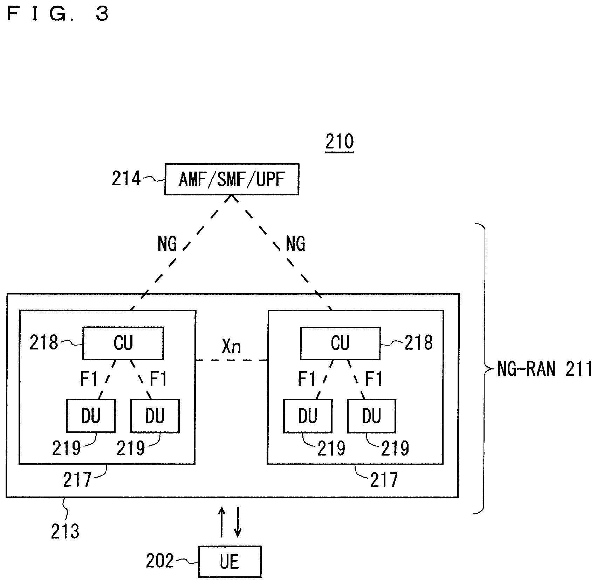

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC _CONNECTED, and RRC _INACTIVE.

RRC_IDLE and RRC_CONNECTED are identical to those in LTE. In RRC _INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF.

A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

The 5G communication system may include the Unified Data Management (UDM) function and the Policy Control Function (PCF) described in Non-Patent Document 27 (3GPP TS23.501 V16.3.0). The UDM and/or the PCF may be included in the 5GC unit in FIG. 3.

The 5G communication system may include the Non-3GPP Interworking Function (N3IWF) described in Non-Patent Document 27 (3GPP TS23.501 V16.3.0). The N3IWF may terminate an Access Network (AN) with the UE in a non-3GPP access with the UE.

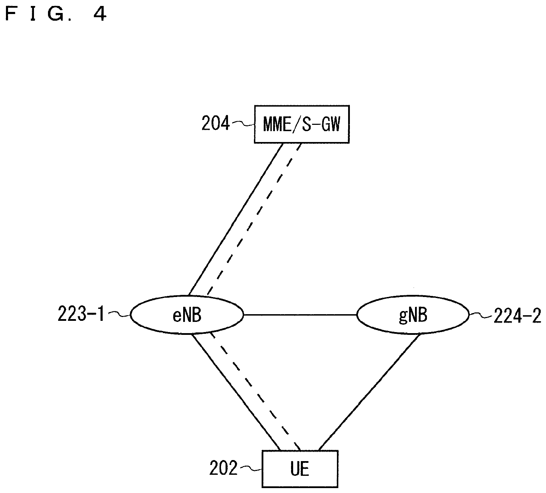

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

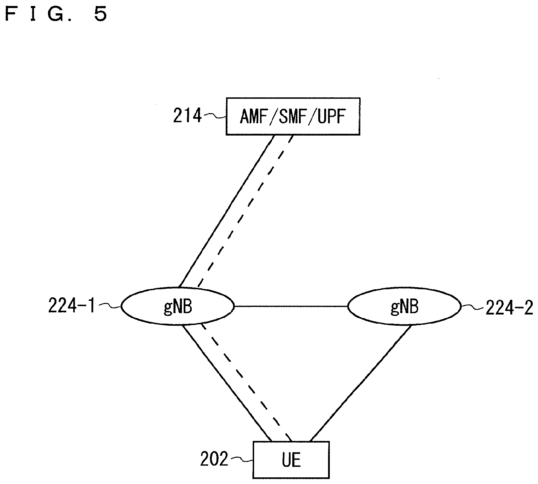

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

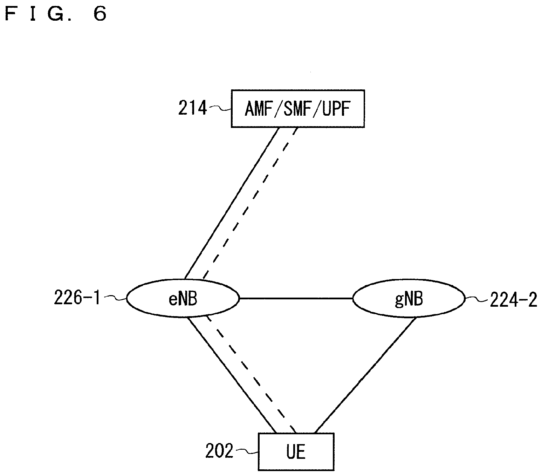

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

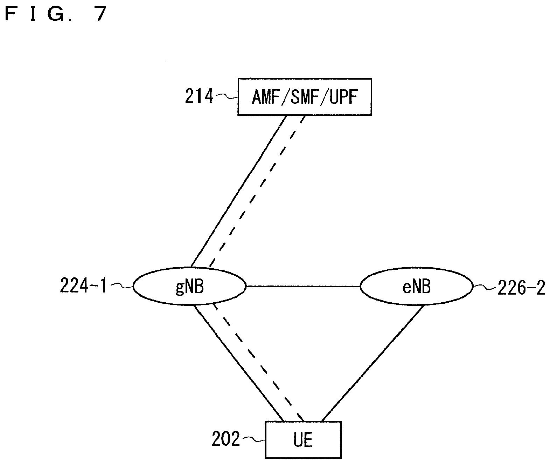

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

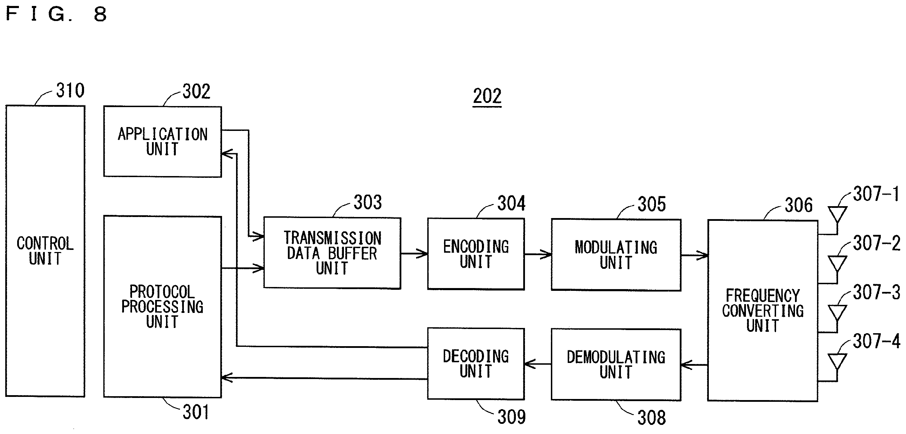

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process. The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

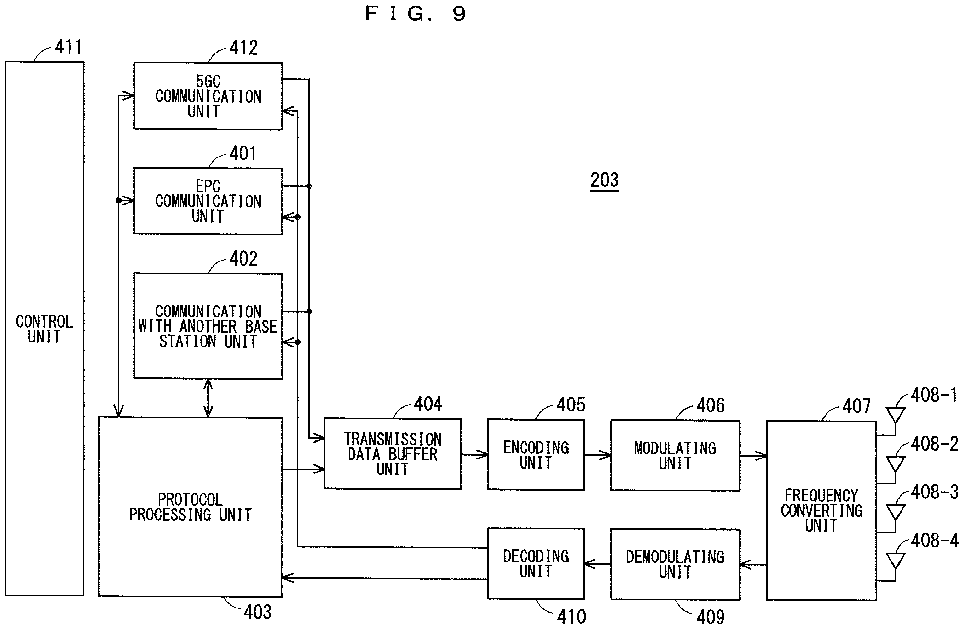

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station.

The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction.

Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

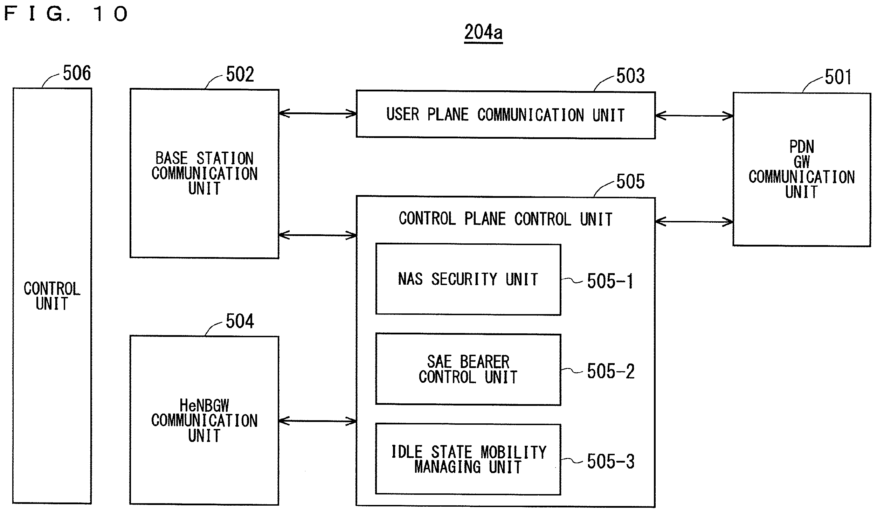

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface. In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

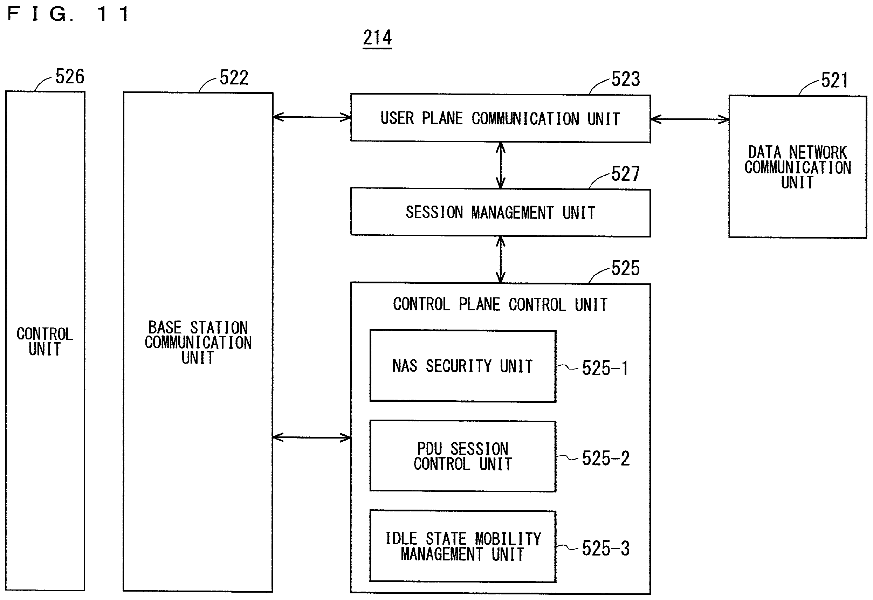

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane communication unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

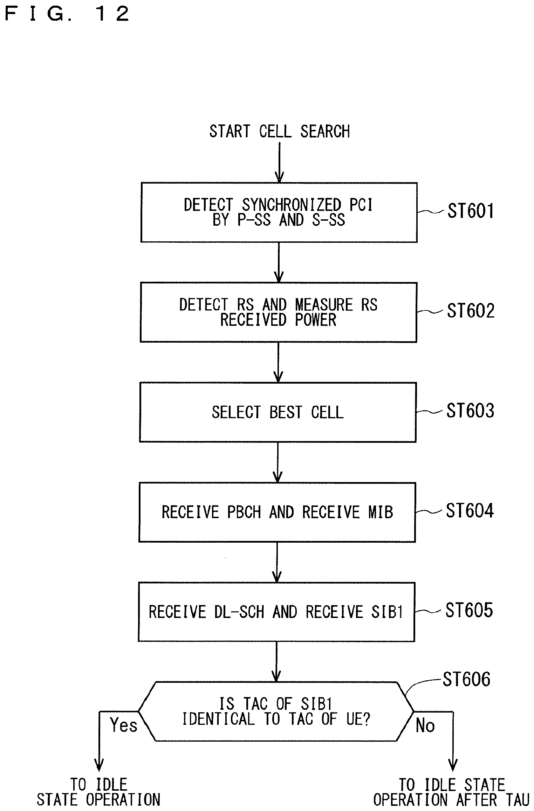

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP) for the synchronized cells. The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB 1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

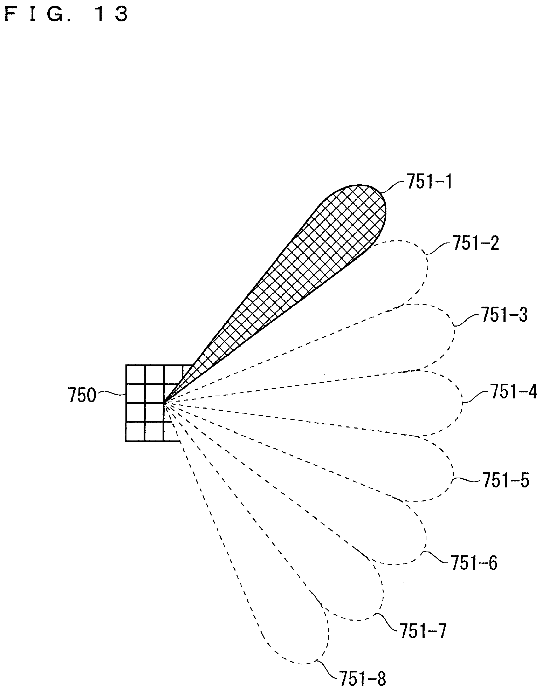

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In 3GPP, the Side Link (SL) is supported for the Device-to-Device (D2D) communication and the Vehicle-to-vehicle (V2V) communication (see Non-Patent Document 1). The SL is defined by a PC5 interface.

The physical channels (see Non-Patent Document 1) to be used for the SL are described. A physical sidelink broadcast channel (PSBCH) carries information related to systems and synchronization, and is transmitted from the UE.

A physical sidelink discovery channel (PSDCH) carries a sidelink discovery message from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

The transport channels to be used for the SL (see Non-Patent Document 1) are described. A sidelink broadcast channel (SL-BCH) has a predetermined transport format, and is mapped to the PSBCH that is a physical channel.

A sidelink discovery channel (SL-DCH) has periodic broadcast transmission of a fixed size and a predetermined format. The SL-DCH supports both of the UE autonomous resource selection and the resource allocation scheduled by the eNB. The SL-DCH has a collision risk in the UE autonomous resource selection. The SL-DCH has no collision when the eNB allocates dedicated resources to the UE. Although the SL-DCH supports the HARQ combining, it does not support the HARQ feedback. The SL-DCH is mapped to the PSDCH that is a physical channel.

A sidelink shared channel (SL-SCH) supports broadcast transmission. The SL-SCH supports both of the UE autonomous resource selection and the resource allocation scheduled by the eNB. The SL-SCH has a collision risk in the UE autonomous resource selection. The SL-SCH has no collision when the eNB allocates dedicated resources to the UE. Although the SL-SCH supports the HARQ combining, it does not support the HARQ feedback. The SL-SCH supports dynamic link adaptation by varying the transmission power, modulation, and coding. The SL-SCH is mapped to the PSSCH that is a physical channel.

The logical channels to be used for the SL (see Non-Patent Document 1) are described. A Sidelink Broadcast Control Channel (SBCCH) is a sidelink channel for broadcasting sidelink system information from one UE to other UEs. The SBCCH is mapped to the SL-BCH that is a transport channel.

A Sidelink Traffic Channel (STCH) is a point-to-multipoint sidelink traffic channel for transmitting user information from one UE to other UEs. This STCH is used only by sidelink communication capable UEs and V2X sidelink communication capable UEs. Point-to-point communication between two sidelink communication capable UEs is realized with the STCH. The STCH is mapped to the SL-SCH that is a transport channel.

Supporting the V2X communication also in NR has been studied in 3GPP. Study of the V2X communication in NR has been pursued based on the LTE system and the LTE-A system. There are changes and additions from the LTE system and the LTE-A system in the following points.

In LTE, the SL communication relies only on broadcasts. Support of not only broadcasts but also unicasts and groupcasts in the SL communication in NR has been studied (see Non-Patent Document 26 (TS23.287)).

Support of, for example, the HARQ feedback (Ack/Nack) or the CSI report in the unicast communication or the groupcast communication has been studied.

Support of the PC5-S signaling has been studied to support not only broadcasts but also unicasts and groupcasts in the SL communication (see Non-Patent Document 26 (TS23.287)). For example, the PC5-S signaling is performed for establishing the SL or a link for performing the PC5 communication. The link is implemented by the V2X layer, and is also referred to as a Layer-2 link.

Supporting the RRC signaling in the SL communication has also been studied (see Non-Patent Document 26 (TS23.287)). The RRC signaling in the SL communication is also referred to as PC5-RRC signaling. Example proposals include notifying, between the UEs performing the PC5 communication, the UE capability or configuration of the AS layer for performing the V2X communication using the PC5 communication.

When the UE is registered in a NW, the UE notifies the AMF of a RAN slice that the UE desires to use for communication (may be hereinafter referred to as a desired slice). The UE may include information on the desired slice, for example, Single Network Slice Selection Assistance Information (S-NSSAI) in a requested Network Slice Selection Assistance Information (requested NSSAI) and notify the information on the desired slice. The UE may give the notification through the base station. In response to the notification, the AMF may determine a RAN slice to be allowed for the communication with the UE.

The AMF may make the determination using information on RAN slices supported by the cell to which the UE is connected. The AMF may notify the UE of information on RAN slices to be allowed through the base station. The AMF may notify the information on RAN slices to be allowed as Allowed NSSAI. The UE may communicate with the NW using the RAN slice allowed by the AMF.

The following problems occur in the aforementioned case. Specifically, the cell selected and/or reselected by the UE sometimes fails to support a slice desired by the UE. Here, the AMF does not allow the UE to be registered using the desired slice. This disables the UE from communicating using the desired slice. Consequently, the QoS of communication cannot be reserved. This probably causes problems, for example, a failure of maintaining a desired communication rate and a failure of satisfying a desired latency.

The first embodiment discloses a method for solving the problems.

The base station broadcasts information on one or more RAN slices that its own base station can support. The information may be, for example, information on the Single Network Slice Selection Assistance Information (S-NSSAI) that the base station can support. The information may include information on a Slice/Service Type (SST), information on a Slice Differentiator (SD), or both of them.

The information may include information on one or more RAN slices to be supported by a cell in its own base station. The information may include information on the cell, for example, a cell identifier (e.g., a PCI). The information may include combined information of the information on the cell and the information on the RAN slices to be supported by the cell.

The information may include information on one or more RAN slices to be supported by another cell in its own base station. This enables, for example, the UE to promptly reselect a cell that supports a desired RAN slice.

The information on the RAN slices to be supported by the other cell in its own base station may be associated with the information on the cell. The association may be, for example, represented by a list. The list may include the information on the RAN slices to be supported by its own cell.

The information may include information on one or more RAN slices to be supported by a DU in its own base station. The information may include information on the DU, for example, an identifier of the DU (e.g., a DU-ID). The information may include combined information of the information on the DU and the information on the RAN slices to be supported by the DU.

The information may include information on one or more RAN slices to be supported by another DU in its own base station. This enables, for example, the UE to promptly switch a connection to the DU that supports a desired RAN slice.

The information on the RAN slices to be supported by the other DU in its own base station may be associated with the information on the DU. The association may be, for example, represented by a list. The list may include the information on the RAN slices to be supported by its own DU.

The information may include information on one or more RAN slices to be supported by a TRP in its own base station. The information may include information on the TRP, for example, an identifier of the TRP. The information may include combined information of the information on the TRP and the information on the RAN slices to be supported by the TRP.

The information may include information on one or more RAN slices to be supported by another TRP in its own base station. This enables, for example, the UE to promptly switch a connection to the TRP that supports a desired RAN slice.

The information on the RAN slices to be supported by the other TRP in its own base station may be associated with the information on the TRP. The association may be, for example, represented by a list. The list may include the information on the RAN slices to be supported by its own TRP.

The base station may broadcast these pieces of information using broadcast information. The broadcast information may be, for example, a MIB. This enables, for example, the base station to promptly broadcast the pieces of information.

As another example, the broadcast information may be the SIB1. This enables, for example, the base station to notify a large amount of information. As another example, the broadcast information may be Other System Information (Other SI). This enables, for example, the base station to notify a larger amount of information. The Other SI may be an existing SIB. Alternatively, a new SIB may be provided as the Other SI. The new SIB may be, for example, an SIB for information on the RAN slicing.

The information on the RAN slices that its own base station can support may be provided for each base station, each cell, each DU, each Transmission Reception Point (TRP), or each antenna panel. This can, for example, flexibly control the RAN slicing in the communication system. The information may include information on a base station, a cell, a DU, and/or a TRP. The information may be used in combination with the information on the base station, the cell, the DU, and/or the TRP. This enables, for example, the UE to identify a RAN slice that can be supported for each base station, cell, DU, and/or TRP. Consequently, the UE can be connected to the base station, the cell, the DU, and/or the TRP that can support the desired slice.

The broadcast information may include information on the access control, for example, information on barring. The barring may be performed for each RAN slice. The broadcast information may include information on the barring for each RAN slice. This enables, for example, flexible access control in the communication system.

The base station may dedicatedly notify the UE of information on the supportable RAN slice. For example, the base station may include the information in an RRC setup instruction to the UE, and notify the information. The base station may include the information in an RRC resumption instruction to the UE, and notify the information. The base station may include the information in an RRC reconfiguration instruction to the UE, and notify the information. The base station may include information on RAN slices of a target base station in a handover request and notify the information. This can, for example, reduce the amount of signaling for the broadcast information.

The UE may determine whether the base station is accessible, using the broadcast information and/or the notification from the base station. For example, the UE may be connected only to the base station that supports a RAN slice that its own UE desires to use (may be hereinafter referred to as a desired slice), or only to the cell, the DU, and/or the TRP that can support the desired slice.

The UE may perform the processes in selecting a cell. This enables, for example, the UE to promptly start communicating using the desired slice after power-up. As another example, the UE may perform the processes in reselecting a cell. This enables, for example, the UE in RRC_IDLE state or RRC_INACTIVE state to promptly recover the communication with the base station using the desired slice.

For example, a condition that a cell can support the desired slice may be added to criteria by which the UE determines a suitable cell (see Non-Patent Document 30 (TS38.304)).
This enables, for example, the UE to communicate using the suitable cell with a desired QoS being satisfied.

The UE may make the determination from among cells, DUs, and/or TRPs at different frequencies. For example, when a supportable RAN slice is different for each frequency, the UE may select and/or reselect a cell only at a frequency at which the desired slice can be supported. This can, for example, reduce the amount of processing for selecting and/or reselecting a cell by the UE. As another example, the UE may make the determination from among cells, DUs, and/or TRPs at the same frequency.

For example, when selecting the strongest cell from among those at the same frequency in selecting and/or reselecting a cell, the UE may exclude cells that do not support the desired slice from being selected. This can, for example, prevent the UE from selecting a cell that does not support the desired slice. Consequently, the QoS in the communication of the UE can be reserved.

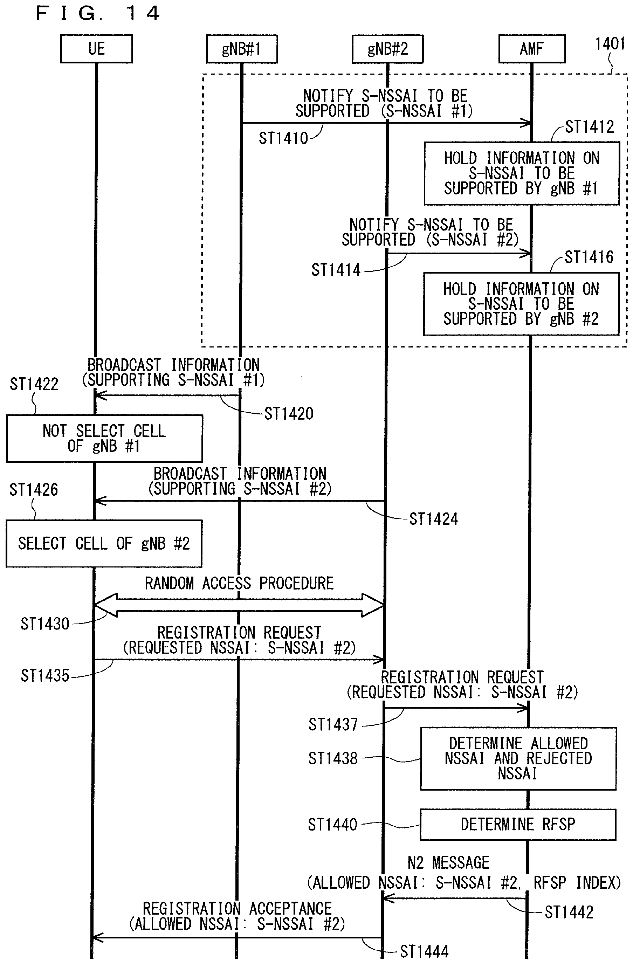

FIG. 14 is a sequence diagram illustrating operations for the UE to connect to a base station that can support a desired slice, using the broadcast information from the base station. In the example of FIG. 14, a desired slice of the UE is S-NSSAI #2, the gNB #1 supports S-NSSAI #1, and the gNB #2 supports the S-NSSAI #2.

In a procedure 1401 of FIG. 14, the gNBs (the gNBs #1 and #2) establish the configuration on supportable RAN slices with the AMF. The procedure may be, for example, the NG Setup disclosed in Non-Patent Document 23 (TS38.413). In Step ST1410, the gNB #1 notifies the AMF of information on the S-NSSAI that its own gNB #1 supports. In the example of FIG. 14, the gNB #1 notifies the AMF of information indicating that its own gNB #1 supports the S-NSSAI #1. The notification in Step ST1410 may be included in, for example, the NG SETUP REQUEST disclosed in Non-Patent Document 23 (TS38.413).

In Step ST1412, the AMF holds the information received in Step ST1410. In Step ST1414, the gNB #2 notifies the AMF of information on the S-NSSAI that its own gNB #2 supports. In the example of FIG. 14, the gNB #2 notifies the AMF of information indicating that its own gNB #2 supports the S-NSSAI #2. The notification in Step ST1414 may be included in, for example, the NG SETUP REQUEST disclosed in Non-Patent Document 23 (TS38.413). In Step ST1416, the AMF holds the information received in Step ST1414.

In Step ST1420 of FIG. 14, the gNB #1 transmits the broadcast information to the UEs being served thereby. The broadcast information in Step ST1420 includes information indicating that the gNB #1 supports the S-NSSAI #1. In Step ST1422, the UE determines not to select a cell of the gNB #1 as a connection destination. The UE may make the determination, using the information included in Step ST1420.

In Step ST1424 of FIG. 14, the gNB #2 transmits the broadcast information to the UEs being served thereby. The broadcast information in Step ST1424 includes information indicating that the gNB #2 supports the S-NSSAI #2. In Step ST1426, the UE determines to select a cell of the gNB #2 as a connection destination. The UE may make the determination, using the information included in Step ST1424.

In Step ST1430 of FIG. 14, the UE performs a random access procedure with the gNB #2. In Step ST1430, the connection between the UE and the gNB #2 has been established. In Step ST1435, the UE requests the gNB #2 to register the UE in a NW. The UE includes, in the request, the S-NSSAI #2 that is the requested NSSAI, and notifies the request. In Step ST1437, the gNB #2 forwards the registration request in Step ST1435 to the AMF.

In Step ST1438 of FIG. 14, the AMF performs operations on the registration of the UE. For example, the AMF determines Allowed NSSAI and Rejected NSSAI for the UE. In the example of FIG. 14, the AMF includes the S-NSSAI #2 in the Allowed NSSAI, using the fact that the gNB #2 supports the S-NSSAI #2 included in the requested NSSAI from the UE. In Step ST1440, the AMF determines an RAT/Frequency Selection Priority (RFSP: see Non-Patent Document 27 (TS23.501)) to be used for the base station to determine the RAT and the frequency of the UE.

In Step ST1442 of FIG. 14, the AMF notifies the gNB #2 of information indicating registration acceptance of the UE. The notification may include information on the Allowed NSSAI for the UE, or information on the RFSP, for example an RFSP index (see Non-Patent Document 27 (TS23.501)). The AMF may give the notification through an interface between the AMF and the base station (e.g., the N2 interface). In the example of FIG. 14, the AMF notifies the S-NSSAI #2 as the Allowed NSSAI. In Step ST1444, the gNB #2 notifies the UE of the registration acceptance. The notification in Step ST1444 may include the information on the Allowed NSSAI for the UE. In the example of FIG. 14, the gNB #2 notifies the S-NSSAI #2 as the Allowed NSSAI. In response to the notification, the UE communicates using the S-NSSAI #2.

The UE may be connected to a cell, a DU, and/or a TRP that does not support a desired slice. For example, when any of a cell, a DU, and/or a TRP to which the UE can be connected does not support a desired slice of the UE, the UE may perform the aforementioned operations. For example, the AMF may determine that the UE communicates using default S-NSSAI. The UE may be connected to a NW using the default S-NSSAI. As another example where any of the cell, the DU, and/or the TRP does not support a desired slice of the UE, a RAN slice other than the desired slice may be used.

For example, when the desired slice of the UE is a RAN slice of the URLLC and the AMF does not support the URLLC in a cell to which the UE is connected, the AMF may determine that the UE communicates using a RAN slice of the eMBB. The AMF may include, in an Allowed NSSAI, the S-NSSAI that is not included in a requested NSSAI of the UE, and notify the base station of the S-NSSAI. The base station may forward the notification to the UE. In response to the notification, the UE may communicate using a RAN slice different from the desired slice. This enables, for example, the communication between the UE and the NW even when there is no cell that supports a desired slice of the UE around the UE.

Priorities may be assigned to RAN slices determined by the AMF as RAN slices other than the desired slice. The priorities may be assigned for each desired slice. The priorities may be determined in a standard or by the AMF. The base station may determine the priorities, and notify the priorities to the AMF. As another example, the UE may hold information on the priorities, and notify the information to the AMF. For example, the UE may hold the information on the priorities in an SIM card.

As an example of the priorities, RAN slices to be configured when the desired slice is of the URLLC may be RAN slices of the eMBB, the mMTC, and the V2X in this order. For example, when the RAN slices of the URLLC are not supported due to shorter symbol length used in many RAN slices allowing the large capacity communication, selecting the RAN slices of the eMBB can reduce the latency of the communication. The slices to which priorities are assigned may include the desired slice. Consequently, the priorities can be used in determining the RAN slices to be used, for example, irrespective of whether the desired slice is supported or not. This can avoid the complexity in a procedure for selecting the RAN slices.

The UE may select a cell that supports the desired slice, using information on a frequency band. For example, the UE may determine whether a cell supports the desired slice, using information indicating whether a frequency band of the cell is the F1 band or the F2 band or information on a frequency band of a cell, a DU, and/or a TRP. For example, the UE using the eMBB service may select a cell at the F2 band allowing the large capacity transmission. This enables, for example, the UE to be promptly connected to a cell that supports the desired slice.

The UE may select a cell that supports the desired slice, using information on a bandwidth. For example, the UE may determine whether a cell supports the desired slice, using information on a bandwidth of a cell, a DU, and/or a TRP. For example, the UE using the eMBB service may select a cell whose bandwidth is larger than a predetermined value. This enables, for example, the UE to be promptly connected to a cell that supports the desired slice.

As another example, the UE may select a cell that supports the desired slice, using information on a symbol length. For example, the UE using the URLLC service may select a cell with a shorter symbol length. This, for example, produces the same advantages as previously described.

The UE may preferentially use cells that support the frequency and/or symbol length to be used in the desired slice, in selecting and/or reselecting a cell. When the UE has not found the suitable cell, the UE may select and/or reselect a cell as normally performed. This enables, for example, the UE to promptly select and/or reselect a cell that supports the desired slice.

The RAN slices may be associated with frequencies of cells. The RAN slices may be associated with symbol lengths of cells. The RAN slices may be associated with combinations of frequencies and symbol lengths of cells.

The association may be predefined in a standard. The UE may select a cell that supports a desired slice, using the association defined in a standard. This enables, for example, the UE to promptly detect the desired slice.

As another example, the UE may have information on the association in advance. For example, the information may be stored in a Subscriber Identity Module (SIM) of the UE. This enables, for example, communications operators to flexibly change the association.

As another example, the UE may use information in the previous registration as the information on the association. The UE may hold, as the information on the association, information on the frequency and/or symbol length of the cell and information on the RAN slices to be supported all of which have been obtained in the previous registration. This enables, for example, the UE to promptly detect a cell that supports the desired slice in the re-registration.

Another solution is disclosed. Information corresponding to the RAN slices to be supported is assigned to a cell identifier. The cell identifier may be, for example, the PCI. A RAN slice, for example, the SST may be assigned to a predetermined bit of the PCI. In other words, the predetermined bit of the PCI may represent whether to support each RAN slice, for example, each SST. For example, 1 may represent a bit of a RAN slice that can be supported, whereas 0 may represent a bit of a RAN slice that cannot be supported. As another example, 0 may represent a bit of a RAN slice that can be supported, whereas 1 may represent a bit of a RAN slice that cannot be supported. Among bits making up values of the PCI, values of bits other than the predetermined bit may be assigned for identifying cells.

A supportable slice may be assigned for each cell. The UE may be connected to a cell that supports the desired slice, among cells of the base station. This enables, for example, the base station to support various RAN slices.

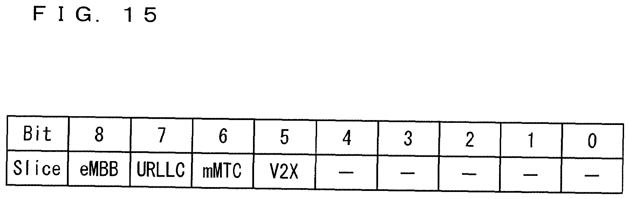

FIG. 15 illustrates an example of assigning RAN slices to be supported to the PCI. In the example of FIG. 15, the PCI consists of total 9 bits from a 0-th bit to an eighth bit. Any values ranging from 0 to 511 represented by the 9 bits are assigned. Here, the eighth bit is a Most Significant Bit (MSB).

In the example of FIG. 15, the eMBB is assigned to the eighth bit, the URLLC is assigned to the seventh bit, the mMTC is assigned to the sixth bit, and the V2X is assigned to the fifth bit. In the PCI of the cell that supports only the URLLC in the example of FIG. 15, 0 is assigned to the eighth bit, the sixth bit, and the fifth bit, and 1 is assigned to the seventh bit. The cell may arbitrarily assign values to the 0-th bit to the fourth bit. For example, the base station may determine the values of the 0-th bit to the fourth bit so that the values do not overlap those of the PCI of a surrounding cell.

The UE may obtain information on RAN slices that the cell can support, using the PCI of the cell. The UE may determine a cell to which the UE is connected, using the information. This enables, for example, the UE to be promptly connected to a cell that supports the desired slice.

The base station may broadcast, to the UE, information indicating whether the PCI includes the information on RAN slices that the cell can support. The UE may determine whether the PCI includes the information on RAN slices that the cell can support, using the broadcast information. This enables, for example, a cell including the information on RAN slices in the PCI to coexist with a cell excluding the information.

As another example, the base station may notify the UE of the information indicating whether the PCI includes the information on RAN slices, in a random access procedure. For example, the base station may include, in a Random Access Response (RAR), the information indicating whether the PCI includes the information on RAN slices. This can, for example, prevent a load on the number of PCIs that the base station can assign to a cell. The UE may obtain the information on RAN slices that the cell can support, using the information indicating whether the PCI includes the information on RAN slices. The UE may terminate the random access procedure when the cell does not support the desired slice. In such a case, for example, the UE need not transmit the message 3 in the random access procedure. As another example, the UE may complete the random access procedure. The UE may release the RRC connection with the base station after completing the random access procedure.

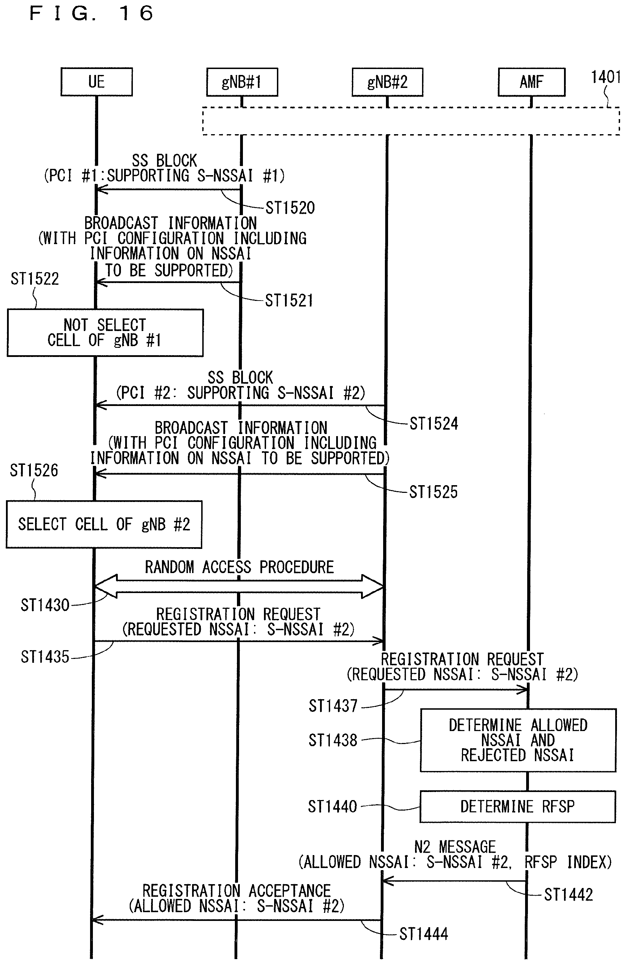

FIG. 16 is a sequence diagram illustrating operations for the UE to connect to a base station that can support the desired slice, using the PCI of the cell. In the example of FIG. 16, a desired slice of the UE is the S-NSSAI #2, the gNB #1 supports the S-NSSAI #1, and the gNB #2 supports the S-NSSAI #2. In FIG. 16, the same numbers are applied to the processes identical those in FIG. 14, and the common description thereof is omitted.

The procedure 1401 in FIG. 16 is identical to that in FIG. 14.

In Step ST1520 of FIG. 16, the gNB #1 transmits the SS block. The PCI of the gNB #1 included in Step ST1520 indicates assignment to the cell that supports the S-NSSAI #1. In Step ST1521, the gNB #1 transmits the broadcast information to the UEs being served thereby. The broadcast information in Step ST1521 includes information indicating that the PCI includes information on RAN slices that the cell of the gNB #1 supports. Through Steps ST1520 and ST1521, the UE obtains the information on RAN slices that the cell of the gNB #1 can support. In Step ST1522, the UE determines not to be connected to the gNB #1.

In Step ST1524 of FIG. 16, the gNB #2 transmits the SS block. The PCI of the gNB #2 included in Step ST1524 indicates assignment to the cell that supports the S-NSSAI #2. In Step ST1525, the gNB #2 transmits the broadcast information to the UEs being served thereby. The broadcast information in Step ST1525 includes information indicating that the PCI includes information on RAN slices that the cell of the gNB #2 supports. Through Steps ST1524 and ST1525, the UE obtains the information on RAN slices that the cell of the gNB #2 can support. In Step ST1526, the UE determines to be connected to the gNB #2.

Steps ST1430 to ST1444 in FIG. 16 are identical to those in FIG. 14.

As another example, the base station may notify the UE of the information on RAN slices that the base station can support per se, in a random access procedure. For example, the base station may include, in a Random Access Response (RAR), information on RAN slices that its own base station, the cell, the DU, and/or the TRP can support. This can, for example, avoid design complexity in the communication system. The UE may obtain information on RAN slices that the cell, the DU, and/or the TRP can support, using the information. The UE may terminate the random access procedure when the cell does not support the desired slice. In such a case, for example, the UE need not transmit the message 3 in the random access procedure.

As another example, the UE may complete the random access procedure. The UE may release the RRC connection with the base station after completing the random access procedure. As another example, the UE may transmit, to the base station, the message 3 in the random access procedure. The message 3 may include, for example, information indicating that the UE terminates the random access procedure. In response to the information, the base station may terminate the random access procedure with the UE. This enables, for example, the base station to promptly terminate the random access procedure with the UE. Consequently, the communication efficiency in the base station can be increased.

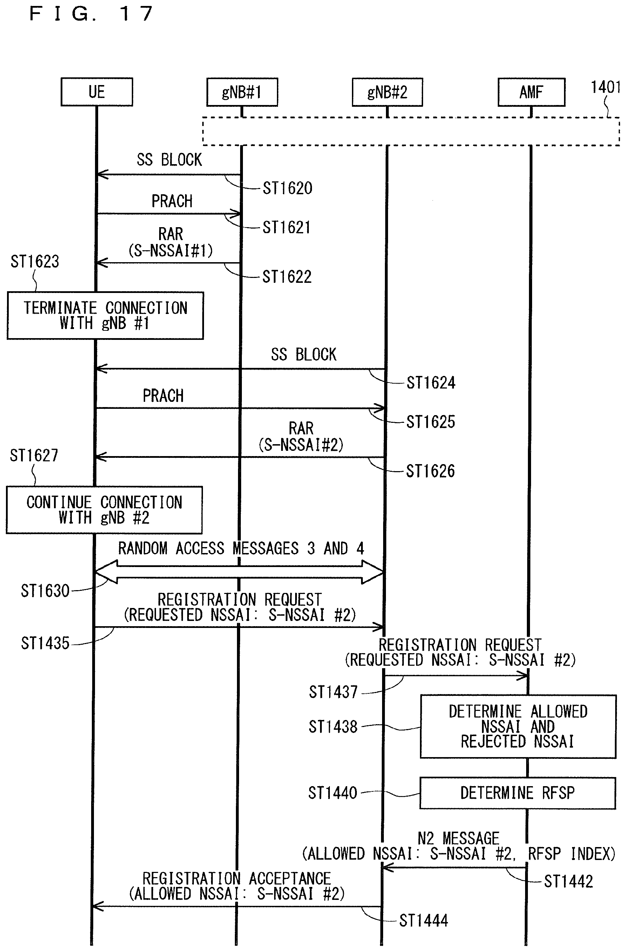

FIG. 17 is a sequence diagram illustrating operations for the UE to connect to a base station that can support the desired slice, after the UE obtains information on RAN slices that the base station can support from a Random Access Response from the base station. In the example of FIG. 17, a desired slice of the UE is the S-NSSAI #2, the gNB #1 supports the S-NSSAI #1, and the gNB #2 supports the S-NSSAI #2. In FIG. 17, the same numbers are applied to the processes identical those in FIG. 14, and the common description thereof is omitted.

The procedure 1401 in FIG. 17 is identical to that in FIG. 14.

In Step ST1620 of FIG. 17, the gNB #1 transmits the SS block. The UE establishes the downlink synchronization with the gNB #1, using the SS block of Step ST1620.

In Step ST1621 of FIG. 17, the UE transmits the PRACH to the gNB #1. In Step ST1622, the gNB #1 transmits a random access response to the UE. The random access response from the gNB #1 includes information on RAN slices that the cell of the gNB #1 can support. In the example of FIG. 17, the random access response in Step ST1622 includes information indicating that the gNB #1 supports the S-NSSAI #1. Since the gNB #1 does not support the S-NSSAI #2 that is the desired slice of the UE in the example of FIG. 17, the UE terminates the connection with the gNB #1 in Step ST1623. In other words, the UE terminates the random access procedure with the gNB #1.

In Step ST1624 of FIG. 17, the gNB #2 transmits the SS block. The UE establishes the downlink synchronization with the gNB #2, using the SS block of Step ST1624.

In Step ST1625 of FIG. 17, the UE transmits the PRACH to the gNB #2. In Step ST1626, the gNB #2 transmits a random access response to the UE. The random access response from the gNB #2 includes information on RAN slices that the cell of the gNB #2 can support. In the example of FIG. 17, the random access response in Step ST1626 includes information indicating that the gNB #2 supports the S-NSSAI #2. Since the gNB #2 supports the S-NSSAI #2 that is the desired slice of the UE in the example of FIG. 17, the UE continues the connection with the gNB #2 in Step ST1627. In other words, the UE continues the random access procedure with the gNB #2. In Step ST1630, random access messages 3 and 4 are transmitted and received between the UE and the gNB #2.

Steps ST1435 to ST1444 in FIG. 17 are identical to those in FIG. 14.

Another solution is disclosed. The base station determines whether to allow the registration of the UE. The base station may determine whether the UE can access the NW. The base station may make the determination using a registration request from the UE. The base station may determine whether to allow the registration of the UE, using information on the desired slice of the UE. For example, the base station may determine not to allow the registration of the UE when the cell of its own base station does not support the desired slice of the UE.

The base station may notify the UE of information indicating that the registration is not allowed. The base station may include, in the notification, a cause why the registration is not allowed, for example, information indicating that the cell of its own base station does not support the desired slice of the UE. This can, for example, prevent the UE from being registered in the AMF through a cell that does not support the desired slice. Consequently, the UE can reserve a desired QoS.

As an example where the base station determines whether the NW is accessible, the base station may determine whether the UE can access the NW, using information on the NW with which the UE wishes to establish a connection (e.g., a PLMN-ID).

The base station may include, in the notification, information on a cell, a DU, and/or a TRP that supports the desired slice of the UE. The base station may obtain information on RAN slices that surrounding cells, DUs, and/or TRPs support. The base station may obtain the information using, for example, a method to be disclosed in the first modification of the first embodiment. The UE may be reconnected to the cell, the DU, and/or the TRP that supports the desired slice of its own UE, using the information. The information may include information on the desired slice of the UE. The information may include the information on the desired slice of the UE in combination. This enables, for example, the UE to be promptly connected to a cell that supports the desired slice.

When the cell, the DU, and/or the TRP to which the UE is connected supports the desired slice of the UE, the base station may determine to allow the registration of the UE. When determining to allow the registration of the UE, the base station may forward, to the AMF, the registration request from the UE.

The base station need not notify the UE of information indicating that the base station has determined to allow the registration of the UE. This can, for example, reduce the signaling between the UE and the base station.

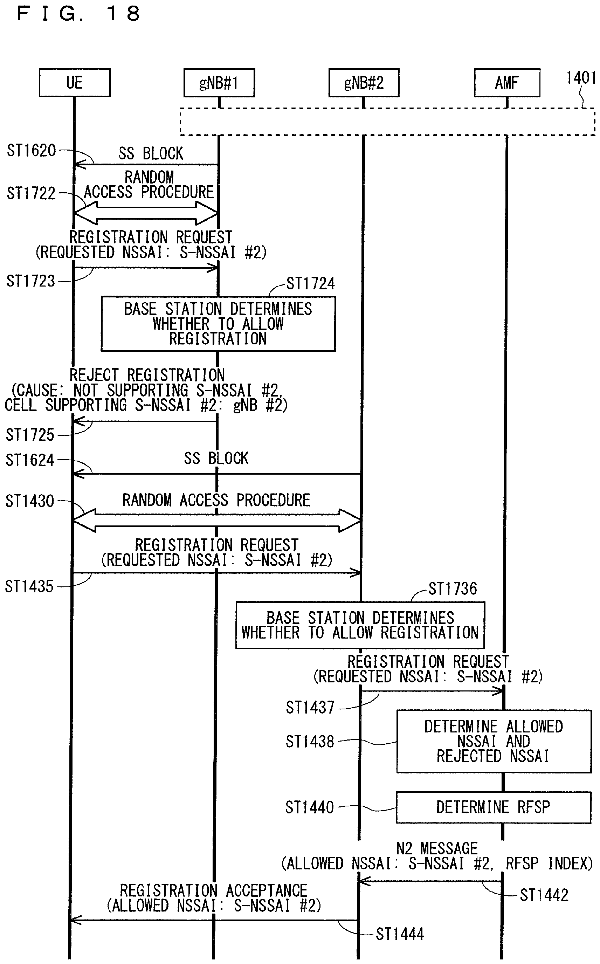

FIG. 18 is a sequence diagram illustrating operations when the base station determines whether to allow the registration of the UE, in the registration of the UE. In the example of FIG. 18, a desired slice of the UE is the S-NSSAI #2, the gNB #1 supports the S-NSSAI #1, and the gNB #2 supports the S-NSSAI #2. In FIG. 18, the same numbers are applied to the processes identical those in FIGS. 14 and 17, and the common description thereof is omitted.

The procedure 1401 in FIG. 18 is identical to that in FIG. 14.

Step ST1620 in FIG. 18 is identical to that in FIG. 17. In Step ST1722, the UE performs a random access procedure with the gNB #1.

In Step ST1723 of FIG. 18, the UE requests the gNB #1 to register the UE in the AMF. The registration request in Step ST1723 includes information indicating that the desired slice of the UE is the S-NSSAI #2. In Step ST1724, the gNB #1 determines whether to allow the registration of the UE in the AMF. Since the gNB #1 does not support the S-NSSAI #2 that is the desired slice of the UE in the example of FIG. 18, the gNB #1 determines not to allow the registration of the UE. In Step ST1725, the gNB #1 notifies the UE of a rejection of the registration in the AMF.

The notification in Step ST1725 may include a cause of the registration rejection, for example, information indicating that the gNB #1 does not support the desired slice of the UE. The notification in Step ST1725 may include information on a cell that supports the desired slice of the UE. In the example of FIG. 18, information on the cell that supports the desired slice of the UE may be information on a cell of the gNB #2, for example, the PCI of the cell. In response to the notification in Step ST1725, the UE may perform a reception operation of a cell of the gNB #2.

Step ST1624 in FIG. 18 is identical to that in FIG. 17.

Steps ST1430 and ST1435 in FIG. 18 are identical to those in FIG. 14. In Step ST1736, the gNB #2 determines whether to allow the registration of the UE in the AMF. Since the gNB #2 supports the S-NSSAI #2 that is the desired slice of the UE in the example of FIG. 18, the gNB #2 determines to allow the registration of the UE.

Steps ST1437 to ST1444 in FIG. 18 are identical to those in FIG. 14.

Another solution is disclosed. The UE may notify the base station of information on the desired slice in the initial access. The UE may give the notification, for example, using a random access preamble. A random access preamble may be assigned for each desired slice. This enables, for example, the UE to promptly notify the base station of the information on the desired slice.

In this assignment, values of random access preambles may be assigned for each RAN slice, for example, for each SST. For example, 0 to 15 may be assigned to the eMBB, 16 to 31 may be assigned to the URLLC, 32 to 47 may be assigned to the mMTC, and 48 to 63 may be assigned to the V2X. This can, for example, ensure many preambles that can be assigned to the UEs with the same desired slice. Consequently, the number of accommodable UEs with the same desired slice can be increased.

As another example of the assignment, the RAN slice, for example, the SST may be assigned to a predetermined bit of a random access preamble. In other words, the predetermined bit of the random access preamble may represent whether to support each RAN slice, for example, each SST. For example, 1 may represent a bit of a RAN slice that can be supported, whereas 0 may represent a bit of a RAN slice that cannot be supported. As another example, 0 may represent a bit of a RAN slice that can be supported, whereas 1 may represent a bit of a RAN slice that cannot be supported. This enables, for example, notification of information on a plurality of desired slices.

When the number of desired slices of the UE is two or more, the cell that the UE initially accesses may be, for example, the cell that the UE initially determines as the suitable cell disclosed in Non-Patent Document 30 (TS38.304). This enables, for example, the UE to be promptly connected to the base station. The cell that the UE initially determines as the suitable cell may be a cell that supports any of the desired slices of the UE. The UE may determine whether the cell supports the desired slice in the method disclosed in the first embodiment, for example, the method for obtaining the RAN slice that the cell supports from the broadcast information. This enables, for example, the UE to be promptly connected to a cell that supports the desired slice.

As another example of the cell that the UE initially accesses, a priority may be assigned for each RAN slice. For example, priorities of a cell that supports the URLLC, a cell that supports the eMBB, a cell that supports the mMTC, and a cell that supports the V2X may be determined in this order as the cells that the UE initially access. The UE may determine whether the cell supports the desired slice in the method disclosed in the first embodiment, for example, the method for obtaining the RAN slice that the cell supports from the broadcast information. This enables, for example, prompt start of communication in the communication requiring low latency.

As another example, the cell that the UE initially accesses may be determined using frequencies of cells. For example, the UE may be connected in order from a cell at a higher frequency. This enables, for example, the UE to preferentially be connected to a cell at a higher frequency and with a narrower coverage. Consequently, the number of UEs to be accommodated in the communication system can be increased. As another example, the UE may be connected in order from a cell at a lower frequency. This enables, for example, the UE to preferentially be connected to a cell with a wider coverage. Consequently, the number of handovers of the UE can be reduced.

As another example, the cell that the UE initially accesses may be determined using bandwidths of cells. For example, the UE may be connected in order from a cell with a larger bandwidth. This enables, for example, the UE to preferentially be connected to a cell with a larger transmission capacity. Consequently, the communication rate between the UE and the base station can be increased.

The cell that the UE initially accesses may be determined in a standard. This can, for example, avoid the complexity in the communication system. As another example, the base station may determine the cell that the UE initially accesses, and broadcast or notify the determined cell to the UE. For example, parameters on priorities for each cell may be provided for the broadcast or the notification. The UE may determine the cell to which the UE is connected, using information on the priorities. This can, for example, increase the flexibility in the communication system. As another example, the AMF may determine the cell that the UE initially accesses, and broadcast or notify the determined cell to the UE. The AMF may provide the broadcast or the notification through the base station. This can, for example, reduce processes of determining the cell that the UE initially accesses by the base station.

Another solution is disclosed. The UE may notify the base station of information on the desired slice when establishing the RRC connection with the base station. For example, the UE may include the information on the desired slice in the signaling for RRC setup request (RRCSetupRequest) disclosed in Non-Patent Document 24 (TS38.331), and notify the base station of the information. The base station may determine whether to allow the RRC setup of the UE, using the information. For example, the base station may reject the RRC setup of the UE when the cell of its own base station does not support the desired slice of the UE. Here, the base station may notify the UE of an RRC rejection (RRCReject). The base station may include, in the notification, information indicating that the base station does not support the desired slice of the UE.

The base station may include the information as, for example, a parameter on a cause included in the notification. This enables, for example, the UE to understand that the base station does not support the desired slice. The base station may notify the UE of information on a cell that supports the desired slice of the UE. The information may be included in, for example, the signaling for the RRC rejection (RRCReject). The UE may be reconnected to a cell that supports the desired slice, using the information. This enables, for example, the UE to be promptly connected to the cell that supports the desired slice.

Another solution is disclosed. The base station may include, in the paging to be transmitted to the UE, information on RAN slices required for the communication service. The UE may determine the RAN slice to be used by its own UE, using the information. The UE may determine a cell, a CU-UP, a DU, and/or a TRP to which the UE is connected, using the information. This enables, for example, the UE to use the RAN slices required for the communication service even when downlink communication has occurred.

In the first embodiment, the AMF may determine the RFSP, using the information on the desired slice of the UE. The AMF may notify the base station of information on the determined RFSP. The base station may notify the UE of the information. The notification may be included in, for example, the signaling for registration acceptance (Registration Accept) or the signaling for a registration rejection (Registration Reject). As another example, the AMF may notify the UE of the information directly (e.g., via the NAS signaling). The UE may determine a cell to which the UE is connected and/or reconnected, using the information. This enables, for example, the UE to promptly select a cell that supports the desired slice.

The method disclosed in the first embodiment may be applied to a base station that is split into the CU and the DUs. For example, the DU may broadcast, to UEs, information on RAN slices to be supported by its own DU, or notify the information dedicatedly to each of the UEs. The UE may be connected to the DU corresponding to the cell that supports the desired slice, using the information. This enables, for example, the UE to be connected to the DU that supports the desired slice, even in the base station that is split into the CU and the DUs.

The first embodiment enables the UE to be connected and/or reconnected to the cell that supports the desired slice.

### The first modification of the first embodiment

The base station may broadcast or notify, to the UE, information on RAN slices that can be supported by another base station. The UE may be connected to the cell that supports the desired slice, using the information.

The following problem occurs in the aforementioned case. Specifically, none discloses a method for the base station to obtain the information on RAN slices that can be supported by the other base station. Consequently, the base station cannot broadcast or notify the information to the UE.

The first modification discloses a method for solving the problem.

The UE notifies the base station of the information on RAN slices that can be supported by the other base station. The UE may obtain the information on RAN slices, using the method disclosed in the first embodiment, for example, the broadcast information from the base station. The UE may include the information in a measurement report, and notify the information to the base station. Alternatively, the UE may notify the information via another RRC signaling, the MAC signaling, or the L1/L2 signaling. The UE that gives the notification may be different from the UE that receives the broadcast or the notification from the base station. The RRC signaling for the notification may be newly provided.

Another solution is disclosed. The AMF notifies the base station of information on a surrounding base station that can support predetermined RAN slices. The AMF may give the notification in a procedure for the NG Setup. The AMF may give the notification, for example, via the signaling for the NG SETUP RESPONSE disclosed in Non-Patent Document 23 (TS38.413). Alternatively, the AMF may give the notification via another N2 signaling, for example, the signaling for notifying the registration acceptance of the UE, or the signaling for notifying the registration rejection of the UE. New N2 signaling for the notification may be provided. This can, for example, reduce the signaling between the UE and the base station.

As another example, the AMF may give the notification on a predetermined cycle. This enables, for example, the base station to promptly understand an update of the information. The predetermined cycle may be defined in a standard or determined by the AMF.

As another example, the AMF may give the notification when the configuration of the base station in a TA is changed. This enables, for example, the base station to further promptly understand an update of the information.

As another example, the AMF may give the notification when the configuration of the base station in a RAN Notification Area (RNA) is changed. This can, for example, reduce the amount of signaling between the base station and the AMF.

Another solution is disclosed. The base station notifies a surrounding base station of information on one or more RAN slices that its own base station can support. The information may include information on RAN slices that a cell, a DU, and/or a TRP in its own base station can support. The information may include information on the base station, the cell, the DU, and/or the TRP, for example, an identifier. The base station may notify combinations of these pieces of information. The base station may request, to another base station, information on RAN slices that can be supported by the other base station. The base station may make the notification and/or the request via the Xn signaling. This can, for example, reduce the amount of signaling between the base station and the AMF.

As another example, the base station may directly obtain, from a surrounding base station, information on RAN slices that the surrounding base station can support. The base station may obtain the information, for example, through a cell search. The surrounding base station should broadcast the information on RAN slices that its own base station can support, using the method disclosed in the first embodiment. This enables, for example, the base station to obtain the information without using an interface between base stations. Consequently, the amount of signaling in the interface between base stations can be reduced.

Another solution is disclosed. The Operation, Administration and Management/Maintenance (OAM) notifies the base station of the information on RAN slices that the surrounding base station can support. The base station may request the information to the OAM. The base station may notify the OAM of information on RAN slices that its own base station can support. The OAM may request, to the base station, information on RAN slices that the base station can support. This, for example, produces the same advantages as previously described.

Another solution is disclosed. The Network Data Analytics Function (NWDAF) described in Non-Patent Document 22 notifies the base station of the information on RAN slices that the surrounding base station can support. The base station may request the information to the NWDAF. The base station may notify the NWDAF of information on RAN slices that its own base station can support. The NWDAF may request, to the base station, information on RAN slices that the base station can support. This, for example, produces the same advantages as previously described. The notification and/or the request may be made through the AMF. This can, for example, avoid the complexity in the communication system.

The first modification enables the base station to obtain information on slices that another cell supports and to broadcast or notify the information to the UE. Consequently, the UE can be promptly connected to the cell that can support the desired slice.

### The second embodiment

In the registration of the UE, the AMF may reject a connection using a RAN slice that a cell to which the UE is connected does not support. The AMF may notify the UE of information on the RAN slice through the base station. For example, the AMF may include the RAN slice in the rejected NSSAI, and notify the UE of the information.

The following problem occurs in the aforementioned case. Specifically, when the desired slice of the UE is rejected NSSAI, the UE cannot be connected later using the desired slice. This causes a problem of difficulty in reserving the necessary QoS.

The second embodiment discloses a method for solving the problem.

The UE is deregistered. The UE is reconnected to a cell different from that when the UE has been registered.

The UE may hold information on the cell that has been connected before the deregistration. The UE need not be connected to the cell. This can, for example, prevent repetition of reregistration of the UE in a cell that does not support the desired slice through reconnecting the UE to the cell.

The UE may exclude the cell from being measured in selecting and/or reselecting a cell. This can, for example, reduce the amount of processing for measurement in the UE. As another example, the UE may exclude the cell from target cells in selecting and/or reselecting a cell. This can, for example, avoid the complexity in operations of selecting and/or reselecting a cell.

The AMF may notify the base station of information on a cell and/or a base station that can support the desired slice of the UE. The notification may include information on a frequency at which the desired slice of the UE is supported. The notification may include information indicating that the base station to which the UE is connected does not support the desired slice. The information may be included in the notification as, for example, a cause of the notification.

The base station may notify the AMF of information on a base station, a cell, a DU, and/or a TRP that can support the desired slice of the UE. The OAM may notify the base station of information on RAN slices that the base station, the cell, the DU, and/or the TRP can support. The base station may establish the configuration on the RAN slices that its own base station supports, using the information. The base station may calculate the information on the base station, the cell, the DU, and/or the TRP that can support the desired slice of the UE, using the information from the OAM. This saves, for example, the base station from notifying the AMF of RAN slices that the base station can support in advance. Consequently, the signaling between the base station and the AMF can be reduced.

The AMF may notify the base station of information on a Central Unit-User Plane (CU-UP) or the Distributed Unit-User Plane (DU-UP) that can support the desired slice of the UE. The operation may be performed, for example, during the CP/LTP split in a communication NW. The Central Unit-Control Plane (CU-CP) may notify the AMF of information on RAN slices that can be supported for each CU-UP being served thereby. This can produce the same advantages as previously described, for example, in the communication NW with the CP/UP split.

The base station may notify the AMF of information on the CU-UP that can support the desired slice of the UE. The OAM may notify the base station of information on RAN slices that can be supported in the CU-UP. The base station may establish the configuration on the RAN slices that are supported in each CU-UP, using the information. The base station may calculate information on the CU-UP that can support the desired slice of the UE, using the information from the OAM. This saves, for example, the base station from notifying the AMF of RAN slices that the base station can support in advance. Consequently, the signaling between the base station and the AMF can be reduced.

The base station may notify the UE of the notification from the AMF. After the UE is deregistered, the UE may be reconnected to a base station, a cell, a CU-UP, a DU, and/or a TRP that supports the desired slice using the notification. This enables, for example, the UE to promptly communicate using the desired slice.

Another solution is disclosed. The AMF allows registration in a RAN slice that a cell to which the UE is connected does not support. The AMF includes the desired slice of the UE in Allowed NSSAI, and notifies the base station of the desired slice. The base station forwards, to the UE, the notification from the AMF. The notification may be included in the N2 signaling including information indicating that the registration of the UE is allowed.

The AMF may include, in the notification, information on the base station, the CU-UP, the DU, the TRP, and/or the cell that supports the desired slice of the UE. The notification may include information on the desired slice of the UE. The information on the desired slice of the UE may be combined with the information on the base station, the CU-UP, the DU, the TRP, and/or the cell that supports the desired slice of the UE. This enables, for example, the UE to promptly understand the cell that supports the desired slice. As another example, the notification need not include the information on the desired slice of the UE. This can, for example, reduce the size of signaling for the notification.

The UE may maintain RRC _CONNECTED. The UE may be handed over. The base station may instruct the UE of the handover. This can, for example, reduce the signaling on transition of the RRC state of the UE between the UE and the base station.

The base station may instruct the UE to measure the base station, the cell, the CP-CU, the DU, and/or the TRP that supports the desired slice of the UE. For example, the signaling for the registration acceptance from the base station to the UE may or need not include the instruction. As another example, the measurement instruction may be an implicit instruction. For example, in response to the notification of the registration acceptance, the UE may implicitly measure the base station, the cell, the CP-CU, the DU, and/or the TRP that supports the desired slice of the UE. This can, for example, reduce the signaling between the UE and the base station.

The measurement instruction from the base station to the UE may include information on the base station, the cell, the CP-CU, the DU, and/or the TRP that supports the desired slice of the UE. As another example, the measurement instruction from the base station to the UE may include the information on the desired slice of the UE. The UE may calculate, using the information, information on the base station, the cell, the CP-CU, the DU, and/or the TRP to be measured. This can, for example, reduce the size of signaling from the base station to the UE.

In response to the instruction from the base station, the UE may measure another base station, cell, CP-CU, DU, and/or TRP. The UE may notify the base station of the measurement result. In response to the notification, the base station may determine a handover destination of the UE.

The notification of the measurement result from the UE to the base station may include information on the desired slice, or information on one or more RAN slices that can be supported by the base station, the cell, the CP-CU, the DU, and/or the TRP to be measured. The base station may determine a handover destination of the UE, using the information. This enables, for example, the base station to select the base station, the cell, the CP-CU, the DU, and/or the TRP that can support the desired slice of the UE as a handover destination. Consequently, the UE can communicate with a desired QoS being satisfied even after the handover.

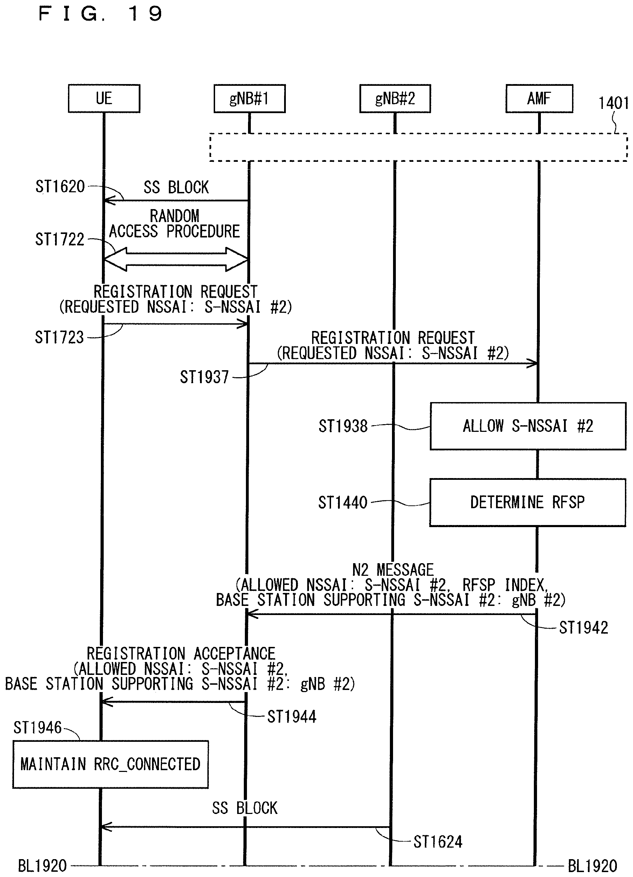

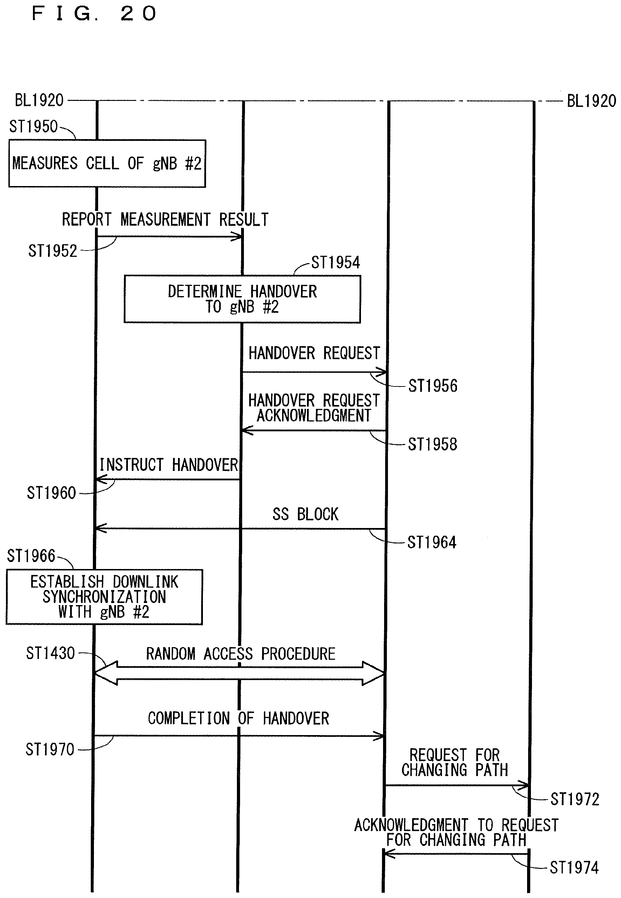

FIGS. 19 and 20 illustrate a sequence diagram of operations when the UE connected to a base station that does not support the desired slice is handed over to a base station that supports the desired slice. FIGS. 19 and 20 are connected across a location of a border BL1920. In FIGS. 19 and 20, the same step numbers are applied to the processes identical those in FIGS. 14, 17, and 18, and the common description thereof is omitted.

The procedure 1401 in FIG. 19 is identical to that in FIG. 14.

Step ST1620 in FIG. 19 is identical to that in FIG. 17.

Steps ST1722 and ST1723 in FIG. 19 are identical to those in FIG. 18.

In Step ST1937 of FIG. 19, the gNB #1 notifies the AMF of a registration request from the UE. In Step ST1938, the AMF allows the S-NSSAI #2 for the UE, using the existence of the base station being served thereby that supports the S-NSSAI #2.

Step ST1440 in FIG. 19 is identical to that in FIG. 14.

In Step ST1942 of FIG. 19, the AMF notifies the gNB #1 of information indicating registration acceptance of the UE. The notification may include information on the Allowed NSSAI for the UE or information on the RFSP, for example, an RFSP index. The AMF may give the notification through the interface between the AMF and the base station (e.g., the N2 interface). In the example of FIG. 19, the AMF notifies the S-NSSAI #2 as the Allowed NSSAI. The notification in Step ST1942 may include information on the base station that supports the S-NSSAI #2 that is the Allowed NSSAI. In the example of FIG. 19, the AMF notifies information on the gNB #2 as the information on the base station that supports the S-NSSAI #2.

In Step ST1944 of FIG. 19, the gNB #1 notifies the UE of the registration acceptance. The notification in Step ST1944 may include the information on the Allowed NSSAI for the UE or the information on the base station that supports the Allowed NSSAI. In the example of FIG. 19, the gNB #1 notifies not only the S-NSSAI #2 as the Allowed NSSAI but also information on the gNB #2 as the information on the base station that supports the S-NSSAI #2 that is the Allowed NSSAI. In Step ST1946, the UE maintains the RRC CONNECTED state.

Step ST1624 in FIG. 19 is identical to that in FIG. 17.

In Step ST1950 of FIG. 20, the UE measures a downlink signal from the cell of the gNB #2. In the example of FIGS. 19 and 20, the UE measures the SS block of Step ST1624 as the downlink signal. In Step ST1952, the UE reports the measurement result to the gNB #1. In Step ST1954, the gNB #1 determines to hand over the UE to the gNB #2. In Step ST1956, the gNB #1 transmits a handover request to the gNB #2. In Step ST1958, the gNB #2 transmits a handover request acknowledgment to the gNB #1. In Step ST1960, the gNB #1 instructs the UE of the handover to the gNB #2. The gNB #1 may issue the instruction, for example, via the signaling for the RRC reconfiguration (RRCReconfiguration). In response to the instruction in Step ST1960, the UE starts handover operations to the gNB #2.

In Step ST1964 of FIG. 20, the UE receives the SS block from the gNB #2. In Step ST1966, the UE establishes the downlink synchronization with the gNB #2.

Step ST1430 in FIG. 20 is identical to that in FIG. 14.

In Step ST1970 of FIG. 20, the UE notifies the gNB #2 of the completion of the handover. The UE may give the notification, for example, via the signaling for the RRC reconfiguration completion (RRCReconfigurationComplete). In Step ST1972, the gNB #2 requests the AMF to change a data path of the UE. In Step ST1974, the AMF notifies the gNB #2 of an acknowledgment to the request for changing the path.

As another example, the UE may transition to the RRC_IDLE state. The base station may instruct the UE to release the RRC. The UE may reselect a cell. In response to the notification from the base station, the UE may be reconnected to the cell that supports the desired slice. For example, the UE need not report the measurement result to the base station. This can reduce the signaling between the UE and the base station.

The instruction for releasing the RRC from the base station to the UE may include information on the base station and/or the cell that supports the desired slice of the UE. The notification of the allowed registration of the UE from the base station to the UE need not include the information on the base station and/or the cell that supports the desired slice of the UE. This can, for example, reduce the size of signaling for notifying the allowed registration of the UE.

The notification of the allowed registration of the UE and the instruction for releasing the RRC both from the base station to the UE may be integrated into one signaling. For example, the notification of the allowed registration of the UE may include the instruction for releasing the RRC, whereas the instruction for releasing the RRC may include the notification of the allowed registration of the UE. This can, for example, reduce the signaling between the base station and the UE. The integrated signaling may include the information on the base station and/or the cell that supports the desired slice of the UE. This enables, for example, the UE to reselect the base station and/or the cell that can support the desired slice.

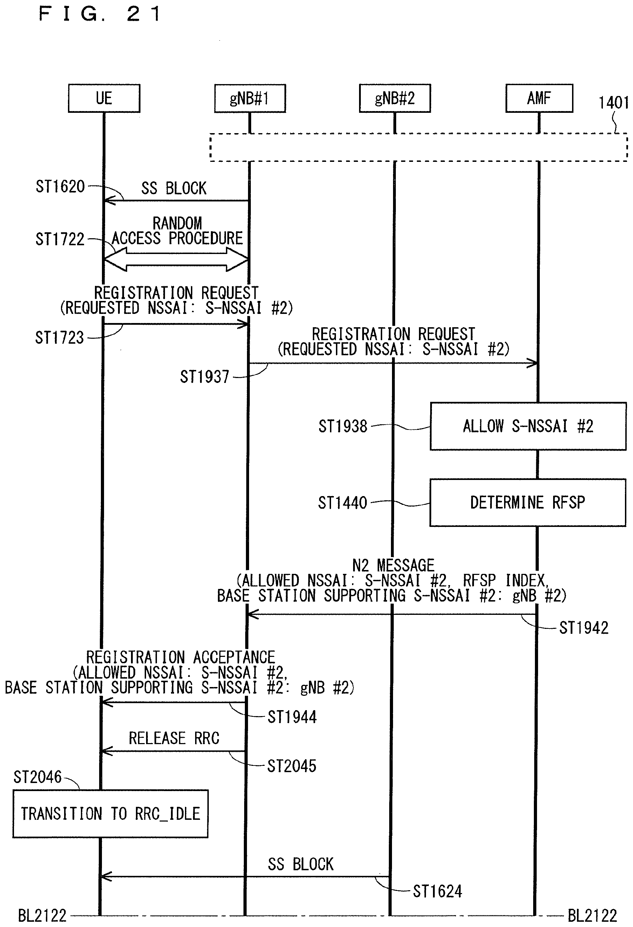

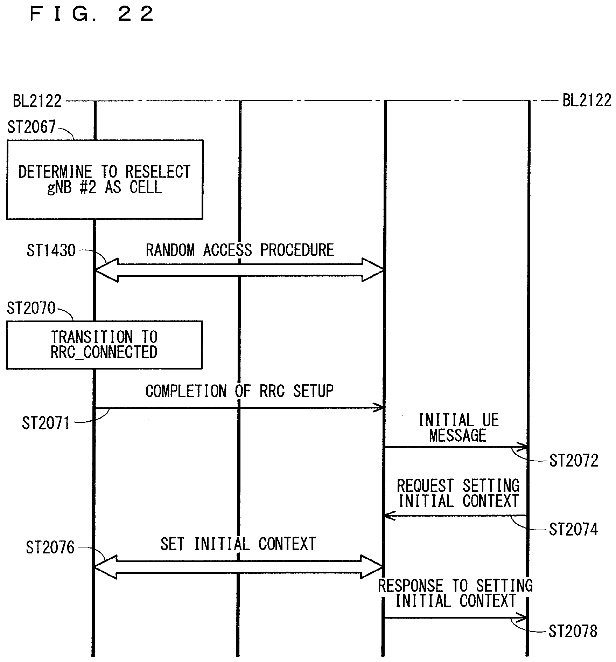

FIGS. 21 and 22 illustrate a sequence diagram of the first example operations when the UE connected to a base station that does not support the desired slice is reconnected to a cell of a base station that supports the desired slice. FIGS. 21 and 22 are connected across a location of a border BL2122. FIGS. 21 and 22 illustrate an example where the UE transitions to RRC _IDLE. In FIGS. 21 and 22, the same step numbers are applied to the processes identical those in FIGS. 14 and 17 to 20, and the common description thereof is omitted.

The procedure 1401 in FIG. 21 is identical to that in FIG. 14.

Step ST1620 in FIG. 21 is identical to that in FIG. 17.

Steps ST1722 and ST1723 in FIG. 21 are identical to those in FIG. 18.

Steps ST1937 and ST1938 in FIG. 21 are identical to those in FIG. 19.

Step ST1440 in FIG. 21 is identical to that in FIG. 14.

Steps ST1942 and ST1944 in FIG. 21 are identical to those in FIG. 19.

In Step ST2045 of FIG. 21, the gNB #1 instructs the UE to release the RRC. The gNB #1 may issue the instruction, for example, via the signaling for releasing the RRC (RRCRelease). In Step ST2046, the UE transitions to RRC_IDLE.

Step ST1624 in FIG. 21 is identical to that in FIG. 17.

In Step ST2067 of FIG. 22, the UE determines to reselect the gNB #2 as a cell.

Step ST1430 in FIG. 22 is identical to that in FIG. 14.

In Step ST2070 of FIG. 22, the UE transitions to RRC_CONNECTED. In Step ST2071, the UE notifies the gNB #2 of the completion of the RRC setup. The UE may give the notification, for example, via the signaling for the RRC setup completion (RRCSetupComplete).

In Step ST2072 of FIG. 22, the gNB #2 transmits an initial UE message to the AMF. In Step ST2074, the AMF requests the gNB #2 to set the initial context. In Step ST2076, the initial context is set between the UE and the gNB #2. In Step ST2078, the gNB #2 notifies the AMF of a response to setting the initial context.

As another example, the UE may transition to the RRC _INACTIVE state. The base station may instruct the UE to suspend the RRC. The UE may reselect a cell. In response to the notification from the base station, the UE may be reconnected to the cell that supports the desired slice. This, for example, produces the same advantages as previously described. Besides, the UE can promptly return to the RRC _CONNECTED state.

The instruction for suspending the RRC from the base station to the UE may include information on the base station and/or the cell that supports the desired slice of the UE. The notification of the allowed registration of the UE from the base station to the UE need not include the information on the base station and/or the cell that supports the desired slice of the UE. This can, for example, reduce the size of signaling for notifying the allowed registration of the UE.

The notification of the allowed registration of the UE and the instruction for suspending the RRC both from the base station to the UE may be integrated into one signaling. For example, the notification of the allowed registration of the UE may include the instruction for suspending the RRC, whereas the instruction for suspending the RRC may include the notification of the allowed registration of the UE. This can, for example, reduce the signaling between the base station and the UE. The integrated signaling may include the information on the base station and/or the cell that supports the desired slice of the UE. This enables, for example, the UE to reselect the base station and/or the cell that can support the desired slice.

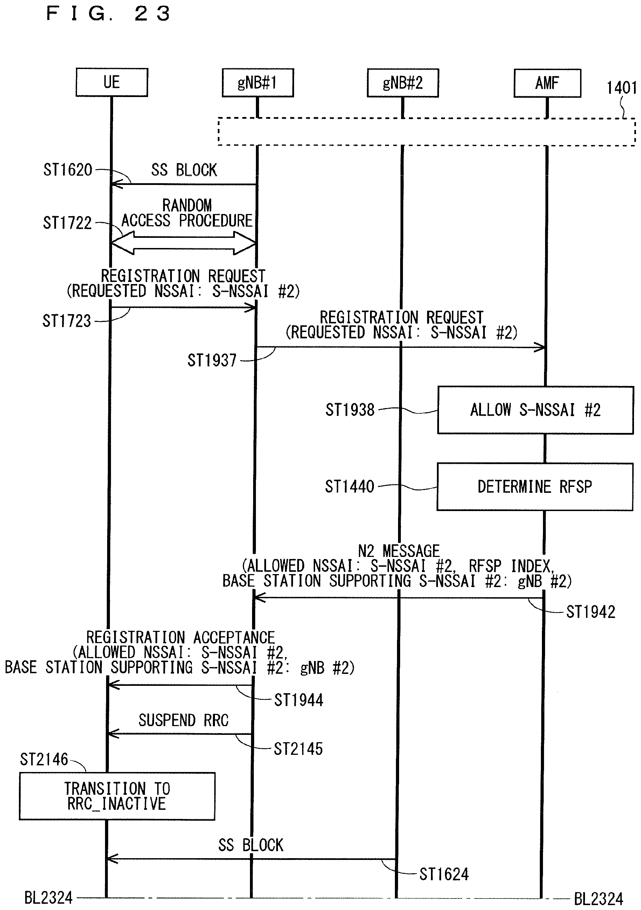

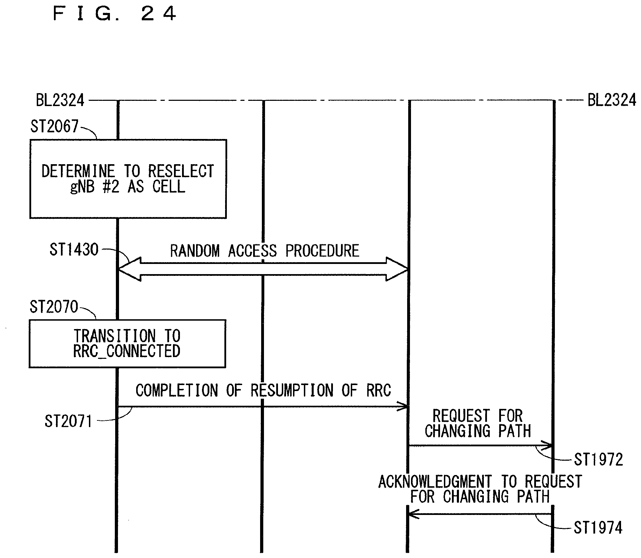

FIGS. 23 and 24 illustrate a sequence diagram of the second example operations when the UE connected to a base station that does not support the desired slice is reconnected to a cell of a base station that supports the desired slice. FIGS. 23 and 24 are connected across a location of a border BL2324. FIGS. 23 and 24 illustrate an example where the UE transitions to RRC _INACTIVE. In FIGS. 23 and 24, the same step numbers are applied to the processes identical those in FIGS. 14 and 17 to 22, and the common description thereof is omitted.

The procedure 1401 in FIG. 23 is identical to that in FIG. 14.

Step ST1620 in FIG. 23 is identical to that in FIG. 17.

Steps ST1722 and ST1723 in FIG. 23 are identical to those in FIG. 18.

Steps ST1937 and ST1938 in FIG. 23 are identical to those in FIG. 19.

Step ST1440 in FIG. 23 is identical to that in FIG. 14.

Steps ST1942 and ST1944 in FIG. 23 are identical to those in FIG. 19.

In Step ST2145 of FIG. 23, the gNB #1 instructs the UE to suspend the RRC. The gNB #1 may issue the instruction, for example, via the signaling for suspending the RRC (RRCSuspend). In Step ST2146, the UE transitions to RRC INACTIVE.

Step ST1624 in FIG. 23 is identical to that in FIG. 17.

Step ST2067 in FIG. 24 is identical to that in FIG. 22.

Step ST1430 in FIG. 24 is identical to that in FIG. 14.

Step ST2070 in FIG. 24 is identical to that in FIG. 22.

In Step ST2071 of FIG. 24, the UE notifies the gNB #2 of the completion of resumption of the RRC. The UE may give the notification, for example, via the signaling for the RRC resumption completion (RRCResumeComplete).

Steps ST1972 and ST1974 in FIG. 24 are identical to those in FIG. 20.

Another solution is disclosed. The registration of the UE is modified. In modifying the registration, for example, the desired slice of the UE may be changed from the Rejected NSSAI to the Allowed NSSAI.

The cell to which the UE is connected may be changed. The cell may be changed using the method disclosed as the solution. The cell may be changed by the handover. Specifically, the UE may maintain RRC _CONNECTED. As another example, the cell may be changed in reselecting a cell. Specifically, the UE may transition to RRC_IDLE or RRC INACTIVE.

Information on the Rejected NSSAI held by the UE may be cleared after the cell to which the UE is connected is changed. This can, for example, reduce the memory usage in the UE. As another example, the information on the Rejected NSSAI held by the UE may be maintained after the cell to which the UE is connected is changed. This can, for example, avoid design complexity in the communication system.

The UE may request the AMF to modify the registration. The UE may issue the request after the cell to which the UE is connected is changed. The signaling for modifying the registration may be provided. The signaling may be the RRC signaling, the N2 signaling, the NAS signaling, or a combination of several of these.

The signaling for the request may include information on RAN slices. For example, the signaling for the request may include information on the S-NSSAI that the UE wishes to add to the Allowed NSSAI, information on the S-NSSAI that the UE wishes to delete from the Allowed NSSAI, information on the S-NSSAI that the UE wishes to delete from the Rejected NSSAI, or information on the S-NSSAI added to the Rejected NSSAI.

The procedure for modifying the registration may be identical to, for example, the registration procedures disclosed in 4.2.2.2.2 of Non-Patent Document 25 (TS23.502). The signaling for the registration request may be replaced by the signaling for a registration modification request. The signaling for registration modification acceptance may be provided. The signaling for registration acceptance (Registration Accept) may be replaced by the signaling for registration modification acceptance (Registration Modification Accept). This can, for example, avoid design complexity in the communication system.

The method disclosed in the second embodiment may be applied to a base station that is split into the CU and the DUs. For example, a connection destination of the UE may be switched to a DU that supports the desired slice. This enables, for example, the UE to be connected to the DU that supports the desired slice, even in the base station that is split into the CU and the DUs.

The second embodiment enables the UE to recover from a rejection of the connection using the desired slice. Consequently, the UE can perform the communication with a predetermined QoS being satisfied.

### The third embodiment

In the handover of the UE, a source base station may inquire of a target base station about whether to support a RAN slice to be used by the UE. The source base station may make the inquiry, for example, using the signaling for the handover request. The target base station may notify the source base station of whether to support the RAN slice. The target base station may give the notification, for example, via the signaling for the handover request acknowledgment or the signaling for rejecting the handover.

The following problem occurs in the aforementioned case. Specifically, when the handover target base station does not support the desired slice of the UE, the UE cannot be handed over to the base station. This consequently causes a problem of suspending a communication service of the UE.

The third embodiment discloses a method for solving the problem.

The target base station allows the handover of the UE. The target base station notifies the AMF of information on RAN slices that the target base station can support. The AMF notifies the target base station of the use of the default S-NSSAI. The target base station notifies the source base station of the use of the default S-NSSAI. The source base station notifies the UE of the use of the default S-NSSAI. The source base station may give the notification to the UE via the signaling for the handover instruction, for example, the signaling for the RRC reconfiguration (RRCReconfiguration).

The registration of the UE may be modified. The registration may be modified using the method disclosed in the second embodiment.

Another RAN slice may be used in the communication between the UE and the target base station. The RAN slice may be a RAN slice allowed by the UE, a RAN slice that the target base station supports, or a RAN slice allowed by the UE and supported by the target base station. The PDU session of the UE may be modified. For example, the association between RAN slices and PDU sessions may be modified. The PDU session may be modified using, for example, the procedure disclosed in 4.3.3.2 of Non-Patent Document 25 (TS23.502). This enables, for example, the use of the other RAN slice allowed by the UE. This can reserve the QoS in the communication of the UE.

The method disclosed in the third embodiment may be applied to the handover of the UE using a plurality of RAN slices. For example, in the PDU session using RAN slices that the target base station does not support, the default S-NSSAI or another RAN slice may be used. This can, for example, prevent a part of the PDU session from being interrupted in the handover of the UE using the plurality of RAN slices.

As another example, the communication using RAN slices that the target base station does not support may be performed using another base station (may be hereinafter referred to as a DC-target base station). For example, the DC may be performed together with the handover of the UE. Consequently, the UE can reserve the QoS of the communication after the handover.

The target base station may determine whether to perform the DC. The target base station may determine a DC-target base station. The target base station may determine whether to perform the DC and/or determine the DC-target base station, for example, using information on RAN slices held by the target base station and supported by another base station. The target base station may request the DC-target base station to perform the DC using the desired slice of the UE. The target base station may issue the request, for example, using a request for adding the secondary base station (SN Addition Request).

The request may include information on the desired slice of the UE. The DC-target base station may determine whether to perform the DC, using the information on the desired slice of the UE. The DC-target base station may notify the target base station of a response to the request. The response may be, for example, a secondary base station addition request acknowledgement (SN Addition Request Acknowledgement) or a secondary base station addition request rejection (SN Addition Request Reject).

The configuration of the DC may be used except during the handover. The configuration of the DC may be used, for example, when the UE is connected to a NW. For example, when a base station to which the UE is connected does not support the desired slice, a base station that supports the desired slice may be configured as a secondary base station.

As another example, the configuration of the DC may be used when a service is added for the UE. For example, when the base station does not support RAN slices required for the service added for the UE, the base station may add a base station that supports the RAN slices as a secondary base station. The UE may notify the base station of information on the RAN slices required for the added service. In response to the notification, the base station may determine a base station to be added as a secondary base station. This enables, for example, the communication system to flexibly support addition of the service for the UE.

As another example, the DC may be configured using base stations that support the same RAN slice. In other words, the master base station and the secondary base station may support the same RAN slice. This can, for example, flexibly switch a bearer between the master base station and the secondary base station.

The third embodiment enables the UE to continue the communication even after the handover to the base station that does not support the desired slice.

### The fourth embodiment

In the SL communication, not only the direct communication between UEs but also the indirect communication through a relay has been proposed (see Non-Patent Document 29 (3GPP TR 23.703 V12.0.0)). The relay between UEs is sometimes referred to as UE-to-UE relay or inter-UE relay. In this invention, the UE performing the inter-UE relay is sometimes referred to as a relay UE.

For example, when a plurality of platooning UEs are approaching an intersection, the UEs sometimes cannot perform direct communications due to obstruction of buildings, etc. Furthermore, the UEs sometimes need to communicate with not only neighboring UEs but also a plurality of more distant UEs. Here, a method of performing the inter-UE relay is applicable. For example, the SL communication between a transmission UE (may be referred to as a UE-TX) and a reception UE (may be referred to as a UE-RX) is performed through a relay UE. The SL communication between UEs through the relay UE may be referred to as UE-to-UE indirect communication.

A service (may be an application) using the SL communication between UEs is performed between the UE-TX and the UE-RX. Thus, in the UE-to-UE direct communication, a QoS for the SL communication and an SL radio bearer (may be referred to as an SLRB) are configured between the UE-TX and the UE-RX so that the QoS required for the service is satisfied. Since the UE-to-UE indirect communication using the relay UE is communication through the relay UE, the SL communication between the UE-TX and the relay UE and the SL communication between the relay UE and the UE-RX are performed. Thus, the conventional methods for the UE-to-UE direct communication cannot establish the configuration of the QoS and the SLRB for the SL communication between the UE-TX and the relay UE, and the configuration of the QoS and the SLRB for the SL communication between the relay UE and the UE-RX, which are required for the UE-to-UE indirect communication using the relay UE. This consequently causes a problem of failing to satisfy the QoS required for the service.

The fourth embodiment discloses a method for solving such a problem.

The SLRB is configured for each of the SL between the UE-TX and the relay UE and the SL between the relay UE and the UE-RX. The SLRB configuration between the UE-TX and the relay UE may be used for configuring the SLRB between the relay UE and the UE-RX. Consequently, the SLRB between the relay UE and the UE-RX can be configured in the same manner as the SLRB between the UE-TX and the relay UE.

The SLRB configuration corresponding to the service to be implemented between the UE-TX and the UE-RX may be used for the SL communication between the UE-TX and the relay UE. The QoS required for the service to be implemented between the UE-TX and the UE-RX may be used as the QoS between the UE-TX and the relay UE. The SLRB configuration for the SL communication between the UE-TX and the relay UE may be calculated using information on the QoS required for the service to be implemented between the UE-TX and the UE-RX. Consequently, the SLRB between the UE-TX and the relay UE can be configured so that the QoS required for the service is satisfied. Furthermore, combination with a method using the SLRB configuration between the UE-TX and the relay UE as the SLRB configuration between the relay UE and the UE-RX enables the SLRB configuration corresponding to the service to be implemented between the UE-TX and the UE-RX, in the SL communication between the relay UE and the UE-RX. The SLRB between the relay UE and the UE-RX can be configured so that the QoS required for the service to be implemented between the UE-TX and the UE-RX is satisfied.

The information on the QoS may be a PC5 QoS parameter (may be simply referred to as a QoS parameter by omitting PC5). The PC5 QoS parameter may include, for example, PQI (see Non-Patent Document 26 (TS23.287 V16.1.0)). The information on the QoS may include QoS characteristics (see Non-Patent Document 26 (TS23.287 V16.1.0)). The PC5 QoS parameter and the QoS characteristics may be referred to as a QoS profile.

When a service using the SL communication has been generated between the UE-TX and the UE-RX, the UE-TX calculates a service type (e.g., PSID or ITS-AID) of the service, a request for the service, an identifier of a transmission target UE, and an identifier of a transmission source UE. The UE-TX calculates one or more PC5 QoS parameters required for the service, using the service type (e.g., PSID or ITS-AID) of the service and the request for the service.

In the presence of a PC5 QoS flow corresponding to a PC5 QoS parameter, the UE-TX updates the PC5 QoS flow to suit the PC5 QoS parameter. In the absence of a PC5 QoS flow corresponding to a PC5 QoS parameter, the UE-TX provides a new PC5 QoS flow to suit the PC5 QoS parameter. An identifier of the PC5 QoS flow (may be referred to as a PFI) for identifying the PC5 QoS flow may be newly configured.

The UE-TX calculates a PC5 QoS rule for mapping service data to the configured PC5 QoS flow. The PC5 QoS rule may include a PC5 packet filter. The UE-TX may store, for the UE-RX, the PC5 QoS parameter, a V2X service type, and the PC5 QoS rule.

A part or the entirety of calculation of the PC5 QoS parameter, configuration of the PC5 QoS flow, configuration of the PFI, and calculation of the PC5 QoS rule may be performed by layers higher than the SDAP or between the SDAP and an application layer. The UE-TX may include a layer having a function of performing the part or the entirety of the processes. Alternatively, the V2X layer of the UE-TX may perform the part or the entirety of the processes.

The PC5 QoS flow is mapped to the SLRB to be used for the SL communication. The SDAP layer of the UE-TX may perform the mapping. The SLRB configuration for the SL communication between the UE-TX and the relay UE is calculated using information on the QoS required for the service to be implemented between the UE-TX and the UE-RX. The SLRB may be configured so that information on the QoS is satisfied. The SLRB configuration may be calculated, for example, in a method pre-configured in the UE-TX. The method may be applied when the UE-TX is not served by the gNB and/or when the UE-TX is out of coverage.

In the UE-to-UE direct communication, the SDAP is provided for each transmission target UE. However, none discloses a method for configuring the SDAP when the UE-to-UE indirect communication through the relay UE is performed. Hereinafter, a method for configuring the SDAP when the UE-to-UE indirect communication through the relay UE is performed is disclosed.

The SDAP in the UE-TX for the UE-to-UE indirect communication may be identical to that for the UE-to-UE direct communication. When the transmission target UE for the UE-to-UE indirect communication is identical to that for the UE-to-UE direct communication, the SDAP in the UE-TX for the UE-to-UE indirect communication may be identical to that for the UE-to-UE direct communication. This can reduce the number of SDAPs included in the UE-TX and the relay UE. The configuration of the UE-TX and the relay UE can be simplified.

Another method is disclosed.

The UE-TX may have different SDAPs for the UE-to-UE indirect communication and for the UE-to-UE direct communication. Even when the transmission target UE for the UE-to-UE indirect communication is identical to that for the UE-to-UE direct communication, the SDAPs in the UE-TX may be dedicatedly provided for the UE-to-UE indirect communication and for the UE-to-UE direct communication. Consequently, the different SDAPs for the UE-to-UE indirect communication and the UE-to-UE direct communication can be used in the UE-TX and the relay UE. This can reduce malfunctions, and enhance the reliability in the UE-to-UE indirect communication through the relay UE.

The aforementioned method for configuring the SDAP may be applied to a method for configuring the SDAP in the relay UE. The same advantages can be produced between the relay UE and the UE-RX.

The UE-TX notifies the relay UE of the SLRB configuration. The UE-TX may notify the relay UE of the configured PFI and the configuration of the SLRB to which the PC5 QoS flow corresponding to the PFI is mapped. The UE-TX may give the notification in a process of establishing the PC5-S link. The UE-TX may give the notification via the PC5-S signaling. For example, the UE-TX may give the notification in a direct communication process in the PC5. This enables the UE-TX to give the notification early. As another notification method, the UE-TX may give the notification via the PC5-RRC signaling. The UE-TX may include information to be notified in a PC5-RRC message, and notify the information via the PC5-RRC signaling. The UE-TX may notify the PFI and the SLRB configuration via different signalings. This enables the UE-TX to establish the configuration with flexible timing. Consequently, the UE-TX can notify the relay UE of the PFI and/or the SLRB configuration.

The UE-TX may notify the relay UE of information on the service using the SL communication. The UE-TX may give this notification via the PC5-S signaling. The UE-TX may give the notification, for example, using the direct communication in the PC5. As another notification method, the UE-TX may give the notification via the PC5-RRC signaling. The UE-TX may associate the service with the SLRB configuration, and notify the association in combination with the notification of the SLRB. The relay UE can recognize the SLRB configuration associated with the service.

The SLRB configuration includes an SLRB parameter associated with only a transmitter, an SLRB parameter associated with the transmitter and a receiver, and an SLRB parameter associated with only the receiver. Examples of the SLRB parameter associated with only the transmitter include an ROHC profile and the maximum retransmission threshold (MaxRetxThreshold). Examples of the SLRB parameter associated with the transmitter and the receiver include an SLRB identifier (may be referred to as an SLRB ID) and one or more QoS flows to be mapped to the SLRB.

Examples of the SLRB parameter associated with only the receiver include a reordering timer (T-reordering timer) indicating the time during which pieces of data can be realigned in order, and a reassembly timer (T-Reassembly timer) indicating the time during which pieces of data can be reassembled.

In the UE-to-UE direct communication, the UE-TX has only to notify the UE-RX of only the SLRB parameter associated with the transmitter and the receiver to make the SLRB configuration consistent between the transmitter and the receiver. In the UE-to-UE indirect communication, however, the UE-TX notifies the relay UE of not only the SLRB parameter associated with the transmitter and the receiver but also the SLRB parameter associated with only the transmitter. Furthermore, the UE-TX may notify the relay UE of the SLRB parameter associated with only the receiver. This enables the SLRB configuration for the SL communication between the relay UE and the UE-RX. Information on the SLRB configuration to be notified between nodes may be referred to as SLRB association information.

The relay UE configures the SLRB for the SL communication between the relay UE and the UE-RX, using the SLRB association information received from the UE-TX. The relay UE may configure the SLRB for the SL communication between the relay UE and the UE-RX in the same manner as that between the UE-TX and the relay UE.

The relay UE may configure the SLRB for the SL communication between the relay UE and the UE-RX using the SLRB association information received from the UE-TX, irrespective of a Uu RRC connected state.

As another method, the method for configuring the SLRB may differ depending on a Uu RRC connected state of the relay UE. Furthermore, the method for configuring the SLRB may differ depending on whether the relay UE is within the coverage of a RAN node. For example, when the relay UE is out of the coverage of the RAN node, the relay UE configures the SLRB for the SL communication between the relay UE and the UE-RX, using the SLRB association information received from the UE-TX according to the aforementioned method. For example, when the relay UE is within the coverage of the RAN node, the relay UE configures the SLRB for the SL communication between the relay UE and the UE-RX, using the SLRB association information received from the RAN node according to a method to be disclosed in the eighth modification of the fourth embodiment.

These configuration methods may be predetermined, for example, in a standard, notified in advance from the CN or the RAN node, or notified to the UE-TX or the relay UE. Consequently, the SLRB can be flexibly configured depending on a connected state of each node.

The PFI between the UE-TX and the relay UE may be identical to that between the relay UE and the UE-RX. The PFI between the UE-TX and the relay UE may be an identifier of the PC5 QoS flow between the relay UE and the UE-RX. The relay UE may configure the PFI received from the UE-TX as the PFI between the relay UE and the UE-RX.

The relay UE need not configure the PC5 QoS flow to which data to be relayed is mapped. The relay UE maps data received from the UE-TX to the SLRB configured for the SL communication between the relay UE and the UE-RX.

The relay UE may configure the PC5 QoS flow to which data to be relayed is mapped. The relay UE may configure, for example, a PC5 QoS flow for relaying the data. A default PC5 QoS flow may be provided. The relay UE may use the default PC5 QoS flow as the PC5 QoS flow for relaying the data. The default PC5 QoS flow may be predetermined, for example, in a standard, notified in advance from a core network or the RAN node, or pre-configured in the relay UE. The relay UE should configure the PFI in the configured PC5 QoS flow. The relay UE may map the data received from the UE-TX to the configured PC5 QoS flow. The relay UE maps the configured PC5 QoS flow to the SLRB configured for the SL communication between the relay UE and the UE-RX.

The relay UE need not be provided with a policy on the service to be implemented between the UE-TX and the UE-RX to both of which the relay UE relays data. Examples of the policy on the service (may be referred to as a PC5 policy) include mapping configuration ranging from the V2X service type to the PC5 QoS parameter (may be referred to as PC5 QoS mapping configuration), the SLRB configuration, and the configuration for mapping the PC5 QoS profile to the SLRB (see Non-Patent Document 26 (TS23.287 V16.1.0)).

For example, the core network (CN) or the RAN need not provide the PC5 policy to the relay UE. For example, the PC5 policy need not be pre-configured in the relay UE.

The relay UE notifies the UE-RX of the PFI and the SLRB configuration which have been established for the SL communication between the relay UE and the UE-RX. The relay UE may notify only the SLRB parameter associated with the transmitter and the receiver as the SLRB configuration. The relay UE may give the notification in a process of establishing the PC5-S link. The relay UE may give the notification via the PC5-S signaling. For example, the relay UE may give the notification in a direct communication process in the PC5. This enables the relay UE to give the notification early. As another notification method, the relay UE may give the notification via the PC5-RRC signaling.

The relay UE may include information to be notified in a PC5-RRC message, and notify the information via the PC5-RRC signaling. The relay UE may notify the PFI and the SLRB configuration via different signalings. This enables the relay UE to establish the configuration with flexible timing. Consequently, the relay UE can notify the UE-RX of the PFI and/or the SLRB configuration. The UE-RX receives the PFI and the SLRB association information from the relay UE, and configures the SLRB for the SL communication between the relay UE and the UE-RX.

The relay UE may notify the UE-RX of information on the service using the SL communication. The relay UE may give this notification via the PC5-S signaling. The relay UE may give the notification, for example, using the direct communication in the PC5. As another notification method, the relay UE may give the notification via the PC5-RRC signaling. The relay UE may associate the service with the SLRB configuration, and notify the association in combination with the notification of the SLRB. The UE-RX can recognize the SLRB configuration associated with the service.

A default SLRB may be provided as the SLRB to be used for notification from the UE-TX to the relay UE or from the relay UE to the UE-RX. The configuration of a default SLRB may be predetermined, for example, in a standard, notified in advance from the core network or the RAN node, or pre-configured in the UE-TX or the relay UE. The default SLRB may be an SRB. The configuration information of the PFI or the SLRB may be handled as control information. The default SLRB may be a DRB. The configuration information of the PFI or the SLRB may be handled as data. Prior to configuring the SLRB for service data communication using the SL communication, the configuration information necessary for the configuration can be notified between the UE-TX and the relay UE and between the relay UE and the UE-RX.

Consequently, the QoS and the SLRB for the SL communication each between the UE-TX and the relay UE and between the relay UE and the UE-RX can be configured. This enables transmission of the service data between the UE-TX and the UE-RX through the relay UE. The service data has been generated between the UE-TX and the UE-RX.

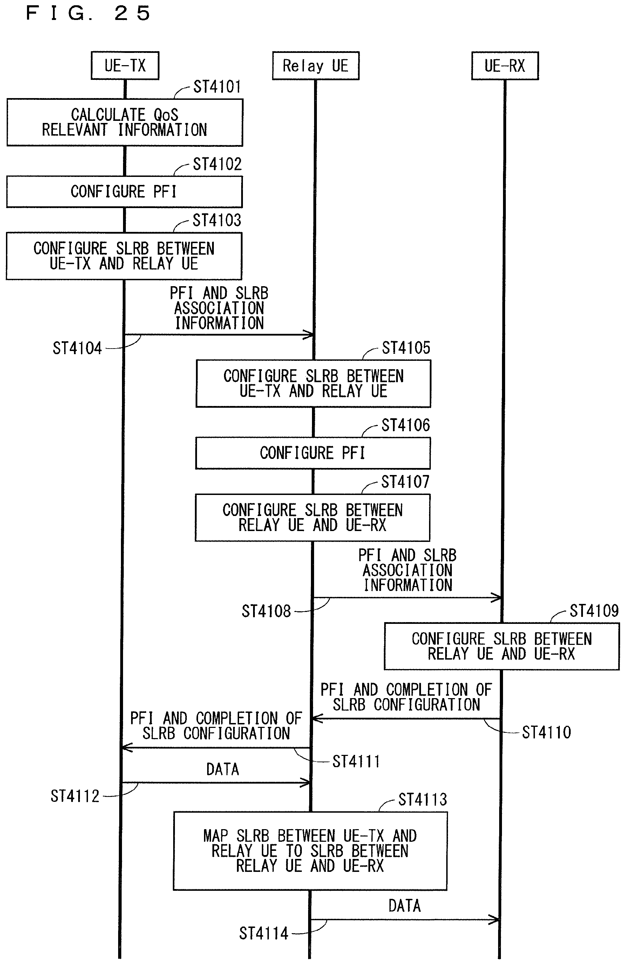

FIG. 25 is a sequence diagram illustrating an example method for configuring the QoS and the SLRB in the UE-to-UE indirect communication through the relay UE according to the fourth embodiment. FIG. 25 illustrates a case where a V2X service has been generated in the UE-TX. The UE-TX transmits the service data to the UE-RX through the relay UE.

In Step ST4101, the UE-TX calculates the QoS relevant information from the generated service. In Step ST4102, the UE-TX configures the PFI using the QoS relevant information. As described above, for example, in the absence of the PC5 QoS flow that suits the PC5 QoS parameter calculated from the service, the UE-TX provides a new PC5 QoS flow to configure the PFI of the PC5 QoS flow.

In Step ST4103, the UE-TX configures the SLRB for the SL communication between the UE-TX and the relay UE. The UE-TX may calculate this SLRB configuration using the QoS relevant information required for the service to be implemented between the UE-TX and the UE-RX. The example of FIG. 25 discloses a case where the UE-TX is not served by the gNB and is out of coverage (may be abbreviated as OOC). When the UE-TX is OOC, the UE-TX should calculate the SLRB configuration from information pre-configured in the UE-TX, for example, information on the PC5 QoS parameter and the SLRB configuration, using the QoS relevant information required for the service. The UE-TX applies the calculated SLRB configuration to the SL communication between the UE-TX and the relay UE.

In Step ST4104, the UE-TX notifies the relay UE of the configured PFI and SLRB association information. The UE-TX notifies not only the SLRB parameter associated with the transmitter and the receiver but also the SLRB parameter associated with only the transmitter as the SLRB association information. Furthermore, the UE-TX may notify the SLRB parameter associated with only the receiver.

In Step ST4105, the relay UE configures the SLRB for the SL communication between the UE-TX and the relay UE, using information associated with the transmitter and the receiver in the SLRB association information between the UE-TX and the relay UE which has been received from the UE-TX.

In Steps ST4106 and ST4107, the relay UE configures the SLRB for the SL communication between the relay UE and the UE-RX. In Step ST4106, the relay UE configures the PFI notified from the UE-TX as the PFI between the relay UE and the UE-RX. In Step ST4107, the relay UE makes the SLRB configuration between the relay UE and the UE-RX consistent with that between the UE-TX and the relay UE, using the entirety of the SLRB association information notified from the UE-TX.

In Step ST4108, the relay UE notifies the UE-RX of the SLRB association information on the SLRB configured for the SL communication between the relay UE and the UE-RX. Here, the relay UE has only to notify the information associated with the transmitter and the receiver in the SLRB association information. In Step ST4109, the UE-RX configures the SLRB for the SL communication between the relay UE and the UE-RX, using the SLRB association information received from the relay UE.

In Step ST4110, the UE-RX notifies the relay UE of the completion of the SLRB configuration between the relay UE and the UE-RX. The UE-RX may include the PFI in the completion notification. Upon receipt of the completion notification from the UE-RX, the relay UE notifies the UE-TX of the completion of the SLRB configuration between the UE-TX and the relay UE and the completion of the SLRB configuration between the relay UE and the UE-RX in Step ST4111. The relay UE may include the PFI in the completion notification.

In Step ST4112, the UE-TX transmits the service data to the relay UE, using the SLRB configuration between the UE-TX and the relay UE. In Step ST4113, the relay UE receives the data transmitted from the UE-TX using the SLRB configuration between the UE-TX and the relay UE, and maps the received data to the SLRB between the relay UE and the UE-RX. In Step ST4114, the relay UE transmits the mapped data to the UE-RX using the SLRB configuration between the relay UE and the UE-RX.

This enables transmission of the service data generated in the UE-TX to the UE-RX through the relay UE.

The relay UE may give the notification in Step ST4111, that is, notify the completion of the SLRB configuration between the UE-TX and the relay UE, after the relay UE completes the SLRB configuration between the UE-TX and the relay UE in Step ST4105. The relay UE may notify the completion of the SLRB configuration between the UE-TX and the relay UE, for example, before processes from Steps ST4106 to ST4110, that is, before configuring the SLRB between the relay UE and the UE-RX. This enables the UE-TX to recognize that the UE-TX can communicate the service data with the relay UE using the SL communication. Upon receipt of the completion notification of the SLRB configuration between the UE-TX and the relay UE from the relay UE, the UE-TX may transmit the service data to the relay UE.

The relay UE should store the service data received from the UE-TX, until the completion of the SLRB configuration between the relay UE and the UE-RX. The relay UE should have a buffer, and store the received service data in the buffer. In the Layer-2 (L2) relay, the relay UE may store the received service data in the form of a PDCP PDU or an RLC SDU. This enables the RLC sequence number (SN) between the relay UE and the UE-RX to be assigned independently from the RLC SN between the UE-TX and the relay UE.

Consequently, operations of the communication system become flexible. In the Layer-3 (L3) relay, the relay UE may store the received service data in the form of packet data or an SDAP SDU. After the completion of the SLRB configuration between the relay UE and the UE-RX, the relay UE should transmit the stored service data to the UE-RX.

This enables the relay UE to transmit the service data to the UE-RX early after the completion of the SLRB configuration between the relay UE and the UE-RX. Consequently, the UE-TX can communicate the service data with the UE-RX through the relay UE with low latency.

The aforementioned method may be applied to modification of the SLRB configuration for each SL communication. The SLRB configuration for each SL communication should be changed to the modified SLRB configuration for the SL communication. This can produce the same advantages as previously described. When the second and subsequent modifications of the SLRB configuration are notified between nodes, only the modified parameters may be notified. A difference with the previous SLRB configuration may be notified. This can reduce the amount of information to be notified.

Non-completion information on the SLRB configuration may be provided. Rejection information on the SLRB configuration may be provided. Signaling for notifying the information may be provided. The non-completion information or the rejection information on the SLRB configuration may be information for each link. The signaling may be the PC5-S signaling or the PC5-RRC signaling. The relay UE sometimes fails to configure the SLRB. Examples of the failure include a case where the relay UE cannot configure the SLRB for the SL communication between the relay UE and the UE-RX due to the shortage of radio resources in the relay UE. Here, the relay UE may notify the UE-TX of the signaling for rejecting the SLRB configuration for the SL communication between the relay UE and the UE-RX.

Cause information on the rejection may be provided. Examples of the information include shortage of a buffer margin. For example, information indicating a buffer margin value may be provided. The relay UE may notify the buffer margin value together with the cause information on the rejection. This enables the UE-TX to recognize that the relay UE cannot configure the SLRB.

Upon receipt of the signaling for rejecting the SLRB configuration, the UE-TX may change the SLRB configuration. The UE-TX may notify the relay UE of the changed SLRB configuration. This enables the relay UE to easily configure the SLRB.

When the relay UE cannot configure the SLRB, the default SLRB may be used for communicating the service data. A default DRB may be used as the default SLRB. For example, when the relay UE cannot configure the SLRB between the relay UE and the UE-RX, the relay UE notifies the UE-TX of the signaling for rejecting the SLRB configuration between the relay UE and the UE-RX. The relay UE performs the SL communication using the default SLRB as the SLRB configuration between the relay UE and the UE-RX. The relay UE may notify the UE-TX of application of the default SLRB to the SL communication between the relay UE and the UE-RX. The relay UE may transmit the notification together with the rejection information on the SLRB configuration to be notified from the relay UE to the UE-TX. This enables the SL communication even when the relay UE cannot configure a desired SLRB.

The method disclosed in the fourth embodiment can configure the SLRB between the UE-TX and the relay UE so that the QoS required for the service is satisfied. Furthermore, application of the SLRB configuration between the UE-TX and the relay UE to the SLRB between the relay UE and the UE-RX can satisfy the QoS in the service to be implemented between the relay UE and the UE-RX as much as the QoS between the UE-TX and the relay UE. In the UE-to-UE indirect communication through the relay UE, the QoS required for the service using the communication can be satisfied.

The same SLRB configuration can be used between the UE-TX and the relay UE and between the relay UE and the UE-RX. Consequently, the relay UE can simply configure the SLRB. This can reduce malfunctions in the UE-to-UE indirect communication through a relay.

A plurality of SLRB configurations to be used for the SL communication may be provided. The plurality of SLRB configurations may be referred to as candidates for an SLRB configuration. The UE-TX may provide a plurality of SLRB configurations, and configure one of the SLRB configurations as an SLRB for the SL communication between the UE-TX and the relay UE.

The UE-TX may notify the relay UE of candidates for the SLRB configuration. The relay UE may select one of the candidates for the SLRB configuration as the SLRB configuration for the SL communication between the relay UE and the UE-RX.

An identifier for identifying each SLRB configuration in the candidates for the SLRB configuration may be provided.

The UE-TX may notify the relay UE of an identifier indicating an SLRB configuration to be used for the SL communication between the relay UE and the UE-RX together with the candidates for the SLRB configuration. For example, the relay UE establishes the SLRB configuration identified by the identifier indicating the SLRB configuration, as the SLRB for the SL communication between the relay UE and the UE-RX.

This enables the SLRB configuration for each SL communication in consideration of not only the QoS required for the service for performing the UE-to-UE indirect communication through the relay UE but also a use state of radio resources at each node.

The UE-TX may notify the candidates for the SLRB configuration and an identifier for identifying an SLRB configuration in the candidates via different signalings. For example, the UE-TX may notify the candidates for the SLRB configuration via the PC5-S signaling, and notify the identifier for identifying the SLRB configuration in the candidates via the PC5-RRC signaling. This enables the relay UE to flexibly establish the SLRB configuration.

Examples of the SL communication include the unicast communication for performing the point-to-point bidirectional communication, the groupcast communication for performing the communication between the UE and a group of one or more UEs, and the broadcast communication for the UE to perform transmission to one or more UEs. Even when the SL communication at each link in the UE-to-UE indirect communication through the relay UE is not only the unicast communication but also the groupcast communication or the broadcast communication, the aforementioned method may be appropriately applied to configuration of the QoS and the SLRB.

For example, an SLRB parameter on the unicast communication in performing the unicast communication, an SLRB parameter on the groupcast communication in performing the groupcast communication, or an SLRB parameter on the broadcast communication in performing the broadcast communication may be used as the SLRB configuration.

For example, when the UE-TX and the relay UE perform the unicast communication and the relay UE and the UE-RX perform the unicast communication, the UE-TX should notify the relay UE of the SLRB parameter on the unicast communication as the SLRB configuration between the UE-TX and the relay UE, and the SLRB parameter on the unicast communication as the SLRB configuration between the relay UE and the UE-RX. This enables the relay UE to configure the SLRB for the unicast communication between the UE-TX and the relay UE, and the SLRB for the unicast communication between the relay UE and the UE-RX.

For example, when the UE-TX and the relay UE perform the unicast communication and the relay UE and the UE-RX perform the groupcast communication, the UE-TX should notify the relay UE of the SLRB parameter on the unicast communication as the SLRB configuration between the UE-TX and the relay UE, and the SLRB parameter on the groupcast communication as the SLRB configuration between the relay UE and the UE-RX. This enables the relay UE to configure the SLRB for the unicast communication between the UE-TX and the relay UE, and the SLRB for the groupcast communication between the relay UE and the UE-RX.

Consequently, the QoS and the SLRB can be configured even when not only the unicast communication but also the groupcast communication and the broadcast communication are performed in each SL of the UE-to-UE indirect communication through the relay UE.

### The first modification of the fourth embodiment

The first modification of the fourth embodiment discloses another method for solving the problem described in the fourth embodiment. Differences with the method disclosed in the fourth embodiment are mainly described.

The relay UE configures the SLRB between the relay UE and the UE-RX.

The relay UE may configure the PFI between the relay UE and the UE-RX. The relay UE may configure the PC5 QoS flow.

The UE-TX may notify the relay UE of the QoS relevant information required for the service to be implemented between the UE-TX and the UE-RX. The relay UE may configure the PC5 QoS flow and/or the PFI, using the QoS relevant information received from the UE-TX. The method for the UE-TX to configure the PC5 QoS flow and/or the PFI, which is disclosed in the fourth embodiment, should be applied to the configuration method. The relay UE may store the PC5 QoS parameter for the UE-RX.

The relay UE may configure the SLRB between the relay UE and the UE-RX, using the PC5 QoS parameter notified from the UE-TX. The relay UE may arbitrarily configure the SLRB association information. The relay UE may configure the SLRB so that the PC5 QoS parameter is satisfied. As another method, the relay UE may calculate the SLRB configuration in a method pre-configured in the relay UE. The method may be applied when the relay UE is not served by the gNB and/or when the UE-TX is out of coverage.

The UE-TX notifies the relay UE of the configured PFI and the configuration of the SLRB to which the PC5 QoS flow corresponding to the PFI is mapped. The UE-TX may notify the relay UE of only the SLRB parameter associated with the transmitter and the receiver. This enables the relay UE to configure the SLRB for the SL communication between the UE-TX and the relay UE.

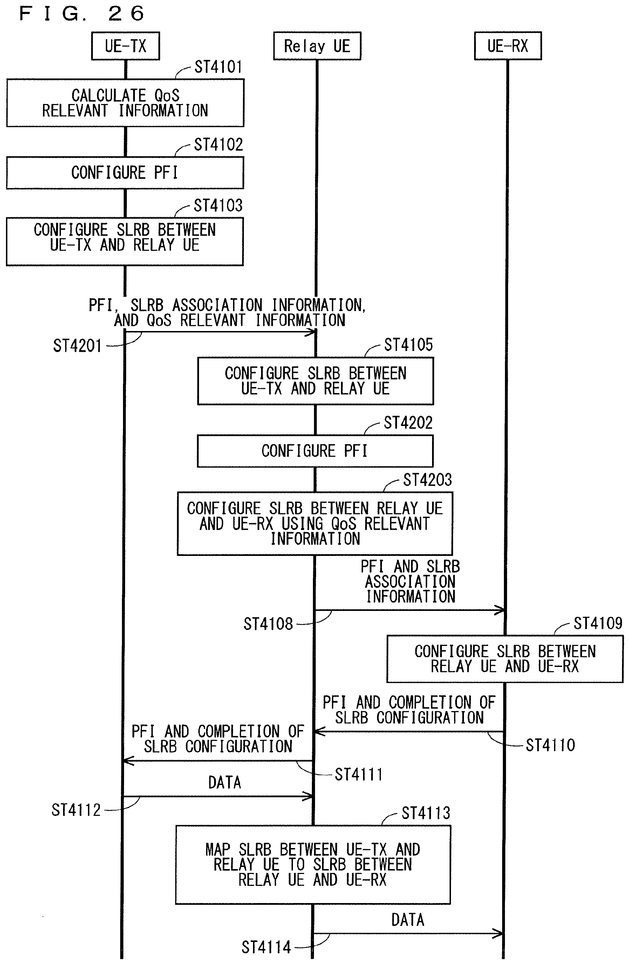

FIG. 26 is a sequence diagram illustrating an example method for configuring the QoS and the SLRB in the UE-to-UE indirect communication through the relay UE according to the first modification of the fourth embodiment. FIG. 26 illustrates a case where a V2X service has been generated in the UE-TX. The UE-TX transmits the service data to the UE-RX through the relay UE. In FIG. 26, the same step numbers are applied to the steps common to those in FIG. 25, and the common description thereof is omitted.

In Step ST4201, the UE-TX notifies the relay UE of the calculated QoS relevant information, the configured PFI, and the SLRB association information on the SLRB to which the PC5 QoS flow corresponding to the PFI is mapped. The SLRB association information may be limited to the SLRB parameter associated with the transmitter and the receiver.

In Steps ST4202 and ST4203, the relay UE configures the SLRB for the SL communication between the relay UE and the UE-RX. In Step ST4202, the relay UE configures the PC5 QoS flow and the PFI for identifying the PC5 QoS flow, using the QoS relevant information notified from the UE-TX.

The relay UE may configure, as the PC5 QoS flow, a PC5 QoS flow dedicated to relaying data. This QoS flow may be different from the PC5 QoS flow to be configured when a service using the SL communication is generated in the relay UE. The relay UE need not configure the PC5 QoS flow for relaying the data. The relay UE may map the data received from the UE-TX to the SLRB for transmission to the UE-RX, without using the PC5 QoS flow for the UE-RX. The relay UE may configure the PFI even when not configuring a PC5 QoS flow.

In Step ST4203, the relay UE configures the SLRB between the relay UE and the UE-RX, using the QoS relevant information notified from the UE-TX. The relay UE configures the SLRB so that the QoS relevant information notified from the UE-TX is satisfied.

Consequently, the QoS and the SLRB for the SL communication each between the UE-TX and the relay UE and between the relay UE and the UE-RX can be configured. This enables transmission of the service data between the UE-TX and the UE-RX through the relay UE. The service data has been generated between the UE-TX and the UE-RX.

The method disclosed in the first modification of the fourth embodiment can configure the SLRB between the UE-TX and the relay UE so that the QoS required for the service is satisfied. Furthermore, the UE-TX notifies the relay UE of the calculated QoS relevant information, so that the relay UE can recognize information relevant to the QoS (the QoS relevant information) required for the service to be implemented between the UE-TX and the UE-RX. The relay UE can configure the SLRB between the relay UE and the UE-RX, using the QoS relevant information. Consequently, the QoS required for the service to be implemented between the UE-TX and the UE-RX can be satisfied in the SL communication between the relay UE and the UE-RX. In the UE-to-UE indirect communication through the relay UE, the QoS required for the service using the communication can be satisfied.

Since the relay UE configures the SLRB between the relay UE and the UE-RX, the relay UE can configure the SLRB appropriate for radio resources of the relay UE or the radio propagation environment between the relay UE and the UE-RX. This increases the use efficiency of the radio resources of the relay UE and the communication quality of the SL communication between the relay UE and the UE-RX.

The UE-TX may configure a plurality of QoS relevant information required for the service to be implemented between the UE-TX and the UE-RX. The plurality of QoS relevant information configured between the UE-TX and the UE-RX may be referred to as candidates for the QoS relevant information. The UE-TX may provide the plurality of QoS relevant information, and notify the relay UE of one of the plurality of QoS relevant information.

The UE-TX may notify the relay UE of candidates for the QoS relevant information. The relay UE may select one of the candidates for the QoS relevant information for the SL communication between the relay UE and the UE-RX, and configure the SLRB using the selected QoS relevant information.

An identifier for identifying each QoS relevant information in the candidates for the QoS relevant information may be provided.

The UE-TX may notify the relay UE of an identifier indicating QoS relevant information for the SL communication between the relay UE and the UE-RX, together with the candidates for the QoS relevant information. For example, the relay UE configures the SLRB for the SL communication between the relay UE and the UE-RX, using the QoS relevant information identified by the identifier indicating the QoS relevant information.

As such, providing a plurality of candidates for the QoS required for the service for performing the UE-to-UE indirect communication through the relay UE enables, for example, the SLRB configuration for each SL communication using a use state of radio resources at each node or using the QoS appropriate for the communication quality between the nodes.

The UE-TX may notify the candidates for the QoS relevant information and an identifier for identifying QoS relevant information in the candidates via different signalings. For example, the UE-TX may notify the candidates for the QoS relevant information via the PC5-S signaling, and notify the identifier for identifying the QoS relevant information in the candidates via the PC5-RRC signaling. This enables the UE-TX to flexibly notify the QoS relevant information.

Examples of the SL communication include the unicast communication for performing the point-to-point bidirectional communication, the groupcast communication for performing the communication between the UE and a group of one or more UEs, and the broadcast communication for the UE to perform transmission to one or more UEs. Even when the SL communication at each link in the UE-to-UE indirect communication through the relay UE is not only the unicast communication but also the groupcast communication or the broadcast communication, the aforementioned method may be appropriately applied to configuration of the QoS and the SLRB.

For example, an SLRB parameter on the unicast communication in performing the unicast communication, an SLRB parameter on the groupcast communication in performing the groupcast communication, or an SLRB parameter on the broadcast communication in performing the broadcast communication may be used as the SLRB configuration.

For example, when the UE-TX and the relay UE perform the unicast communication and the relay UE and the UE-RX perform the unicast communication, the UE-TX should notify the relay UE of the SLRB parameter on the unicast communication as the SLRB configuration between the UE-TX and the relay UE, and the SLRB parameter on the unicast communication as the SLRB configuration between the relay UE and the UE-RX. This enables the relay UE to configure the SLRB for the unicast communication between the UE-TX and the relay UE, and the SLRB for the unicast communication between the relay UE and the UE-RX.

For example, when the UE-TX and the relay UE perform the unicast communication and the relay UE and the UE-RX perform the groupcast communication, the UE-TX should notify the relay UE of the SLRB parameter on the unicast communication as the SLRB configuration between the UE-TX and the relay UE, and the SLRB parameter on the groupcast communication as the SLRB configuration between the relay UE and the UE-RX. This enables the relay UE to configure the SLRB for the unicast communication between the UE-TX and the relay UE, and the SLRB for the groupcast communication between the relay UE and the UE-RX.

Consequently, the QoS and the SLRB can be configured even when not only the unicast communication but also the groupcast communication and the broadcast communication are performed in each SL of the UE-to-UE indirect communication through the relay UE.

### The second modification of the fourth embodiment

In the UE-to-UE direct communication, a unique identifier is assigned as the PFI within a range between the transmission source UE and the transmission target UE (see Non-Patent Document 26 (TS23.287 V16.1.0)). In other words, the same identifier cannot be assigned as a plurality of PFIs to be configured within the range between the transmission source UE and the transmission target UE. An identifier indicating the transmission source UE may be referred to as a source L2ID (SRC L2ID). An identifier indicating the transmission target UE may be referred to as a destination L2ID (DST L2ID).

In the UE-to-UE indirect communication using the relay UE, transmission/reception nodes for the SL communication at each link are different from those for the V2X service. Here, whether the DST L2ID indicates a reception node for the SL communication at each link or a reception node for the V2X service is unknown. Thus, processes at nodes in the UE-to-UE indirect communication using the relay UE become inconsistent. This causes malfunctions, and creates a problem of impairing normal communication.

The second modification of the fourth embodiment discloses a method for solving such a problem.

The DST L2ID indicates a reception node for the V2X service. The DST L2ID indicates the UE-RX.

A unique identifier may be assigned as the PFI between the UE-TX and the UE-RX. The SL communication between the UE-TX and the relay UE, and the SL communication between the relay UE and the UE-RX are performed using the PFI. The UE-TX may configure the PFI to be used for the SL communication between the UE-TX and the relay UE and the SL communication between the relay UE and the UE-RX. The UE-TX may configure the PFI to be used for the SL communication between the UE-TX and the relay UE, and the relay UE may configure the PFI to be used for the SL communication between the relay UE and the UE-RX.

This method may be applied to the methods disclosed in the fourth embodiment and the first modification of the fourth embodiment. The first modification of the fourth embodiment discloses that the relay UE may configure the PC5 QoS flow and/or the PFI, using the QoS relevant information received from the UE-TX. In this configuration of the PFI, the relay UE may configure the PFI configured by the UE-TX. The UE-TX should notify the relay UE of the configured PFI. The UE-TX may notify the configured PFI together with the QoS relevant information.

This enables assignment of the uniform DST L2ID between the UE-TX and the UE-RX, and enables the nodes to perform consistent processes. The processes at each node can be simplified.

The PFI configured by the UE-TX as a unique identifier between the UE-TX and the UE-RX is sometimes identical to the PFI configured by the relay UE as a unique identifier between the relay UE and the UE-RX in transmitting generated service data to the UE-RX.

In the service to be implemented between the UE-TX and the UE-RX, the SRC L2ID for the SL communication between the relay UE and the UE-RX may indicate the relay UE that is a transmission source. This enables the relay UE to use the uniform SRC L2ID for data to be transmitted to the UE-RX. Consequently, processes can be simplified.

Here, the UE-RX cannot determine whether the data received from the relay UE is service data between the UE-TX and the UE-RX or service data between the relay UE and the UE-RX. This is because both pieces of the service data have the same PFI, DST L2ID, and SRC L2ID.

A method for solving such a problem is disclosed.

The PFI between the relay UE and the UE-RX is reconfigured. The relay UE determines whether the PFI configured by the UE-TX is identical to the PFI already configured for the UE-RX. When the PFIs are identical, the relay UE reconfigures the PFI between the relay UE and the UE-RX to avoid an overlap with the PFI configured by the UE-TX. The PFI configured by the UE-TX need not be changed. The relay UE notifies the UE-RX of the reconfigured PFI. The relay UE may notify an SLRB configuration corresponding to the reconfigured PFI. The relay UE may notify the SLRB ID.

The relay UE may notify the UE-RX of the PFI configured by the UE-TX. The relay UE may notify the UE-RX of the PFI configured by the UE-TX and the PFI reconfigured by the relay UE. The relay UE may associate the PFI configured by the UE-TX with the PFI reconfigured by the relay UE and notify the UE-RX of the association.

The relay UE may be allowed to change the SLRB configuration for the SL communication between the relay UE and the UE-RX as well as to reconfigure the PFI. Consequently, the relay UE can flexibly configure the SLRB. The relay UE may be allowed to only reconfigure the PFI without changing the SLRB configuration. The processes for reconfiguring the SLRB can be omitted.

The relay UE determines whether the PFI configured by the UE-TX is identical to the PFI already configured for the UE-RX. When the PFIs are different, the relay UE uses the PFI configured by the UE-TX.

Consequently, the PFI of the service data between the UE-TX and the UE-RX can be different from that of the service data between the relay UE and the UE-RX. Thus, the UE-RX can determine which service data the received service data is.

Another method for solving the aforementioned problem is disclosed.

The PFI between the UE-TX and the UE-RX is reconfigured. A request for reconfiguring the PFI may be provided. The relay UE determines whether the PFI configured by the UE-TX is identical to the PFI already configured for the UE-RX. When the PFIs are identical, the relay UE notifies the UE-TX of the request for reconfiguring the PFI. The relay UE may notify PFI information already used by its own relay UE. The relay UE may notify the PFI information available in its own relay UE. The relay UE may notify the PFI information already used by its own relay UE or the PFI information available in its own relay UE, together with information for the request. The relay UE may include, in a message for the request, the PFI information already used by its own relay UE or the PFI information available in its own relay UE, and notify the information. Consequently, the UE-TX can avoid repeatedly reconfiguring the PFI.

Upon receipt of the request for reconfiguring the PFI from the relay UE, the UE-TX reconfigures the PFI between the UE-TX and the UE-RX. The UE-TX may reconfigure the PFI based on the PFI information received together with the request to avoid an overlap with the PFI between the relay UE and the UE-RX. The UE-TX may reconfigure the PC5 QoS flow. The UE-TX may reconfigure the PC5 QoS flow to reconfigure the PFI.

A request for reconfiguring the PC5 QoS flow may be provided. Upon receipt of the request for reconfiguring the PC5 QoS flow, the UE-TX reconfigures the PC5 QoS flow. The request for reconfiguring the PC5 QoS flow may include the request for reconfiguring the PFI. Upon receipt of the request for reconfiguring the PC5 QoS flow, the UE-TX reconfigures the PC5 QoS flow and the PFI.

The UE-TX notifies the relay UE of the reconfigured PFI. The UE-TX may notify the SLRB configuration corresponding to the reconfigured PFI. The UE-TX may notify the SLRB ID.

The UE-TX may be allowed to change the SLRB configuration for the SL communication between the UE-TX and the UE-RX as well as to reconfigure the PFI. Consequently, the UE-TX can flexibly configure the SLRB. The UE-TX may be allowed to only reconfigure the PFI without changing the SLRB configuration. The processes for reconfiguring the SLRB can be omitted.

The relay UE uses the PFI reconfigured by and received from the UE-TX.

The relay UE determines whether the PFI configured by the UE-TX is identical to the PFI already configured for the UE-RX. When the PFIs are different, the relay UE uses the PFI configured by the UE-TX.

Consequently, the PFI of the service data between the UE-TX and the UE-RX can be different from that of the service data between the relay UE and the UE-RX. Thus, the UE-RX can determine which service data the received service data is.

Another method for solving the aforementioned problem is disclosed.

Aside from the PFI to be assigned between the UE-TX and the UE-RX, a PFI to be assigned between the relay UE and the UE-RX may be provided. The relay UE configures the PFI as a PFI between the relay UE and the UE-RX. The relay UE should associate the PFI between the UE-TX and the UE-RX with the PFI between the relay UE and the UE-RX.

The UE-TX may notify the relay UE of the PFI to be assigned between the UE-TX and the UE-RX. Consequently, the relay UE can recognize the PFI assigned between the UE-TX and the UE-RX.

The relay UE may notify the UE-RX of the PFI assigned between the UE-TX and the UE-RX. The relay UE may notify the UE-RX of the PFI to be assigned between the relay UE and the UE-RX. The relay UE may notify the UE-RX of the PFI assigned between the UE-TX and the UE-RX and the PFI to be assigned between the relay UE and the UE-RX. The relay UE may associate the PFI assigned between the UE-TX and the UE-RX with the PFI to be assigned between the relay UE and the UE-RX and notify the UE-RX of the association.

The SLRB for the SL communication between the relay UE and the UE-RX may be configured using the configuration established by the UE-TX or the relay UE.

Consequently, the PFI of the service data between the UE-TX and the UE-RX can be different from that of the service data between the relay UE and the UE-RX. Thus, the UE-RX can determine which service data the received service data is.

The PFI to be configured in a header of the SDAP PDU is disclosed. The PFI to be configured in the header of the SDAP PDU in the SDAP of the UE-TX is defined as the PFI to be configured between the UE-TX and the UE-RX. The PFI to be configured in the header of the SDAP PDU in the SDAP of the relay UE may be defined as the PFI to be configured between the UE-TX and the UE-RX. The relay UE maps the service data received from the UE-TX to the SLRB for the SL communication between the relay UE and the UE-RX, using the PFI between the UE-TX and the UE-RX.

The PFI to be configured in the header of the SDAP PDU in the SDAP of the relay UE may be defined as the PFI to be configured between the relay UE and the UE-RX. The relay UE maps the service data received from the UE-TX to the SLRB for the SL communication between the relay UE and the UE-RX, using the PFI between the relay UE and the UE-RX which has been associated with the PFI between the UE-TX and the UE-RX.

Another method for solving the aforementioned problem is disclosed.

The SRC L2ID of the service data between the UE-TX and the UE-RX is made different from that of the service data between the relay UE and the UE-RX. For example, an identifier of the UE-TX is configured as an SRC L2ID for the service to be implemented between the UE-TX and the UE-RX, and an identifier of the relay UE is configured as an SRC L2ID for the service to be implemented between the relay UE and the UE-RX.

The UE-RX should determine whether data received from the relay UE is the service data between the UE-TX and the UE-RX or the service data between the relay UE and the UE-RX, using the SRC L2ID of the data. This enables the UE-RX to sort the service data between the UE-TX and the UE-RX and the service data between the relay UE and the UE-RX, irrespective of the method for configuring the PFI.

Another method for solving the problem described in the second modification of the fourth embodiment is disclosed.

The DST L2ID indicates a reception node in the SL communication at each link. The DST L2ID indicates the relay UE in the SL communication between the UE-TX and the relay UE. The DST L2ID indicates the UE-RX in the SL communication between the relay UE and the UE-RX.

A unique identifier may be assigned as the PFI between the UE-TX and the relay UE. The PFI is used for the SL communication between the UE-TX and the relay UE. A unique identifier may be assigned as the PFI between the relay UE and the UE-RX. The PFI is used for the SL communication between the relay UE and the UE-RX. The UE-TX may configure the PFI to be used for the SL communication between the UE-TX and the relay UE. The relay UE may configure the PFI to be used for the SL communication between the relay UE and the UE-RX.

The relay UE should associate the PFI between the UE-TX and the UE-RX with the PFI between the relay UE and the UE-RX.

This method may be applied to the methods disclosed in the fourth embodiment and the first modification of the fourth embodiment. What is disclosed is that the UE-TX may configure the PC5 QoS flow and/or the PFI. In this configuration of the PFI, the UE-TX may configure the PFI with the relay UE. The fourth embodiment discloses that the relay UE may configure the PFI received from the UE-TX as the PFI between the relay UE and the UE-RX. In this configuration of the PFI, the relay UE may configure the PFI to be used for the SL communication between the relay UE and the UE-RX. The SLRB for the SL communication between the relay UE and the UE-RX may be configured using the configuration established by the UE-TX or the relay UE.

The aforementioned method should be appropriately applied to configuring the PFI in the header of the SDAP PDU. Consequently, the same advantages as previously described can be produced.

This enables each link of the UE-to-UE indirect communication through the relay UE to use the DST L2ID as a transmission target node at the link and perform consistent processes at each node. Since configuring a transmission target node at each link can be regarded as configuring a transmission target node in the UE-to-UE direct communication, the UE-to-UE indirect communication can be easily supported at each node.

Another method for solving the problem described in the second modification of the fourth embodiment is disclosed.

A plurality of DST L2IDs are provided. A DST L2ID configured as a reception node for the V2X service and a DST L2ID configured as a reception node in the SL communication at each link are provided.

A unique identifier is assigned as the PFI between the UE-TX and the UE-RX. Furthermore, a unique identifier is assigned as the PFI between the UE-TX and the relay UE, and a unique identifier is assigned as the PFI between the relay UE and the UE-RX. The UE-TX and the relay UE perform the SL communication using the PFI between the UE-TX and the relay UE. The relay UE and the UE-RX perform the SL communication using the PFI between the relay UE and the UE-RX. The UE-TX may configure the PFI to be used for the SL communication between the UE-TX and the relay UE. The relay UE may configure the PFI to be used for the SL communication between the relay UE and the UE-RX.

The UE-TX may associate the PFI between the UE-TX and the UE-RX with the PFI between the UE-TX and the relay UE. The relay UE may associate the PFI between the UE-TX and the relay UE with the PFI between the relay UE and the UE-RX.

The relay UE may associate the PFI between the UE-TX and the UE-RX with the PFI between the relay UE and the UE-RX.

This method may be applied to the methods disclosed in the fourth embodiment and the first modification of the fourth embodiment. What is disclosed is that the PC5 QoS flow and/or the PFI may be configured. The PFI between the UE-TX and the relay UE, which has been associated with the PFI between the UE-TX and the UE-RX, may be configured as this PFI. The fourth embodiment discloses that the relay UE may configure the PFI received from the UE-TX as the PFI between the relay UE and the UE-RX. In this configuration of the PFI, the relay UE may configure the PFI to be used for the SL communication between the relay UE and the UE-RX. The SLRB for the SL communication between the relay UE and the UE-RX may be configured using the configuration established by the UE-TX or the relay UE.

The UE-TX may notify the relay UE of a plurality of configured PFIs. The UE-TX may establish association of the plurality of configured PFIs and notify the association. This enables the relay UE to relay the service data. The relay UE may notify the UE-RX of the PFI between the relay UE and the UE-RX. Alternatively, the relay UE may notify the UE-RX of the PFI between the relay UE and the UE-RX and the PFI between the UE-TX and the UE-RX. The relay UE may establish association of these PFIs and notify the association. This enables the UE-RX to receive the service data from the relay UE.

The PFI to be configured in the header of the SDAP PDU is disclosed. The PFI to be configured in the header of the SDAP PDU in the SDAP of the UE-TX may be defined as the PFI to be configured between the UE-TX and the UE-RX. The UE-TX maps the service data to be transmitted to the SLRB for the SL communication between the UE-TX and the relay UE, using the PFI between the UE-TX and the relay UE which has been associated with the PFI between the UE-TX and the UE-RX.

The PFI to be configured in the header of the SDAP PDU in the SDAP of the relay UE may be defined as the PFI to be assigned between the UE-TX and the UE-RX. The relay UE maps the service data received from the UE-TX to the SLRB for the SL communication between the relay UE and the UE-RX, using the PFI between the relay UE and the UE-RX which has been associated with the PFI between the UE-TX and the UE-RX.

Another method for configuring the PFI in the header of the SDAP PDU is disclosed. The PFI to be configured in the header of the SDAP PDU in the SDAP of the UE-TX may be defined as the PFI to be configured between the UE-TX and the UE-RX. The PFI to be configured in the header of the SDAP PDU in the SDAP of the relay UE may be defined as the PFI to be configured between the relay UE and the UE-RX. The relay UE maps the service data received from the UE-TX to the SLRB for the SL communication between the relay UE and the UE-RX, using the PFI between the relay UE and the UE-RX which has been associated with the PFI between the UE-TX and the UE-RX.

Another method for configuring the PFI in the header of the SDAP PDU is disclosed. The PFI to be configured in the header of the SDAP PDU in the SDAP of the UE-TX may be defined as the PFI to be configured between the UE-TX and the relay UE. The UE-TX maps the service data to be transmitted to the SLRB for the SL communication between the UE-TX and the relay UE, using the PFI between the UE-TX and the relay UE which has been associated with the PFI between the UE-TX and the UE-RX. The PFI to be configured in the header of the SDAP PDU in the SDAP of the relay UE may be defined as the PFI to be configured between the relay UE and the UE-RX. The relay UE maps the service data received from the UE-TX to the SLRB for the SL communication between the relay UE and the UE-RX, using the PFI between the relay UE and the UE-RX which has been associated with the PFI between the UE-TX and the UE-RX or the PFI between the UE-TX and the relay UE.

Another method for configuring the PFI in the header of the SDAP PDU is disclosed. A plurality of PFIs are configured in the header of the SDAP PDU in the SDAP of the UE-TX. The PFI to be configured between the UE-TX and the UE-RX and the PFI to be configured between the UE-TX and the relay UE are configured in the header of the SDAP PDU. A plurality of PFIs are configured in the header of the SDAP PDU in the SDAP of the relay UE. The PFI to be configured between the UE-TX and the UE-RX and the PFI to be configured between the relay UE and the UE-RX are configured in the header of the SDAP PDU. The relay UE maps the service data received from the UE-TX to the SLRB for the SL communication between the relay UE and the UE-RX, using the PFI between the relay UE and the UE-RX which has been associated with the PFI between the UE-TX and the UE-RX.

Information indicating that the plurality of PFIs are configured in an SDAP PDU header may be provided. Information indicating the number of PFIs to be configured in the SDAP PDU header may be provided. The number of PFIs to be configured in the SDAP PDU header may be, for example, two. The two PFIs may be, for example, the PFI to be configured between the UE-TX and the UE-RX, and the PFI to be configured between the UE-TX and the relay UE or between the relay UE and the UE-RX.

The UE-TX may notify the relay UE of the information. The relay UE may notify the UE-RX of the information. The relay UE may notify the information, for example, via the PC5-RRC signaling. The information may be provided as an SDAP PDU header. The information may be configured in the SDAP PDU header to be notified from the UE-TX to the relay UE. The information may be configured in the SDAP PDU header to be notified from the relay UE to the UE-RX. A reception node can recognize that a plurality of PFIs are configured.

In this manner, the PFI can be configured for each of the configured DST L2IDs. This enables the nodes to perform consistent processes. Dedicatedly configuring a transmission target node corresponding to a service and a transmission target node at each link clarifies the association between the service and the link. This can reduce malfunctions in the UE-to-UE indirect communication processes through a relay.

The method disclosed in the second modification of the fourth embodiment can clarify the configuration of a transmission target node even when transmission/reception nodes for the SL communication at each link are different from those for the V2X service as in the UE-to-UE indirect communication using the relay UE. This can reduce malfunctions in processes at each node in the UE-to-UE indirect communication using the relay UE. Consequently, the reliability of the communication can be enhanced.

### The third modification of the fourth embodiment

In the UE-to-UE direct communication, the Sidelink Control Information (SCI) includes a part of each of the SRC L2ID and the DST L2ID, and a MAC header includes the remaining parts. Upon receipt of the part of the DST L2ID included in the SCI, a data-receiving UE can determine whether data mapped to the PSSCH corresponding to the SCI is addressed to its own UE. Similarly, upon receipt of the remaining parts of the DST L2ID included in the MAC header, the data-receiving UE can determine whether the MAC PDU is addressed to its own UE. The SCI is control information for the SL communication, and is mapped to the PSCCH.

In the UE-to-UE indirect communication using the relay UE, transmission/reception nodes for the SL communication at each link are different from those for a service. Here, whether the DST L2ID indicates a reception node for the SL communication at each link or a reception node for the service is unknown. For example, when the DST L2ID indicates the UE-RX in the SL communication from the UE-TX to the relay UE, the relay UE cannot determine that a part of the DST L2ID (may be referred to as an L1ID) included in the SCI is addressed to its own UE, and does not receive the PSSCH. Furthermore, even when the relay UE can receive the PSSCH, the relay UE cannot determine that the remaining parts of the DST L2ID (DST L2ID-MAC) included in the MAC header are addressed to its own UE, and does not receive the MAC PDU. Thus, the relay UE cannot receive the data from the UE-TX.

A method for solving such a problem is disclosed.

The DST L2ID for the SL communication at each link indicates a reception node in the SL communication at the link. A DST L2ID of the service may be different from a DST L2ID for the SL communication. The DST L2ID between the UE-TX and the relay UE indicates the relay UE. The DST L2ID between the relay UE and the UE-RX should indicate the UE-RX.

The method disclosed in the second modification of the fourth embodiment may be appropriately applied to this method.

Another method is disclosed.

A plurality of DST L2IDs are provided. A DST L2ID configured as a reception node for a service and a DST L2ID configured as a reception node in the SL communication at each link may be provided. The DST L2ID for the SL communication at each link may be a DST L2ID configured as a reception node in the SL communication at the link. The DST L2ID between the UE-TX and the relay UE indicates the relay UE. The DST L2ID between the relay UE and the UE-RX should indicate the UE-RX.

The method disclosed in the second modification of the fourth embodiment may be appropriately applied to this method.

The SCI may include the DST L2ID configured as a reception node in the SL communication at each link and the DST L2ID configured as a reception node for a service. The MAC header may include the DST L2ID configured as a reception node in the SL communication at each link and the DST L2ID configured as a reception node for a service.

Information indicating that a plurality of DST L2IDs are configured may be provided. Information indicating the number of the DST L2IDs to be configured may be provided. The number of the DST L2IDs may be, for example, two. The two DST L2IDs may be, for example, the DST L2ID of the service and the DST L2ID for the SL communication at each link.

The UE-TX may notify the relay UE of the information. The relay UE may notify the UE-RX of the information. For example, the information may be included in the SCI and then notified. For example, a format for the SCI which varies depending on whether the number of pieces of the information is two or more may be provided. An identifier of the SCI which varies depending on whether the number of pieces of the information is two or more may be provided.

A format for the PSCCH which varies depending on whether the number of pieces of the information is two or more may be provided. The information may be provided as a MAC header. The information may be provided as a MAC CE. A MAC CE which varies depending on whether the number of pieces of the information is two or more may be provided. An identifier of the MAC CE which varies depending on whether the number of pieces of the information is two or more may be provided. A reception node can recognize that a plurality of DST L2IDs are configured.

When the DST L2ID configured as a reception node for a service and the DST L2ID configured as a reception node in the SL communication at each link are provided, a unique identifier may be assigned as the PFI between the UE-TX and the UE-RX. The PFI need not be configured at each link. The DST L2ID configured as the reception node in the SL communication at each link does not associate with the PFI. The DST L2ID configured as a reception node in the SL communication at each link identifies the reception node for the SL communication at the link.

In this manner, the relay UE can receive data from the UE-TX.

As described above, the SCI includes a part of each of the SRC L2ID and the DST L2ID, and a MAC header includes the remaining parts in the UE-to-UE direct communication. Upon receipt of the part of the SRC L2ID included in the SCI, the data-receiving UE can identify the transmission source UE of data mapped to the PSSCH corresponding to the SCI. Similarly, upon receipt of the remaining parts of the SRC L2ID included in the MAC header, the data-receiving UE can identify the transmission source UE of the MAC PDU.

In the UE-to-UE indirect communication using the relay UE, transmission/reception nodes for the SL communication at each link are different from those for a service. Here, whether the SRC L2ID indicates a transmission node for the SL communication at each link or a transmission node for the service is unknown. For example, when the SRC L2ID indicates the relay UE in the SL communication from the relay UE to the UE-RX, the UE-RX cannot determine that the data received from the relay UE is the service data from the UE-TX. Thus, the UE-RX cannot receive the service data from the UE-TX.

A method for solving such a problem is disclosed.

Here, the SRC L2ID for the SL communication at each link indicates a transmission node for the service. The SRC L2ID between the UE-TX and the relay UE indicates the UE-TX. The SRC L2ID between the relay UE and the UE-RX should indicate the UE-TX. Consequently, the UE-RX can identify the service data from the UE-TX.

Another method is disclosed.

A plurality of SRC L2IDs are provided. An SRC L2ID configured as a transmission node for a service and an SRC L2ID configured as a transmission node in the SL communication at each link may be provided. The SRC L2ID for the SL communication at each link may be an SRC L2ID configured as a reception node in the SL communication at the link. The SRC L2ID between the UE-TX and the relay UE indicates the UE-TX. The SRC L2ID between the relay UE and the UE-RX should indicate the relay UE.

The SCI may include the SRC L2ID configured as a transmission node in the SL communication at each link and the SRC L2ID configured as a reception node for a service. The MAC header may include the SRC L2ID configured as a reception node in the SL communication at each link and the SRC L2ID configured as a reception node for a service. Consequently, the UE-RX can receive the service data from the UE-TX.

Information indicating that a plurality of SRC L2IDs are configured may be provided. Information indicating the number of the SRC L2IDs to be configured may be provided. The number of the SRC L2IDs may be, for example, two. The two SRC L2IDs may be, for example, the SRC L2ID of the service and the SRC L2ID for the SL communication at each link.

The UE-TX may notify the relay UE of the information. The relay UE may notify the UE-RX of the information. For example, the information may be included in the SCI and then notified. For example, a format for the SCI which varies depending on whether the number of pieces of the information is two or more may be provided. An identifier of the SCI which varies depending on whether the number of pieces of the information is two or more may be provided.

A format for the PSCCH which varies depending on whether the number of pieces of the information is two or more may be provided. The information may be provided as a MAC header. The information may be provided as a MAC CE. A MAC CE which varies depending on whether the number of pieces of the information is two or more may be provided. An identifier of the MAC CE which varies depending on whether the number of pieces of the information is two or more may be provided. Consequently, a reception node can recognize that a plurality of SRC L2IDs are configured.

When the SRC L2ID configured as a transmission node for a service and the SRC L2ID configured as a transmission node in the SL communication at each link are provided, a unique identifier may be assigned as the PFI between the UE-TX and the UE-RX. The PFI need not be configured at each link. The SRC L2ID configured as the transmission node in the SL communication at each link does not associate with the PFI. The SRC L2ID configured as the transmission node in the SL communication at each link identifies the transmission node in the SL communication at the link.

Another method is disclosed.

Here, the SRC L2ID for the SL communication at each link indicates the transmission node in the SL communication at the link. An SRC L2ID of the service may be different from an SRC L2ID for the SL communication. The SRC L2ID between the UE-TX and the relay UE indicates the UE-TX. The SRC L2ID between the relay UE and the UE-RX should indicate the relay UE. The UE-RX should identify the service data from the UE-TX not using the SRC L2ID but using another method. The UE-RX should identify the service data from the UE-TX, for example, using the PFI associated with data transmitted from the relay UE. The method disclosed in the second modification of the fourth embodiment should be appropriately applied to the method for configuring the PFI.

Consequently, the UE-RX can receive the service data from the UE-TX in the data received from the relay UE.

The method disclosed in the third modification of the fourth embodiment enables the communication even when transmission/reception nodes for the SL communication at each link are different from those for the V2X service as in the UE-to-UE indirect communication using the relay UE. Moreover, malfunctions in processes at each node can be reduced, and the reliability of the communication can be enhanced.

An identifier of a transmission target UE may be configured in the signaling of the control information in the PC5. The method disclosed in the second or third modification of the fourth embodiment may be appropriately applied. The method disclosed in the second or third modification of the fourth embodiment may be appropriately applied to a method for configuring an identifier of a transmission target UE in the signaling for notifying the SLRB association information.

An identifier of a transmission source UE may be configured in the signaling of the control information in the PC5. The method disclosed in the third modification of the fourth embodiment may be appropriately applied. The method disclosed in the third modification of the fourth embodiment may be appropriately applied to a method for configuring an identifier of a transmission source UE in the signaling for notifying the SLRB association information.

Consequently, the signaling of the control information in the PC5 can produce the same advantages as previously described. Application of the signaling of the control information can further enhance the reliability of the UE-to-UE indirect communication through the relay UE.

### The fourth modification of the fourth embodiment

In the UE-to-UE direct communication, different DST L2IDs are not multiplexed into the same MAC PDU. Pieces of data with the same DST L2ID are multiplexed into the MAC PDU.

In the UE-to-UE indirect communication using the relay UE, the SL communication is performed between the UE-TX and the relay UE and between the relay UE and the UE-RX. When the DST L2ID indicates the relay UE in the SL communication between the UE-TX and the relay UE, the service data between the UE-TX and the UE-RX and the service data between the UE-TX and the relay UE are sometimes multiplexed into the same MAC PDU in the UE-TX. This is because the DST L2ID indicates the relay UE in both pieces of the service data, in the SL communication between the UE-TX and the relay UE.

As such, when the different pieces of the service data are multiplexed into the same MAC PDU, how the relay UE distinguishes each of the pieces of the service data is a problem.

The fourth modification of the fourth embodiment discloses a method for solving such a problem.

Different LCIDs are configured for different services. The UE-TX notifies the relay UE of the configured LCIDs. The UE-TX may include the configured LCIDs in the SLRB association information, and notify the relay UE of the LCIDs.

Consequently, even when the service data between the UE-TX and the UE-RX and the service data between the UE-TX and the relay UE are multiplexed into the same MAC PDU in the UE-TX, the relay UE can distinguish the services using the LCIDs configured for the services. When the LCID of the service to be implemented between the UE-TX and the UE-RX is configured in received data, the relay UE transmits the data to the UE-RX.

Another method is disclosed.

Different RLC channels are configured for different services. RLC channel identifiers for identifying the RLC channels may be provided. Different RLC bearers may be configured for the different services. RLC bearer identifiers for identifying the RLC bearers may be provided. The RLC channel identifier may be included as an RLC PDU header. The RLC bearer identifier may be included as the RLC PDU header.

Consequently, the relay UE can distinguish each service, using the RLC channel identifier or the RLC bearer identifier configured for the service. When the RLC channel identifier or the RLC bearer identifier of the service to be implemented between the UE-TX and the UE-RX is configured in received data, the relay UE transmits the data to the UE-RX.

Another method is disclosed.

Multiplexing different pieces of service data into the same MAC PDU is prohibited. Multiplexing different pieces of service data into the same MAC PDU may be disallowed. Identical pieces of service data are multiplexed into the same MAC PDU.

Reception of the MAC PDU for each service enables the relay UE to distinguish the service. The methods disclosed in the other embodiments in the present invention may be appropriately applied to a method for distinguishing the service.

Different services may be a combination of a service using the UE-to-UE direct communication and a service using the UE-to-UE indirect communication. The aforementioned methods may be appropriately applied, for example, when the UE-TX and the relay UE implement not only the service using the UE-to-UE indirect communication but also the service using the UE-to-UE direct communication or when the relay UE and the UE-RX implement not only the service using the UE-to-UE indirect communication but also the service using the UE-to-UE direct communication. This can produce the same advantages as previously described.

The method disclosed in the fourth modification of the fourth embodiment enables the relay UE to distinguish the service data between the UE-TX and the UE-RX from the service data between the UE-TX and the relay UE. Thus, the relay UE can relay, to the UE-RX, data that needs to be transmitted to the UE-RX. This can reduce malfunctions in processes of the relay UE.

### The fifth modification of the fourth embodiment

In 3GPP, none discusses a method for the relay UE to relay data in the UE-to-UE indirect communication through the relay UE. For example, a method for the relay UE to map, to which SLRB, data received from the UE-TX is unknown. Thus, the relay UE cannot appropriately relay the data. This causes a problem of a failure in the UE-to-UE indirect communication through the relay UE.

The fifth modification of the fourth embodiment discloses a method for solving such a problem.

A case where the SLRB configuration between the UE-TX and the relay UE is used between the relay UE and the UE-RX is disclosed. The SDAP PDU whose header contains the PFI should be used in the UE-to-UE indirect communication through a relay. The relay UE relays data between the V2X layer and the SDAP. The relay UE should map data to the SLRB for transmission to the UE-RX, using the PFI configured in the header of the SDAP PDU received from the UE-TX. The methods disclosed in the aforementioned embodiments and modifications should be applied to the methods for configuring, associating, and notifying the PFI.

This enables the relay UE to appropriately relay data.

Another method for using, between the relay UE and the UE-RX, the SLRB configuration between the UE-TX and the relay UE is disclosed. The relay UE relays data between the RLC and the PDCP in the UE-to-UE indirect communication. The relay UE may relay data using the RLC bearer. Alternatively, the relay UE may relay data using the RLC channel.

In the UE-to-UE indirect communication through a relay, a new layer for relaying data may be provided between the RLC and the PDCP of the relay UE. A new protocol stack may be provided. The layer or the protocol stack may have a function of routing data received from the UE-TX to the UE-RX. The layer or the protocol stack may have a function of mapping the data received from the UE-TX, to the RLC for transmitting the data to the UE-RX.

An RLC channel identifier identical to that between the UE-TX and the relay UE is used as the RLC channel identifier between the relay UE and the UE-RX. The relay UE should map data to an RLC channel having an identifier for transmission to the UE-RX which is identical to the RLC channel identifier of the RLC channel received from the UE-TX. The relay UE may use an RLC bearer instead of the RLC channel. The relay UE should map data to an RLC bearer having an identifier for transmission to the UE-RX which is identical to the RLC bearer identifier of the RLC bearer received from the UE-TX.

The relay UE may use a leg instead of the RLC bearer. An identifier for identifying the leg may be provided. The relay UE should map data to a leg having an identifier for transmission to the UE-RX which is identical to the leg identifier of the leg received from the UE-TX. A leg is sometimes configured, for example, in the dual connectivity (DC). Each of a plurality of RLC bearers to be configured in the DC is configured as a leg. The RLC bearer to be configured at each link in the SL communication may be configured as a leg.

The relay UE may apply the SLRB configuration received from the UE-TX, to the RLC channel, the RLC bearer, or the leg between the relay UE and the UE-RX. The relay UE may apply the SLRB association information. The SLRB configuration associated with the RLC channel or the RLC bearer, or the corresponding RLC channel identifier or RLC bearer identifier may be included in the SLRB parameter associated with the transmitter and the receiver. The methods disclosed in the aforementioned embodiments and modifications should be applied to the methods for configuring, associating, and notifying the SLRB.

This enables the relay UE to appropriately relay data.

Another method for the relay UE to relay data between the RLC and the PDCP in the UE-to-UE indirect communication is disclosed. The LCID identical to that between the UE-TX and the relay UE is used as the LCID between the relay UE and the UE-RX. The relay UE should map data to the SLRBs having the same LCID for transmission to the UE-RX, using the LCID received from the UE-TX.

The relay UE may apply the SLRB configuration received from the UE-TX, to the LCID between the relay UE and the UE-RX. The relay UE may apply the SLRB association information. The LCID may be included in the SLRB parameter associated with the transmitter and the receiver. The methods disclosed in the aforementioned embodiments and modifications should be applied to the methods for configuring, associating, and notifying the SLRB.

This enables the relay UE to appropriately relay data.

A case where the UE-TX and the relay UE configure the SLRB of each link is disclosed. The SDAP PDU whose header contains the PFI should be used in the UE-to-UE indirect communication through a relay. The relay UE relays data between the V2X layer and the SDAP. The relay UE should map the PDU to the SLRB for transmission to the UE-RX, using the PFI configured in the header of the SDAP PDU received from the UE-TX. The relay UE maps data of the PFI configured by the UE-TX, to data of the PFI configured by the relay UE. The methods disclosed in the aforementioned embodiments and modifications should be applied to the methods for configuring, associating, and notifying the PFI.

This enables the relay UE to appropriately relay data.

Another method for the UE-TX and the relay UE to configure the SLRB of each link is disclosed. The relay UE relays data between the RLC and the PDCP in the UE-to-UE indirect communication. The relay UE may relay data using the RLC bearer. Alternatively, the relay UE may relay data using the RLC channel.

In the UE-to-UE indirect communication through a relay, a new layer for relaying data may be provided between the RLC and the PDCP of the relay UE. A new protocol stack may be provided. The aforementioned methods should be applied.

The relay UE configures the RLC channel identifier between the relay UE and the UE-RX. The relay UE should map data to the RLC channel having the RLC identifier configured by the relay UE for transmission to the UE-RX, using the RLC channel identifier of the RLC channel received from the UE-TX. The relay UE may use the RLC bearer instead of the RLC channel. The relay UE should map data to the RLC bearer having an identifier configured by the relay UE for transmission to the UE-RX, using the RLC bearer identifier of the RLC bearer received from the UE-TX.

The relay UE may use a leg instead of the RLC bearer. An identifier for identifying the leg may be provided. The relay UE should map data to a leg having an identifier for transmission to the UE-RX which is identical to a leg identifier of the leg received from the UE-TX. The RLC bearer to be configured at each link in the SL communication may be configured as a leg.

The relay UE may apply the SLRB configuration established by the relay UE, to the RLC channel or the RLC bearer between the relay UE and the UE-RX. The relay UE may apply the SLRB association information. The SLRB configuration associated with the RLC channel or the RLC bearer, or the corresponding RLC channel identifier or RLC bearer identifier may be included in the SLRB parameter associated with the transmitter and the receiver. The methods disclosed in the aforementioned embodiments and modifications should be applied to the methods for configuring, associating, and notifying the SLRB.

This enables the relay UE to appropriately relay data.

Another method for the relay UE to relay data between the RLC and the PDCP in the UE-to-UE indirect communication is disclosed. The relay UE configures the LCID between the relay UE and the UE-RX. The relay UE should map data to the SLRB with the LCID configured by the relay UE for transmission to the UE-RX, using the LCID received from the UE-TX.

The relay UE may apply the SLRB configuration established by the relay UE, to the LCID between the relay UE and the UE-RX. The relay UE may apply the SLRB association information. The LCID may be included in the SLRB parameter associated with the transmitter and the receiver. The methods disclosed in the aforementioned embodiments and modifications should be applied to the methods for configuring, associating, and notifying the SLRB.

This enables the relay UE to appropriately relay data.

When relaying data between the RLC and the PDCP, the relay UE may configure only the RLC bearer. When relaying data between the RLC and the PDCP, the relay UE may be allowed to configure only the RLC bearer. When relaying data between the RLC and the PDCP, the relay UE need not configure the PFI. When relaying data between the RLC and the PDCP, the relay UE need not configure the SDAP. When relaying data between the RLC and the PDCP, the relay UE need not configure the PDCP.

When the relay UE relays data between the RLC and the PDCP, the SLRB configuration to be notified from the UE-TX to the relay UE may be limited to information on the RLC bearer or information on configuration of layers lower than the RLC.

When relaying data between the RLC and the PDCP, the relay UE relays the data without routing the SDAP and the PDCP. Thus, when the configuration of the SDAP or the PDCP between the UE-TX and the relay UE is changed from that between the relay UE and the UE-RX, the relay UE cannot establish the association. Consequently, the UE-RX cannot normally receive the data from the UE-TX. Here, the aforementioned method saves the relay UE from establishing the association when the relay UE relays data between the RLC and the PDCP, and enables the UE-RX to normally receive the data from the UE-TX.

Data may include information indicating relaying the data. Data may include information indicating whether to relay the data. The UE-TX includes, in data to be transmitted to the relay UE, information indicating relaying the data, and transmits the information. When the data received from the UE-TX includes the information indicating relaying the data, the relay UE transmits the data to the UE-RX.

The information indicating relaying the data may be, for example, configured in a header of the SDAP, a header of the PDCP, a header of the RLC, or a header of the MAC, or may be included in the SCI. The information indicating relaying the data may be configured separately from existing information. Separating the information from the existing information enables reduction in malfunctions in a relay procedure. Consequently, the relay UE can determine whether to relay data received from the UE-TX.

How to configure the information indicating relaying the data may be appropriately combined with the aforementioned methods. This enables the relay UE to clearly determine whether to relay the data. Malfunctions in the relay procedure can be reduced.

The method disclosed in the fifth modification of the fourth embodiment enables the relay UE to map data received from the UE-TX to the SLRB for transmission to the UE-RX. Thus, the relay UE can relay, to the UE-RX, data that needs to be relayed. This can reduce malfunctions in the relay procedure in the relay UE, and enhance the reliability in the UE-to-UE indirect communication through the relay UE. Furthermore, the relay UE can establish a mapping between appropriate SLRBs. This can satisfy the QoS required for the service to be implemented from the UE-TX to the UE-RX.

### The sixth modification of the fourth embodiment

The sixth modification of the fourth embodiment discloses another method for solving the problem described in the fifth modification of the fourth embodiment.

Information indicating whether to use the SLRB configuration established for the SL communication between the UE-TX and the relay UE is provided as the SLRB configuration for the SL communication between the relay UE and the UE-RX. The information can be represented by, for example, 1 bit (can be reflected in 1 bit). For example, when a state of the bit is represented by "1", the bit indicates that the SLRB configuration established for the SL communication between the UE-TX and the relay UE is used as the SLRB configuration for the SL communication between the relay UE and the UE-RX. For example, when a state of the bit is represented by "0", the bit indicates that the SLRB configuration established for the SL communication between the UE-TX and the relay UE is not used as the SLRB configuration for the SL communication between the relay UE and the UE-RX. Information indicating (reflecting) whether to use the SLRB configuration established for the SL communication between the UE-TX and the relay UE as the SLRB configuration for the SL communication between the relay UE and the UE-RX may be referred to reflecting information.

Six specific examples of a method for configuring the reflecting information are described below.
(1) The reflecting information is configured in the SDAP PDU. For example, the reflecting information may be configured in a SDAP PDU header.
(2) The reflecting information is configured in the PDCP PDU. For example, the reflecting information may be configured in a PDCP PDU header.
(3) The reflecting information is configured in the RLC PDU. For example, the reflecting information may be configured in an RLC PDU header.
(4) The reflecting information is configured in the MAC PDU. For example, the reflecting information may be configured in a MAC PDU header.
(5) The SCI includes the reflecting information.
(6) Combinations of (1) to (5) above

These configuring methods may be statically predetermined, for example, in a standard. Alternatively, the CN node may notify the UE-TX of these configuring methods in advance. Alternatively, the RAN node may notify the UE-TX of these configuring methods in advance. Alternatively, these configuring methods may be pre-configured in the UE-TX.

When the reflecting information is configured in the SDAP PDU in (1) or in the PDCP PDU in (2), the relay UE can recognize the reflecting information through the SDAP or the PDCP. This is appropriate when data is relayed in layers higher than the SDAP. This is appropriate for, for example, the L3 relay. When the reflecting information is configured in the RLC PDU in (3), the MAC PDU in (4), or the SCI in (5), the relay UE can recognize the reflecting information through the RLC layer, the MAC layer, or the PHY layer. This is appropriate when data is relayed in layers higher than the RLC layer. This is appropriate for, for example, the L3 relay or the L2 relay.

The UE-TX configures the reflecting information in the service data to be transmitted to the UE-RX through the relay UE. For example, when the SLRB configuration established for the SL communication between the UE-TX and the relay UE is used as the SLRB configuration for the SL communication between the relay UE and the UE-RX, the UE-TX sets the reflecting information to "1". When the SLRB configuration established for the SL communication between the UE-TX and the relay UE is not used as the SLRB configuration for the SL communication between the relay UE and the UE-RX, the UE-TX sets the reflecting information to "0".

When the reflecting information is set to "0", for example, the relay UE may use the SLRB configuration established by the relay UE as the SLRB configuration for the SL communication between the relay UE and the UE-RX. For example, the method disclosed in the first modification of the fourth embodiment may be appropriately applied.

The relay UE can configure the SLRB for the SL communication between the relay UE and the UE-RX, using the reflecting information configured in the service data received from the UE-TX. When the reflecting information is set to "1", the relay UE configures the SLRB for the SL communication between the relay UE and the UE-RX, using the SLRB configuration established for the SL communication between the UE-TX and the relay UE. The relay UE transmits the service data received from the UE-TX to the UE-RX, using the SLRB configured for the SL communication between the relay UE and the UE-RX.

This enables the UE-to-UE indirect communication between the UE-TX and the UE-RX through the relay UE. The UE-TX can transmit the generated service data to the UE-RX through the relay UE. The UE-RX can receive the service data from the UE-TX through the relay UE.

The UE-TX notifies the relay UE of the SLRB configuration established for the SL communication between the UE-TX and the relay UE. The UE-TX notifies the relay UE of not only the SLRB parameter associated with the transmitter and the receiver but also the SLRB parameter associated with only the transmitter. Furthermore, the UE-TX may notify the SLRB parameter associated with only the receiver. This enables the relay UE to configure the SLRB for the SL communication with the UE-TX, and the SLRB for the SL communication between the relay UE and the UE-RX.

The relay UE should configure the SLRB for the SL communication between the relay UE and the UE-RX, after receiving the SLRB configuration between the UE-TX and the relay UE. The relay UE may configure the SLRB when receiving the service data from the UE-TX and the reflecting information associated with the service data (when "1" is set in the aforementioned example).

The relay UE notifies the UE-RX of the SLRB configuration established for the SL communication between the UE-TX and the relay UE. The relay UE may notify only the SLRB parameter associated with the transmitter and the receiver as the SLRB configuration. Consequently, the UE-RX can configure the SLRB for the SL communication between the relay UE and the UE-RX.

The method disclosed in the sixth modification of the fourth embodiment may be applied to the method disclosed in the fourth embodiment. This can produce the same advantages as previously described.

The method disclosed in the sixth modification of the fourth embodiment enables the relay UE to transmit the service data from the UE-TX to the UE-RX using the SLRB configuration between the UE-TX and the relay UE, upon receipt of the reflecting information associated with the service data from the UE-TX. Consequently, the QoS required for the service can be satisfied in the SL communication between the relay UE and the UE-RX. Furthermore, the reflecting information can simplify the relay procedure in the relay UE, and reduce malfunctions. This can enhance the reliability in the UE-to-UE indirect communication through the relay UE.

Another example method for configuring the reflecting information is disclosed. The PC5-RRC message may include the reflecting information. The UE-TX notifies the relay UE of the reflecting information via the PC5-RRC signaling. The aforementioned method should be applied to the method for configuring the reflecting information. The UE-TX may associate the reflecting information with information for identifying a service using the SL communication in which the reflecting information is configured, and notify the association.

For example, the UE-TX may associate the reflecting information with SLRB configuration association information for the SL communication, the PFI, or the QoS relevant information, and notify the association. The relay UE can configure the SLRB for the SL communication between the relay UE and the UE-RX for the service, using the reflecting information received from the UE-TX. This can reduce the amount of information to be notified to the relay UE more than those of the specific examples.

The reflecting information may be semi-statically changed. The UE-TX may semi-statically change the reflecting information for the relay UE. The UE-TX can notify the relay UE of change in the SLRB configuration through notification of the changed reflecting information. Upon receipt of the changed reflecting information, the relay UE changes the method for configuring the SLRB. This enables the relay UE to flexibly configure the SLRB for each SL communication.

The SLRB configuration established for the SL communication from the UE-TX to the UE-RX may be used as the SLRB configuration for the SL communication from the UE-RX to the UE-TX. The SLRB configuration established for the SL communication from the relay UE to the UE-RX may be used as the SLRB configuration for the SL communication from the UE-RX to the relay UE. The SLRB configuration established for the SL communication from the UE-TX to the relay UE may be used as the SLRB configuration for the SL communication from the relay UE to the UE-TX.

Information indicating whether to use the SLRB configuration established for the SL communication from the UE-TX to the UE-RX may be provided as the SLRB configuration for the SL communication from the UE-RX to the UE-TX. Information indicating whether to use the SLRB configuration established for the SL communication from the relay UE to the UE-RX may be provided as the SLRB configuration for the SL communication from the UE-RX to the relay UE. Information indicating whether to use the SLRB configuration established for the SL communication from the UE-TX to the relay UE may be provided as the SLRB configuration for the SL communication from the relay UE to the UE-TX.

The reflecting information may be appropriately applied as these pieces of information. The reflecting information may be provided dedicatedly at each link.

The SLRB configuration for each link may be combined with the reflecting information.

For example, the UE-RX configures the reflecting information between the UE-TX and the relay UE in the service data to be transmitted to the relay UE. When the reflecting information between the UE-TX and the relay UE is set to "1", the relay UE uses the SLRB configuration established for the SL communication from the UE-TX to the relay UE as the SLRB configuration for the SL communication from the relay UE to the UE-TX.

For example, the relay UE configures the reflecting information between the relay UE and the UE-RX in the service data to be transmitted to the UE-RX. When the reflecting information between the relay UE and the UE-RX is set to "1", the UE-RX configures the SLRB for the SL communication with the relay UE, using the SLRB configuration established for the SL communication from the relay UE to the UE-RX.

Consequently, combination of the SLRB configuration for each link with the reflecting information enables the UE-RX to flexibly configure the SLRB. Even when the SLRB is not configured from the UE-RX to the relay UE or from the relay UE to the UE-TX, the SLRB for each link can be configured. This can reduce the amount of signaling for configuring the SLRB. In the UE-to-UE indirect communication through the relay UE, the relay procedure in the bidirectional communication can be simplified, and malfunctions can be reduced. This can enhance the reliability in the UE-to-UE indirect communication through the relay UE.

The aforementioned method may be applied not only to the UE-to-UE indirect communication but also to the UE-to-UE direct communication. The UE-to-UE direct communication can produce the same advantages as previously described.

### The seventh modification of the fourth embodiment

What is previously disclosed is that the PC5 policy need not be provided to the relay UE. The seventh modification of the fourth embodiment discloses another method.

The PC5 policy is provided to the relay UE. For example, the CN or the RAN provides the PC5 policy to the relay UE. For example, the PC5 policy may be pre-configured in the relay UE.

A QoS policy to be provided to the relay UE may be a QoS policy of a service in which the relay UE can perform the relay procedure. A QoS policy of a service in which the relay UE cannot perform the relay procedure need not be provided.

For example, in a registration procedure to be performed by the relay UE with the CN, the CN may provide the relay UE with a QoS policy of a service in which the relay UE can perform the relay procedure. For example, in an authentication procedure to be performed by the relay UE with the CN, the CN may provide the relay UE with a QoS policy of a service in which the relay UE can perform the relay procedure. The CN may notify the relay UE of the QoS policy through the RAN node.

The relay UE may configure the SLRB between the relay UE and the UE-RX, using the PC5 policy provided to the relay UE and the PC5 QoS parameter notified from the UE-TX. The relay UE may configure the SLRB so that the PC5 QoS parameter is satisfied.

The UE-TX may notify the relay UE of information on the service to be implemented with the UE-RX. The information on the service may be a service type, a request for the service, an identifier of a transmission target UE, or an identifier of a transmission source UE. The relay UE calculates one or more QoS parameters required for the service, using the QoS policy or the information on the service.

In the presence of a PC5 QoS flow for the SL communication with the UE-RX which corresponds to the PC5 QoS parameter, the relay UE updates the PC5 QoS flow to suit the PC5 QoS parameter. In the absence of the PC5 QoS flow for the SL communication with the UE-RX which corresponds to the PC5 QoS parameter, the relay UE provides a new PC5 QoS flow to suit the PC5 QoS parameter. An identifier of the PC5 QoS flow (may be referred to as a PFI) for identifying the PC5 QoS flow may be newly configured.

The relay UE calculates a PC5 QoS rule for mapping service data to the configured PC5 QoS flow. The PC5 QoS rule may include a PC5 packet filter. The relay UE may store, for the UE-RX, the PC5 QoS parameter, a V2X service type, and the PC5 QoS rule.

The V2X layer of the relay UE may calculate the PC5 QoS parameter, configure the PC5 QoS flow, configure the PFI, and calculate the PC5 QoS rule.

The PC5 QoS flow is mapped to the SLRB to be used for the SL communication. The SDAP layer of the relay may perform the mapping. The relay UE calculates the SLRB configuration for the SL communication between the relay UE and the UE-RX, using the PC5 QoS parameter calculated by the relay UE using the information on the service received from the UE-TX. The relay UE may configure the SLRB so that the PC5 QoS parameter is satisfied.

The relay UE transmits the service data received from the UE-TX to the UE-RX, using the SLRB between the relay UE and the UE-RX which has been configured by the relay UE. The methods disclosed in the aforementioned embodiments and modifications should be appropriately applied to, for example, the method for configuring the DST L2ID or the PFI, and the method for the relay UE to relay data.

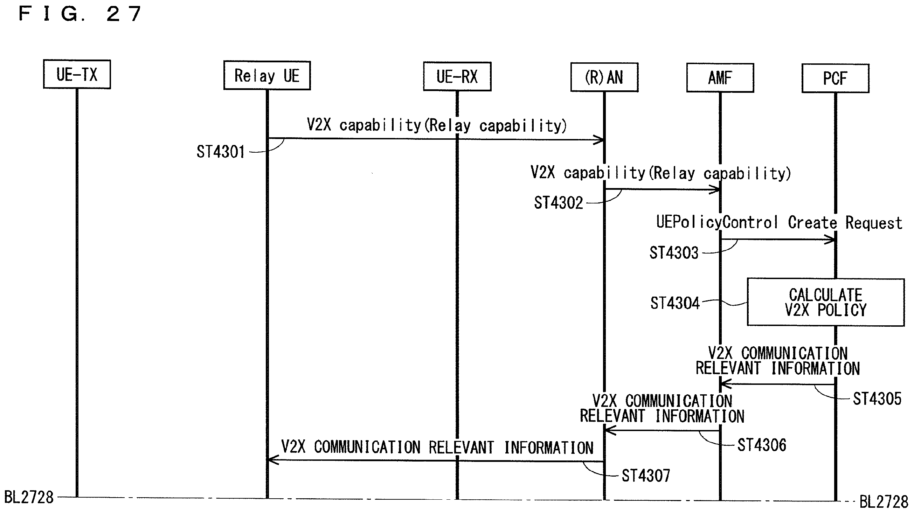

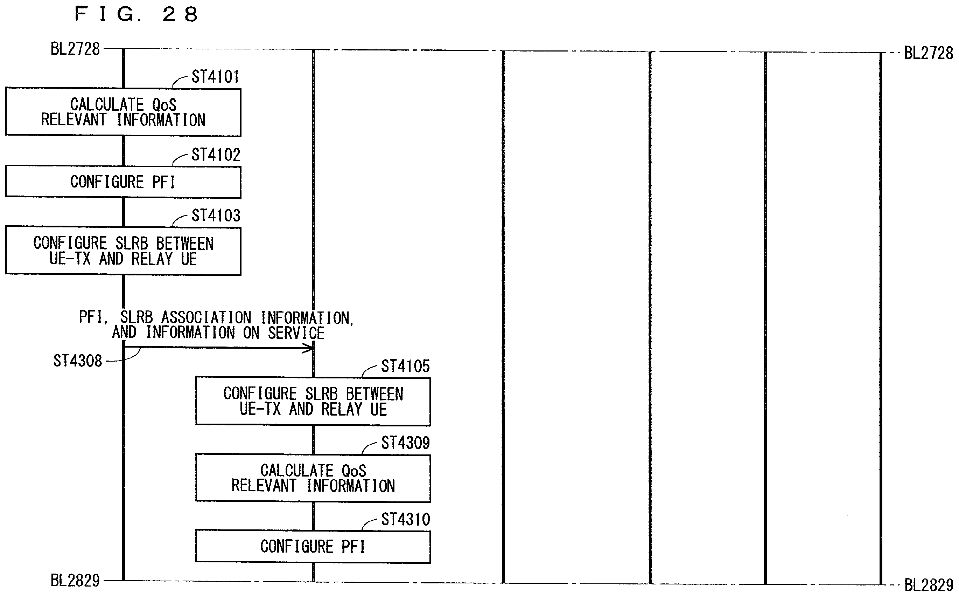

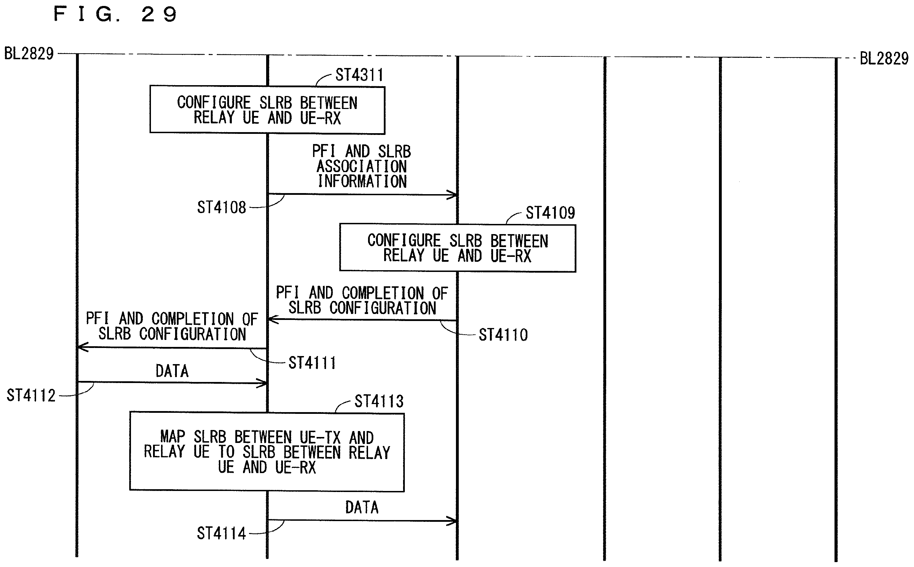

FIGS. 27 to 29 are sequence diagrams illustrating an example method for configuring the QoS and the SLRB in the UE-to-UE indirect communication through the relay UE according to the seventh modification of the fourth embodiment. FIGS. 27 to 29 are connected across locations of borders BL2728 and BL2829. FIGS. 27 to 29 illustrate a case where the V2X service has been generated in the UE-TX. The UE-TX transmits the service data to the UE-RX through the relay UE. In FIGS. 27 to 29, the same step numbers are applied to the steps common to those in FIG. 25, and the common description thereof is omitted.

In Steps ST4301 to ST4307, the relay UE and the CN perform processes for providing the QoS policy. For example, the registration procedure may be used in the processes for providing the QoS policy. In Step ST4301, the relay UE notifies a RAN node (may be a gNB) of the V2X capability indicating supporting a function of relaying the V2X service. In Step ST4302, the RAN node notifies the AMF of the V2X capability of the relay UE, together with an identifier of the relay UE. This enables the AMF to recognize that the relay UE has the V2X capability.

In Step ST4303, the AMF requests the PCF to authenticate the relay UE. The AMF notifies a request for providing the QoS policy of the relay UE together with the request for authentication. In Step ST4304, when authenticating the relay and determining that the relay has the function of relaying the V2X service, the PCF calculates a service that the relay can relay, and a QoS policy corresponding to the service.

In Step ST4305, the PCF notifies the AMF of the V2X communication relevant information of the relay UE. The PCF should notify, as the V2X communication relevant information, information relevant to the service for the relay UE, and the QoS policy for the service both of which have been calculated by the PCF. In Step ST4306, the AMF notifies the RAN node to be connected to the relay UE of the V2X communication relevant information of the relay UE. In Step ST4307, the RAN node notifies the relay UE of the V2X communication relevant information of the relay UE. Consequently, the relay UE can receive the service that can be relayed, and the QoS policy corresponding to the service.

In Step ST4308, the UE-TX notifies the relay UE of the configured PFI and SLRB association information, and information on the service. The UE-TX should notify the SLRB parameter associated with the transmitter and the receiver as the SLRB association information. In Step ST4105, the relay UE configures the SLRB for the SL communication between the UE-TX and the relay UE, using the SLRB association information between the UE-TX and the relay UE which has been received from the UE-TX.

In Step ST4309, the relay UE calculates the QoS relevant information, using the information on the service which has been received from the UE-TX, and using the service that can be relayed and the QoS policy corresponding to the service which have been received from the RAN node in Step ST4307. In Step ST4310, the relay UE configures the PFI using the QoS relevant information. As described above, for example, in the absence of the PC5 QoS flow that suits the PC5 QoS parameter, the relay UE provides a new PC5 QoS flow to configure the PFI of the PC5 QoS flow.

In Step ST4311, the relay UE configures the SLRB for the SL communication between the relay UE and the UE-RX. The relay UE should calculate this SLRB configuration, using the QoS relevant information calculated by the relay UE. FIGS. 27 to 29 disclose a case where the relay UE is served by (may be referred to as in coverage (IC) of) the gNB. When the relay UE is out of the coverage of the gNB, the relay UE should calculate the SLRB configuration from the PC5 QoS parameter and information on the SLRB configuration which have been pre-configured in the relay UE, using the QoS relevant information calculated by the relay UE. The relay UE applies the calculated SLRB configuration to the SL communication between the relay UE and the UE-RX.

Consequently, the PC5 policy can be provided to the relay UE. Furthermore, the relay UE can configure the SLRB for the SL communication between the relay UE and the UE-RX, using the PC5 policy.

The method disclosed in the seventh modification of the fourth embodiment can configure the SLRB between the relay UE and the UE-RX so that the QoS required for the service is satisfied. In the UE-to-UE indirect communication through the relay UE, the QoS required for the service using the communication can be satisfied.

Since the relay UE can calculate the QoS relevant information and configure the SLRB between the relay UE and the UE-RX, the relay UE can establish the configuration according to a load state or the resource usage in the relay UE, or a radio propagation state with the UE-RX. This can increase the communication quality of the SL communication from the relay UE to the UE-RX. Consequently, the UE-to-UE indirect communication through the relay UE can be performed with high reliability.

### The eighth modification of the fourth embodiment

A method for configuring the SLRB of each link in the UE-to-UE indirect communication through the relay UE is disclosed.

A method for configuring the SLRB between the UE-TX and the relay UE is disclosed. The UE-TX in a connected state (RRC_Connected state) within the coverage of the gNB notifies the gNB of the QoS relevant information required for the service to be implemented between the UE-TX and the UE-RX. The UE-TX may notify the PC5 QoS parameter. The UE-TX may notify the PC5 QoS profile. The UE-TX notifies the configured PFI together with the QoS relevant information. The gNB configures the SLRB using the QoS relevant information received from the UE-TX. The gNB notifies the UE-TX of the configured SLRB and the corresponding PFI. The gNB may give the notification via the RRC signaling in the Uu.

The UE-TX should apply the SLRB configuration received from the gNB, to the SLRB between the UE-TX and the relay UE. Consequently, the UE-TX can configure the SLRB appropriate for the service to be implemented between the UE-TX and the UE-RX.

Another method is disclosed.

The gNB includes, in the broadcast information, the QoS relevant information and the SLRB configuration corresponding to the QoS relevant information, and broadcasts these. The number of pieces of the QoS relevant information is not limited to one but may be two or more. The number of pieces of information on the SLRB configuration is not limited to one but may be two or more. The UE-TX in an idle state (an RRC_Idle state) or an inactive state (an RRC_Inactive state) within the coverage of the gNB receives the QoS relevant information and the SLRB configuration corresponding to the QoS relevant information both of which are broadcast from the gNB. The UE-TX calculates the SLRB configuration between the UE-TX and the relay UE from the QoS relevant information required for the service to be implemented between the UE-TX and the UE-RX, using the received pieces of information.

The UE-TX should apply the SLRB configuration received from the gNB, to the SLRB between the UE-TX and the relay UE. Consequently, the UE-TX can configure the SLRB appropriate for the service to be implemented between the UE-TX and the UE-RX.

The RAN node should have, in advance, the QoS relevant information and information on the SLRB configuration corresponding to the QoS relevant information. For example, the CN node may provide these pieces of information. For example, the PCF may provide these pieces of information through the AMF. Alternatively, the OAM may provide these pieces of information. For example, these pieces of information may be provided through the AMF.

Another method is disclosed.

The QoS relevant information and the SLRB configuration corresponding to the QoS relevant information are pre-configured in the UE-TX. The number of pieces of the QoS relevant information is not limited to one but may be two or more. The number of pieces of information on the SLRB configuration is not limited to one but may be two or more. The UE-TX out of the coverage of the gNB calculates the SLRB configuration between the UE-TX and the relay UE from the QoS relevant information required for the service to be implemented between the UE-TX and the UE-RX, using the pre-configured pieces of information.

For example, the CN node may provide the QoS relevant information and information on the SLRB configuration corresponding to the QoS relevant information both of which are to be pre-configured in the UE-TX. These pieces of information may be provided, for example, in an authentication procedure when the UE-TX implements the V2X service. These pieces of information may be provided through the PCF, the AMF, or the RAN node.

The QoS relevant information and the SLRB configuration corresponding to the QoS relevant information which are pre-configured in the UE-TX may be updated to the QoS relevant information and the SLRB configuration corresponding to the QoS relevant information which have been received in the aforementioned method from the gNB in coverage of which the UE-TX has entered the most recently. Consequently, the QoS relevant information and the SLRB configuration corresponding to the QoS relevant information can be updated to new configurations. The SLRB can be configured based on a newer state.

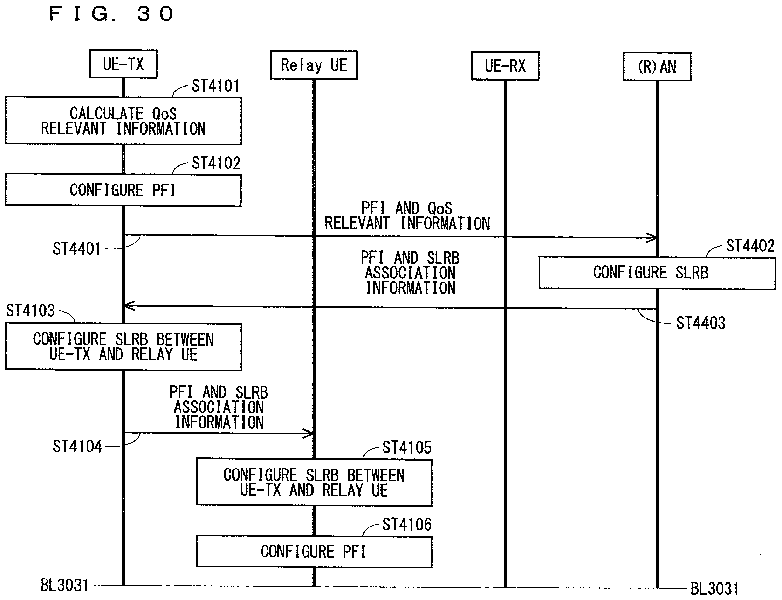

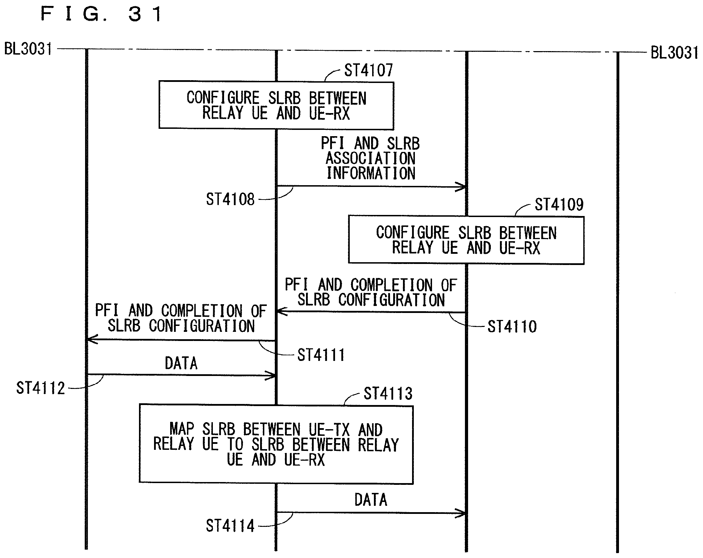

FIGS. 30 and 31 are sequence diagrams illustrating the first example method for configuring the QoS and the SLRB in the UE-to-UE indirect communication through the relay UE according to the eighth modification of the fourth embodiment. FIGS. 30 and 31 are connected across a location of a border BL3031. FIGS. 30 and 31 illustrate a case where the V2X service has been generated in the UE-TX. The UE-TX transmits the service data to the UE-RX through the relay UE. FIGS. 30 and 31 disclose a case where the UE-TX is in a connected state with the gNB. In FIGS. 30 and 31, the same step numbers are applied to the steps common to those in FIG. 25, and the common description thereof is omitted.

In Step ST4401, the UE-TX notifies the gNB of the QoS relevant information calculated from the service to be implemented between the UE-TX and the UE-RX, and the configured PFI. In Step ST4402, the gNB configures the SLRB using the QoS relevant information received from the UE-TX. In Step ST4403, the gNB notifies the UE-TX of the configured SLRB and the corresponding PFI. In Step ST4103, the UE-TX applies the SLRB configuration received from the gNB, to the SLRB between the UE-TX and the relay UE.

Consequently, the UE-TX can configure the SLRB appropriate for the service to be implemented between the UE-TX and the UE-RX, as the SLRB for the SL communication between the UE-TX and the relay UE.

The aforementioned method may be applied to configuring the SLRB for the SL communication between the UE-TX and the UE-RX, which is to be disclosed in the tenth modification of the fourth embodiment. This can produce the same advantages as previously described.

A method for configuring the SLRB between the relay UE and the UE-RX is disclosed. The relay UE in a connected state (RRC_Connected state) within the coverage of the gNB notifies the gNB of the QoS relevant information. The QoS relevant information may be QoS relevant information calculated by the relay UE. Alternatively, the QoS relevant information may be QoS relevant information notified from the UE-TX to the relay UE. The relay UE may notify the PC5 QoS parameter calculated by the relay UE or the PC5 QoS parameter notified from the UE-TX to the relay UE. The relay UE may notify the PC5 QoS profile calculated by the relay UE or the PC5 QoS profile notified from the UE-TX to the relay UE. The relay UE notifies the configured PFI together with the QoS relevant information. The gNB configures the SLRB using the QoS relevant information received from the relay UE. The gNB notifies the relay UE of the configured SLRB and the corresponding PFI. The gNB may give the notification via the RRC signaling in the Uu.

The relay UE should apply the SLRB configuration received from the gNB, to the SLRB between the relay UE and the UE-RX. Consequently, the relay UE can configure the SLRB appropriate for the service to be implemented between the UE-TX and the UE-RX.

Another method is disclosed.

The gNB includes, in the broadcast information, the QoS relevant information and the SLRB configuration corresponding to the QoS relevant information, and broadcasts these. The number of pieces of the QoS relevant information is not limited to one but may be two or more. The number of pieces of information on the SLRB configuration is not limited to one but may be two or more. The relay UE in an idle state (an RRC_Idle state) or an inactive state (an RRC_Inactive state) within the coverage of the gNB receives the QoS relevant information and the SLRB configuration corresponding to the QoS relevant information both of which are broadcast from the gNB. The relay UE calculates the SLRB configuration between the relay UE and the UE-RX from the QoS relevant information calculated by the relay UE or the QoS relevant information notified from the UE-TX to the relay UE, using the received pieces of information.

The relay UE should apply the SLRB configuration received from the gNB, to the SLRB between the relay UE and the UE-RX. Consequently, the relay UE can configure the SLRB between the relay UE and the UE-RX which is appropriate for the service to be implemented between the UE-TX and the UE-RX.

The RAN node should have, in advance, the QoS relevant information and information on the SLRB configuration corresponding to the QoS relevant information. For example, the CN node may provide these pieces of information. For example, the PCF may provide these pieces of information through the AMF. Alternatively, the OAM may provide these pieces of information. For example, these pieces of information may be provided through the AMF.

Another method is disclosed.

The QoS relevant information and the SLRB configuration corresponding to the QoS relevant information are pre-configured in the relay UE. The number of pieces of the QoS relevant information is not limited to one but may be two or more. The number of pieces of information on the SLRB configuration is not limited to one but may be two or more. The relay UE out of the coverage of the gNB calculates the SLRB configuration between the relay UE and the UE-RX from the QoS relevant information calculated by the relay UE or the QoS relevant information notified from the UE-TX to the relay UE, using the pre-configured pieces of information.

For example, the CN node may provide the QoS relevant information and information on the SLRB configuration corresponding to the QoS relevant information both of which are to be pre-configured in the relay UE. These pieces of information may be provided, for example, in an authentication procedure when the relay UE implements the V2X service as a relay. These pieces of information may be provided through the PCF, the AMF, or the RAN node.

The QoS relevant information configured in the relay UE and the SLRB configuration corresponding to the parameter may be updated to the QoS relevant information and the SLRB configuration corresponding to the parameter which have been received in the aforementioned method from the gNB in coverage of which the relay UE has entered the most recently. Consequently, the QoS relevant information and the SLRB configuration corresponding to the QoS relevant information can be updated to new configurations. The SLRB can be configured based on a newer state.

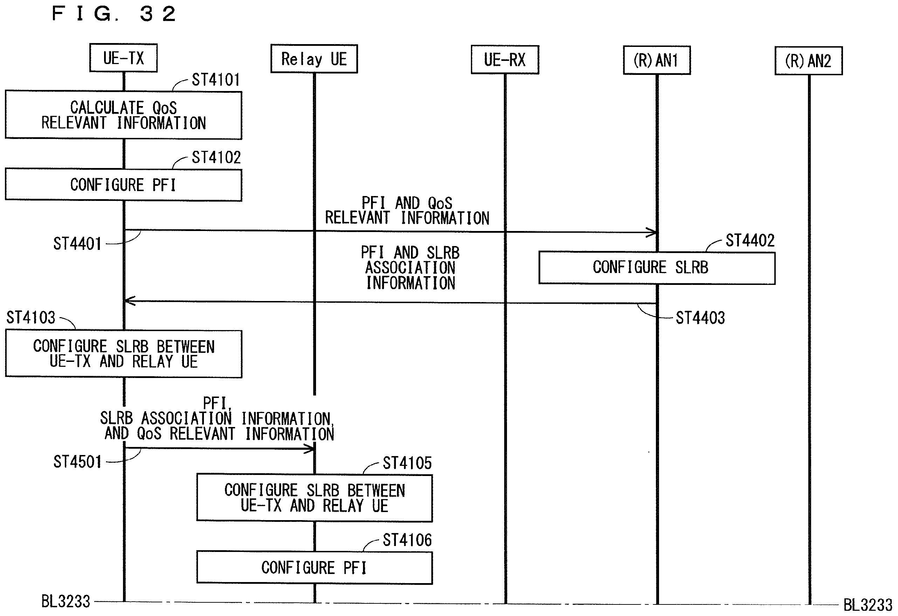

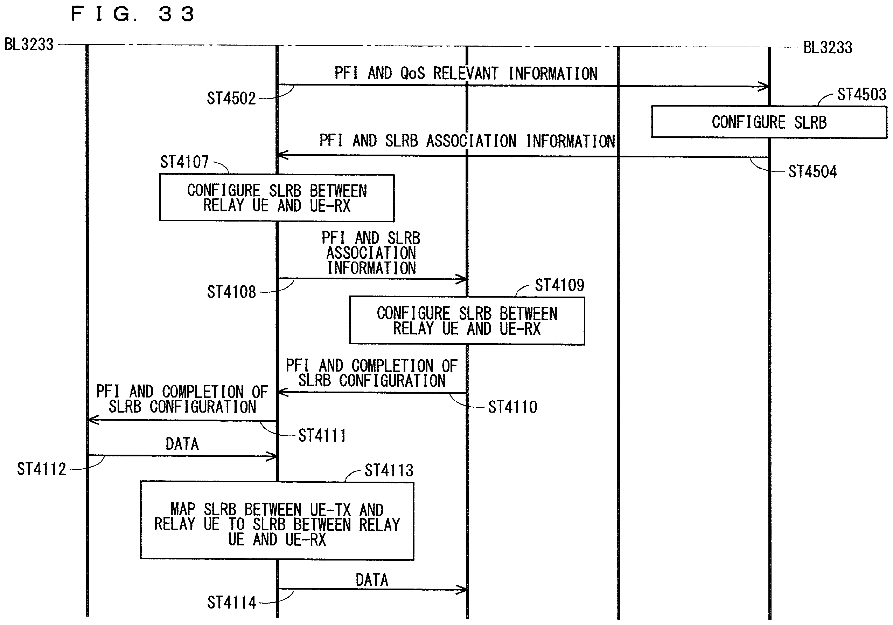

FIGS. 32 and 33 are sequence diagrams illustrating the second example method for configuring the QoS and the SLRB in the UE-to-UE indirect communication through the relay UE according to the eighth modification of the fourth embodiment. FIGS. 32 and 33 are connected across a location of a border BL3233. FIGS. 32 and 33 illustrate a case where the V2X service has been generated in the UE-TX. The UE-TX transmits the service data to the UE-RX through the relay UE. FIGS. 32 and 33 disclose a case where the UE-TX and the relay UE are in a connected state with respective gNBs. FIGS. 32 and 33 disclose a case where the gNB to which the UE-TX is connected is different from that to which the relay UE is connected. In FIGS. 32 and 33, the same step numbers are applied to the steps common to those in FIGS. 25, 30, and 31, and the common description thereof is omitted.

In Steps ST4401 to ST4403, the UE-TX performs processes for obtaining, from a gNB 1, the SLRB configuration between the UE-TX and the relay UE.

In Step ST4501, the UE-TX notifies the relay UE of the QoS relevant information calculated from the service to be implemented between the UE-TX and the UE-RX, and the configured PFI and SLRB association information.

In Step ST4502, the relay UE notifies a gNB 2 of the QoS relevant information received from the UE-TX and the configured PFI. In Step ST4503, the gNB configures the SLRB using the QoS relevant information received from the relay UE. In Step ST4504, the gNB notifies the relay UE of the configured SLRB and the corresponding PFI. In Step ST4107, the relay UE applies the SLRB configuration received from the gNB 2, to the SLRB between the relay UE and the UE-RX.

The aforementioned method is applicable when the gNB 1 to which the UE-TX is connected is identical to the gNB 2 to which the relay UE is connected. When the gNB 1 is identical to the gNB 2 and the PFI and/or QoS relevant information received from the UE-TX is identical to the PFI and/or QoS relevant information received from the relay UE, the SLRB configuration for the UE-TX may be identical to the SLRB configuration for the relay UE.

Consequently, the relay UE can configure the SLRB appropriate for the service to be implemented between the UE-TX and the UE-RX as the SLRB for the SL communication between the relay UE and the UE-RX.

What is previously disclosed is the method for the RAN node to configure the SLRB between the UE-TX and the relay UE and the SLRB between the relay UE and the UE-RX. For example, the UE-TX notifies the RAN node of the QoS relevant information. Then, the RAN node configures the SLRB between the UE-TX and the relay UE, using the QoS relevant information. For example, the relay UE notifies the RAN node of the QoS relevant information calculated by its own UE or the QoS relevant information received from the UE-TX. Then, the RAN node configures the SLRB between the relay UE and the UE-RX, using the QoS relevant information. The RAN node to which the UE-TX is connected may be identical to or different from that to which the relay UE is connected.

When the QoS relevant information is notified between the UE-TX and the RAN node, between the UE-TX and the relay UE, and between the relay UE and the RAN node, the amount of information required for the notification between these nodes increases. This also increases the radio resources required for the communication between these nodes.

Here, a method for solving such a problem is disclosed.

The relay UE notifies the RAN node to which the relay UE is connected of not the QoS relevant information but the PFI. The UE-TX notifies the relay UE of the configured PFI. The relay UE notifies the RAN node to which the relay UE is connected of the PFI received from the UE-TX.

The RAN node notifies surrounding RAN nodes of the PFI and the QoS relevant information which have been notified from the UE-TX being served thereby. The RAN node may notify the PFI and the QoS relevant information via an interface between base stations, for example, the Xn interface. The RAN node may notify the PFI and the QoS relevant information via the Xn signaling. Alternatively, the RAN node may notify the PFI and the QoS relevant information through the AMF. This enables the RAN node to recognize the PFI and the QoS relevant information which have been configured by a UE-TX being served by a surrounding RAN node.

The RAN node to which the relay UE is connected calculates the QoS relevant information corresponding to the PFI received from the relay UE, using the PFI received from the relay UE, and the PFI and the QoS relevant information which have been received from the surrounding RAN node. The RAN node configures the SLRB using the calculated QoS relevant information. The RAN node notifies the relay UE of the established SLRB configuration. The RAN node may notify the PFI together with the SLRB configuration. Consequently, the relay UE can receive the SLRB configuration corresponding to the PFI notified from the UE-TX.

The relay UE configures the SLRB received from the RAN node as the SLRB between the relay UE and the UE-RX. Consequently, the relay UE can configure the SLRB between the relay UE and the UE-RX so that the QoS required for the service to be implemented between the UE-TX and the UE-RX is satisfied.

The UE identifier of its own UE may be notified from the UE-TX to the RAN node, from the UE-TX to the relay UE, from the relay UE to the RAN node, and from the RAN node to the surrounding RAN node together with the PFI. In addition to or instead of it, the DST L2ID and/or the SRC L2ID corresponding to the PFI may be notified.

Consequently, the RAN node to which the relay UE is connected can recognize the UE-TX corresponding to the PFI notified from the surrounding RAN node or the DST L2ID and/or the SRC L2ID in which the PFI is configured. Application of the aforementioned information can reduce malfunctions, in processes for the RAN node to which the relay UE is connected for calculating the QoS relevant information corresponding to the PFI received from the relay UE, using the PFI received from the relay UE, and the PFI and the QoS relevant information which have been received from the surrounding RAN node.

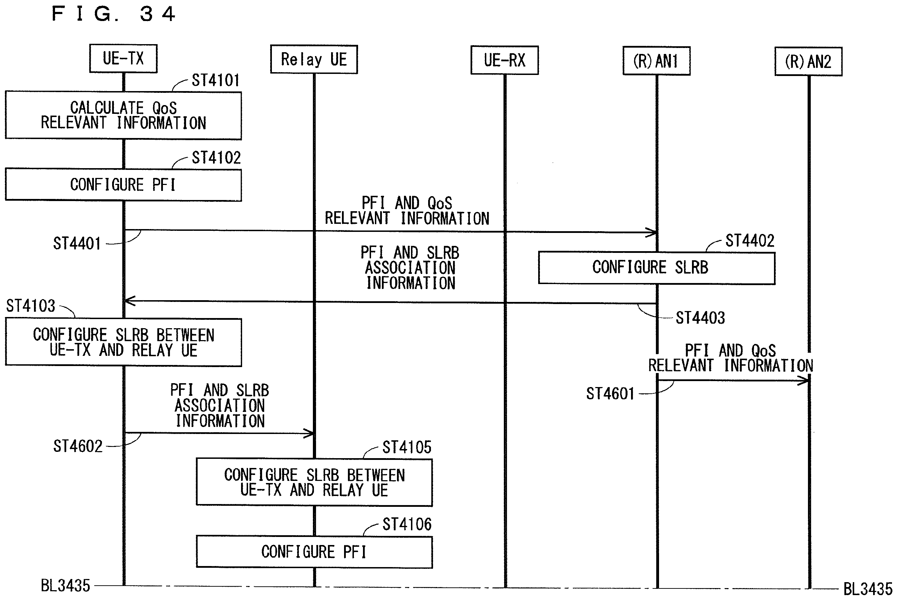

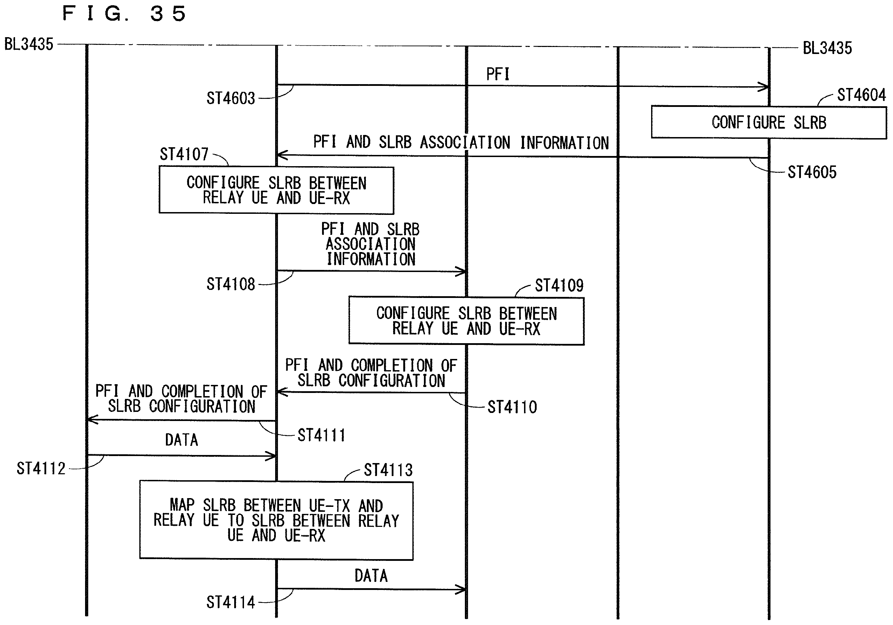

FIGS. 34 and 35 are sequence diagrams illustrating the third example method for configuring the QoS and the SLRB in the UE-to-UE indirect communication through the relay UE according to the eighth modification of the fourth embodiment. FIGS. 34 and 35 are connected across a location of a border BL3435. FIGS. 34 and 35 illustrate a case where the V2X service has been generated in the UE-TX. The UE-TX transmits the service data to the UE-RX through the relay UE. FIGS. 34 and 35 disclose a case where the UE-TX is in a connected state with the RAN node 1 and the relay UE is in a connected state with the RAN node 2. In FIGS. 34 and 35, the same step numbers are applied to the steps common to those in FIGS. 25, and 30 to 33, and the common description thereof is omitted.

In Step ST4601, the RAN node 1 notifies surrounding RAN nodes of the PFI and the QoS relevant information which have been received from the UE-TX. The surrounding RAN nodes include the RAN node 2. This enables the RAN node 2 to obtain the PFI and the QoS relevant information which have been configured by the UE-TX being served by the RAN node 1.

In Step ST4602, the UE-TX notifies the relay UE of the PFI and the SLRB association information between the UE-TX and the relay UE both of which the UE-TX has configured. The SLRB association information between the UE-TX and the relay UE may be the SLRB parameter associated with the transmitter and the receiver.

In Step ST4106, the relay UE configures the PFI received from the UE-TX as the PFI between the relay UE and the UE-RX.

In Step ST4603, the relay UE notifies the RAN node 2 to which the relay UE is connected of the configured PFI. In Step ST4604, the RAN node 2 calculates the QoS relevant information corresponding to the PFI received from the relay UE, using the PFI received from the relay UE and the PFI and the QoS relevant information both of which have been received from the RAN node 1 and configured by the UE-TX.

Furthermore, the RAN node 2 configures the SLRB using the calculated QoS relevant information. Consequently, the RAN node 2 can configure the SLRB corresponding to the PFI notified from the relay UE. The RAN node 2 can configure the SLRB corresponding to the PFI, even without being notified of the QoS relevant information from the relay UE.

In Step ST4605, the RAN node 2 notifies the relay UE of the PFI and the SLRB association information corresponding to the PFI. The SLRB association information may be all the parameters for configuring the SLRB. In Step ST4107, the relay UE configures the SLRB association information received from the RAN node 2 as the SLRB between the relay UE and the UE-RX.

Consequently, the relay UE can configure the SLRB appropriate for the service to be implemented between the UE-TX and the UE-RX as the SLRB for the SL communication between the relay UE and the UE-RX. This can save notification of the QoS relevant information between the UE-TX and the RAN node, between the UE-TX and the relay UE, and between the relay UE and the RAN node. This can also reduce the amount of information to be notified between these nodes, and avoid increasing the radio resources required for the communication between the nodes.

The RAN node 1 may notify the surrounding RAN nodes of the SLRB configuration. For example, the RAN node 1 notifies the surrounding RAN nodes of the SLRB configuration established in Step ST4402. The RAN node 1 may notify the surrounding RAN nodes of the SLRB configuration established in Step ST4402 together with the PFI. In Step ST4601, the RAN node 1 may notify the SLRB configuration instead of the QoS relevant information. The surrounding RAN nodes include the RAN node 2. This enables the RAN node 2 to obtain the SLRB configuration for the SL communication which has been established by the RAN node 1.

In Step ST4605, the RAN node 2 may notify the relay UE of the SLRB configuration received from the RAN node 1. This can produce the same advantages as previously described. Furthermore, this saves a procedure for the RAN node 2 to configure the SLRB from the QoS relevant information. Thus, the amount of processing in the RAN node 2 can be reduced. Moreover, malfunctions in the RAN node 2 can be reduced.

### The ninth modification of the fourth embodiment

The movement of the UE that performs the UE-to-UE direct communication in the SL causes the handover (HO) to the gNB to which the UE is connected. Although a method for configuring the SLRB for the SL communication when the UE is handed over is a problem, none discloses the method.

Here, a method for solving such a problem is disclosed.

A method for configuring the SLRB when the UE-TX is handed over from an HO-source gNB (may be referred to as a Source gNB (S-gNB)) to an HO-target gNB (may be referred to as a Target gNB (T-gNB)) in the UE-to-UE direct communication using the SL is disclosed.

The UE-TX and the HO-target gNB configure the SLRB after the UE-TX is handed over.

After the UE-TX is connected to the HO-target gNB through the HO procedure, the UE-TX notifies the HO-target gNB of the QoS relevant information calculated from the service to be implemented using the SL communication between the UE-TX and the UE-RX. The UE-TX may give the notification via the RRC signaling in the Uu. Upon receipt of the QoS relevant information from the connected UE-TX, the HO-target gNB can recognize the QoS relevant information required for the service to be implemented by the UE-TX. The HO-target gNB configures the SLRB using the QoS relevant information. The HO-target gNB notifies the UE-TX of information on the configured SLRB. The HO-target gNB may give the notification via the RRC signaling in the Uu.

The HO-target gNB notifies a part or all the parameters required for the SLRB configuration as the SLRB association information. The HO-target gNB may notify the UE-TX of not only the SLRB parameter associated with the transmitter and the receiver but also the SLRB parameter associated with only the transmitter. Furthermore, the HO-target gNB may notify the SLRB parameter associated with only the receiver. Consequently, the HO-target gNB can configure the SLRB for the SL communication between the UE-TX and the UE-RX.

The UE-TX receives the SLRB association information for the SL communication from the HO-target gNB. The UE-TX configures the SLRB for the SL communication, using the SLRB association information received from the HO-target gNB. Furthermore, the UE-TX notifies the UE-RX of the SLRB association information. The UE-TX may give the notification via the PC5-RRC signaling. The UE-TX may notify the UE-RX of only the SLRB parameter associated with the transmitter and the receiver as the SLRB association information to be notified. The UE-RX configures the SLRB for the SL communication, using the SLRB association information received from the UE-TX.

This enables the UE-TX to implement the service using the SL communication with the UE-RX after the UE-TX is handed over.

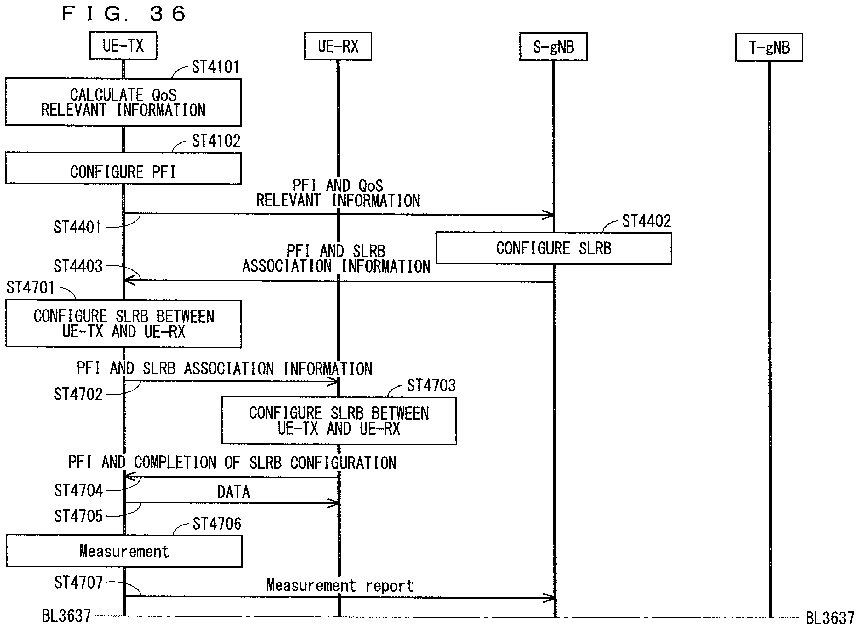

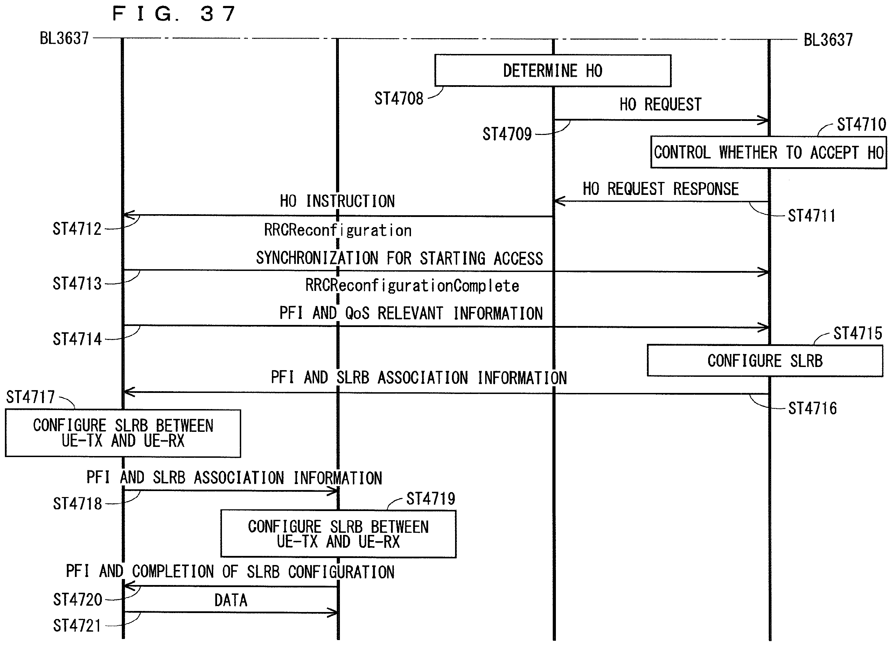

FIGS. 36 and 37 are sequence diagrams illustrating the first example method for configuring the SLRB when the UE is handed over in the UE-to-UE direct communication using the SL according to the ninth modification of the fourth embodiment. FIGS. 36 and 37 are connected across a location of a border BL3637. In FIGS. 36 and 37, the same step numbers are applied to the steps common to those in FIGS. 30 and 31, and the common description thereof is omitted.

The UE-TX is in a connected state with the S-gNB, and receives the SLRB association information from the S-gNB in Step ST4403. In Step ST4701, the UE-TX configures the SLRB between the UE-TX and the UE-RX, using the SLRB association information received from the S-gNB. In Step ST4702, the UE-TX notifies the UE-RX of the configured PFI and SLRB association information. The UE-TX may notify only the SLRB parameter associated with the transmitter and the receiver as the SLRB association information.

In Step ST4703, the UE-RX configures the SLRB between the UE-TX and the UE-RX, using the SLRB association information received from the UE-TX. In
Step ST4704, the UE-RX notifies the UE-TX of the completion of the SLRB configuration between the UE-TX and the UE-RX. The UE-RX may include the PFI in the completion notification. This enables the UE-TX to communicate the service data with the UE-RX using the SL communication. In Step ST4705, the UE-TX transmits the service data to the UE-RX.

In Step ST4706, the UE-TX performs measurement. The S-gNB may notify the UE-TX of the measurement configuration in advance. In Step ST4707, the UE-TX reports a measurement result to the S-gNB. In Step ST4708, the S-gNB determines the HO to the T-gNB, using the measurement result report from the UE-TX.

In Step ST4709, the S-gNB notifies the T-gNB of an HO request. The S-gNB may include an identifier of the UE-TX to be handed over in the notification of the HO request. In Step ST4710, the T-gNB determines whether to accept the HO of the UE-TX. When determining to accept the HO, the T-gNB notifies the S-gNB of an HO request response in Step ST4711. The T-gNB may include an identifier of the UE-TX to be handed over in the notification of the HO request response.

In Step ST4712, the S-gNB notifies the UE-TX of an HO instruction. The S-gNB may include an identifier of the T-gNB in the notification of the HO instruction. The S-gNB may notify the HO instruction, using an RRCReconfiguration message. Upon receipt of the HO instruction, the UE-TX performs a synchronization procedure with the T-gNB to start access in Step ST4713. The UE-TX may perform a RACH procedure, and notify an RRCReconfigurationComplete message. In this manner, the UE-TX is handed over from the S-gNB to the T-gNB.

In Step ST4714, the UE-TX notifies the T-gNB of the QoS relevant information calculated in Step ST4101. The UE-TX may notify the PFI configured in Step ST4102 together with the QoS relevant information, or include the PFI in the QoS relevant information and notify the PFI. In Step ST4715, the T-gNB configures the SLRB using the QoS relevant information received from the UE-TX. In Step ST4716, the T-gNB notifies the UE-TX of the configured PFI and SLRB association information. The T-gNB notifies a part or all the parameters required for the SLRB configuration as the SLRB association information. The HO-target gNB may notify the UE-TX of not only the SLRB parameter associated with the transmitter and the receiver but also the SLRB parameter associated with only the transmitter. Furthermore, the HO-target gNB may notify the SLRB parameter associated with only the receiver.

In Step ST4717, the UE-TX configures the SLRB between the UE-TX and the UE-RX, using the SLRB association information received from the T-gNB. In
Step ST4718, the UE-TX notifies the UE-RX of the PFI and the SLRB association information. The UE-TX may notify only the SLRB parameter associated with the transmitter and the receiver as the SLRB association information.

In Step ST4719, the UE-RX configures the SLRB between the UE-TX and the UE-RX, using the SLRB association information received from the UE-TX. In
Step ST4720, the UE-RX notifies the UE-TX of the completion of the SLRB configuration between the UE-TX and the UE-RX. The UE-RX may include the PFI in the completion notification. This enables the UE-TX to communicate the service data with the UE-RX using the SL communication. In Step ST4721, the UE-TX transmits the service data to the UE-RX.

This enables the UE-TX to implement the service using the SL communication with the UE-RX after the UE-TX is handed over. Even when, for example, the movements of the UE-TX or fluctuations in the radio propagation environment trigger the HO, the UE-TX and the UE-RX can implement the service using the SL communication.

When the UE-to-UE indirect communication through the relay UE is performed in the SL, not only the UE-TX and the UE-RX but also the relay UE moves. Even when these UEs do not move, the surrounding radio propagation environment varies. This sometimes triggers the HO to the gNB to which the UE-TX is connected or the HO to the gNB to which the relay UE is connected. These HOs do not always coincide with one another. Thus, when the UE-TX or the relay UE is handed over in the UE-to-UE indirect communication through the relay UE, a method for configuring the SLRB for the SL communication is a problem. However, none discloses the method.

Here, a method for solving such a problem is disclosed.

In the UE-to-UE indirect communication through the relay UE in the SL, the UE-TX and the HO-target gNB configure the SLRB after the UE-TX is handed over. The relay UE configures the SLRB for the SL communication with the UE-RX.

The HO-source gNB to which the UE-TX is connected may be referred to as an HO-source gNB 1 (S-gNB 1), and the HO-target gNB to which the UE-TX is connected may be referred to as an HO-target gNB 1 (T-gNB 1). The HO-source gNB to which the relay UE is connected may be referred to as an HO-source gNB 2 (S-gNB 2), and the HO-target gNB to which the relay UE is connected may be referred to as an HO-target gNB 2 (T-gNB 2).

After the UE-TX is connected to the HO-target gNB 1 through the HO procedure, the UE-TX notifies the HO-target gNB 1 of the QoS relevant information calculated from the service to be implemented using the SL communication between the UE-TX and the UE-RX. The UE-TX may give the notification via the RRC signaling in the Uu. Upon receipt of the QoS relevant information from the connected UE-TX, the HO-target gNB 1 can recognize the QoS relevant information required for the service to be implemented by the UE-TX. The HO-target gNB 1 configures the SLRB using the QoS relevant information. The HO-target gNB 1 notifies the UE-TX of information on the configured SLRB. The HO-target gNB 1 may give the notification via the RRC signaling in the Uu.

The HO-target gNB 1 notifies a part or all the parameters required for the SLRB configuration as the SLRB association information. The HO-target gNB 1 may notify the UE-TX of not only the SLRB parameter associated with the transmitter and the receiver but also the SLRB parameter associated with only the transmitter. Furthermore, the HO-target gNB 1 may notify the SLRB parameter associated with only the receiver.

The UE-TX receives the SLRB association information for the SL communication from the HO-target gNB 1. The UE-TX configures the SLRB for the SL communication with the relay UE, using the SLRB association information received from the HO-target gNB 1. Furthermore, the UE-TX notifies the relay UE of the SLRB association information. The UE-TX may give the notification via the PC5-RRC signaling. The UE-TX notifies the relay UE of a part or all the parameters required for the SLRB configuration as the SLRB association information to be notified. The UE-TX notifies not only the SLRB parameter associated with the transmitter and the receiver but also the SLRB parameter associated with only the transmitter. Furthermore, the UE-TX may notify the SLRB parameter associated with only the receiver.

The relay UE configures the SLRB for the SL communication with the UE-TX, using the SLRB association information received from the UE-TX. Furthermore, the relay UE notifies the UE-RX of the SLRB association information received from the UE-TX. The relay UE may give the notification via the PC5-RRC signaling. The relay UE may notify the UE-RX of only the SLRB parameter associated with the transmitter and the receiver as the SLRB association information to be notified. The UE-RX configures the SLRB for the SL communication with the relay UE, using the SLRB association information received from the relay UE.

Even with the HO to the gNB to which the relay UE is connected, the HO does not change the SLRB configuration. The application of the SLRB configuration notified from the UE-TX to the SLRB between the relay UE and the UE-RX enables the relay UE to avoid the influence of the HO procedure for the relay UE.

Even with the HO to the gNB to which the UE-TX is connected or the HO to the gNB to which the relay UE is connected, this method can configure the SLRBs for the SL communications between the UE-TX and the relay UE and between the relay UE and the UE-RX. This enables the service using the SL communication between the UE-TX and the UE-RX through the relay UE. The method disclosed herein may be combined with the method disclosed in the fourth embodiment. This can simplify processes in the relay UE. This can also reduce malfunctions in the UE-to-UE indirect communication through the relay UE using the SL communication, and enhance the reliability.

Another method for configuring the SLRB when the UE-TX or the relay UE is handed over is disclosed.

In the UE-to-UE indirect communication through the relay UE in the SL, the UE-TX and the HO-target gNB configure the SLRB between the UE-TX and the relay UE after the UE-TX is handed over. The relay UE and the HO-target gNB configure the SLRB between the relay UE and the UE-RX after the relay UE is handed over.

After the UE-TX is connected to the HO-target gNB 1 through the HO procedure, the UE-TX notifies the HO-target gNB 1 of the QoS relevant information calculated from the service to be implemented using the SL communication between the UE-TX and the UE-RX. The UE-TX may give the notification via the RRC signaling in the Uu. Upon receipt of the QoS relevant information from the connected UE-TX, the HO-target gNB 1 can recognize the QoS relevant information required for the service to be implemented by the UE-TX. The HO-target gNB 1 configures the SLRB using the QoS relevant information. The HO-target gNB 1 notifies the UE-TX of information on the configured SLRB. The HO-target gNB 1 may give the notification via the RRC signaling in the Uu.

The HO-target gNB 1 notifies a part or all the parameters required for the SLRB configuration as the SLRB association information. The HO-target gNB 1 may notify the UE-TX of not only the SLRB parameter associated with the transmitter and the receiver but also the SLRB parameter associated with only the transmitter. Furthermore, the HO-target gNB 1 may notify the SLRB parameter associated with only the receiver.

The UE-TX receives the SLRB association information for the SL communication from the HO-target gNB 1. The UE-TX configures the SLRB for the SL communication with the relay UE, using the SLRB association information received from the HO-target gNB 1. Furthermore, the UE-TX notifies the relay UE of the SLRB association information. The UE-TX may give the notification via the PC5-RRC signaling. The UE-TX may notify the relay UE of only the SLRB parameter associated with the transmitter and the receiver as the SLRB association information to be notified. The relay UE configures the SLRB for the SL communication with the UE-TX, using the SLRB association information received from the UE-TX.

The UE-TX notifies the relay UE of the QoS relevant information calculated from the service to be implemented using the SL communication between the UE-TX and the UE-RX. The UE-TX may give the notification via the PC5-RRC signaling.

After the relay UE is connected to the HO-target gNB 2 through the HO procedure, the relay UE notifies the HO-target gNB 2 of the QoS relevant information received from the UE-TX. The relay UE may give the notification via the RRC signaling in the Uu.

Upon receipt of the QoS relevant information from the connected relay UE, the HO-target gNB 2 can recognize the QoS relevant information required for the service to be implemented by the UE-TX. The HO-target gNB 2 configures the SLRB using the QoS relevant information. The HO-target gNB 2 notifies the relay UE of information on the configured SLRB. The HO-target gNB 2 may give the notification via the RRC signaling in the Uu.

The HO-target gNB 2 notifies a part or all the parameters required for the SLRB configuration as the SLRB association information. The HO-target gNB 2 may notify the relay UE of not only the SLRB parameter associated with the transmitter and the receiver but also the SLRB parameter associated with only the transmitter. Furthermore, the HO-target gNB 2 may notify the SLRB parameter associated with only the receiver.

The relay UE notifies the UE-RX of the SLRB association information received from the HO-target gNB 2. The relay UE may give the notification via the PC5-RRC signaling. The relay UE may notify the UE-RX of only the SLRB parameter associated with the transmitter and the receiver as the SLRB association information to be notified. The UE-RX configures the SLRB for the SL communication with the relay UE, using the SLRB association information received from the relay UE.

When the UE-TX and/or the relay UE is handed over, notification of the QoS relevant information from the UE-TX to the relay UE may be unnecessary in the HO destination. The QoS relevant information is calculated from the service to be implemented using the SL communication between the UE-TX and the UE-RX. The UE-TX should notify the relay UE of the QoS relevant information when performing the UE-to-UE indirect communication with the UE-RX through the relay UE. When the UE-TX and/or the relay UE is handed over, notification of the QoS relevant information from the UE-TX to the relay UE is unnecessary in the HO destination. This can reduce the amount of signaling.

The HO of the UE-TX need not precede the HO of the relay UE. There is no limit in the timing of the HO of the UE-TX and the timing of the HO of the relay UE. As long as the UE-TX notifies the relay UE of the QoS relevant information, the aforementioned method can be performed with any timing.

When the HO changes the service to be implemented between the UE-TX and the UE-RX or the QoS relevant information to be calculated from the service, the UE-TX may notify the relay UE of the QoS relevant information. The UE-TX may give the notification via the RRC signaling. Without being limited by this HO, the UE-TX may give the notification when the service to be implemented between the UE-TX and the UE-RX or the QoS relevant information to be calculated from the service is changed. When the QoS relevant information has been updated, the UE-TX may give the notification. Enabling update of the QoS relevant information can reduce problems of, for example, unsatisfactory QoS and an interruption of the service using the SL communication.

Even with the HO to the gNB 1 to which the UE-TX is connected or the HO to the gNB 2 to which the relay UE is connected, this method can configure the SLRBs for the SL communications between the UE-TX and the relay UE and between the relay UE and the UE-RX. Consequently, the UE-TX and the UE-RX can implement the service using the SL communication through the relay UE. The method disclosed herein may be combined with the method disclosed in the first modification of the fourth embodiment. The relay UE can configure the SLRB configured by the HO-target gNB 2 as the SLRB between the relay UE and the UE-RX.

Since the SLRB is configured in a process after the HO of the UE-TX or the relay UE according to the aforementioned method, the latency increases.

Here, another method for solving such a problem is disclosed.

A method for configuring the SLRB when the UE-TX is handed over from the HO-source gNB to the HO-target gNB in the UE-to-UE direct communication using the SL is disclosed.

The HO-source gNB to which the UE-TX is connected notifies, in advance, a surrounding gNB of the QoS relevant information calculated from the service to be implemented using the SL communication between the UE-TX and the UE-RX. This enables the surrounding gNB to obtain the QoS relevant information calculated by the UE-TX.

The HO-source gNB to which the UE-TX is connected may notify, in advance, the surrounding gNB of the SLRB association information calculated from the QoS relevant information. The HO-source gNB notifies a part or all the parameters required for the SLRB configuration as the SLRB association information. The HO-source gNB may notify the surrounding gNB of not only the SLRB parameter associated with the transmitter and the receiver but also the SLRB parameter associated with only the transmitter. Furthermore, the HO-source gNB may notify the SLRB parameter associated with only the receiver. This enables the surrounding gNB to obtain the SLRB configuration for the SL communication between the UE-TX and the UE-RX.

The method disclosed in the eighth modification of the fourth embodiment may be appropriately applied to a method for notifying the QoS relevant information from the HO-source gNB to the surrounding gNB. The method disclosed in the eighth modification of the fourth embodiment may be appropriately applied to a method for notifying the SLRB association information from the HO-source gNB to the surrounding gNB.

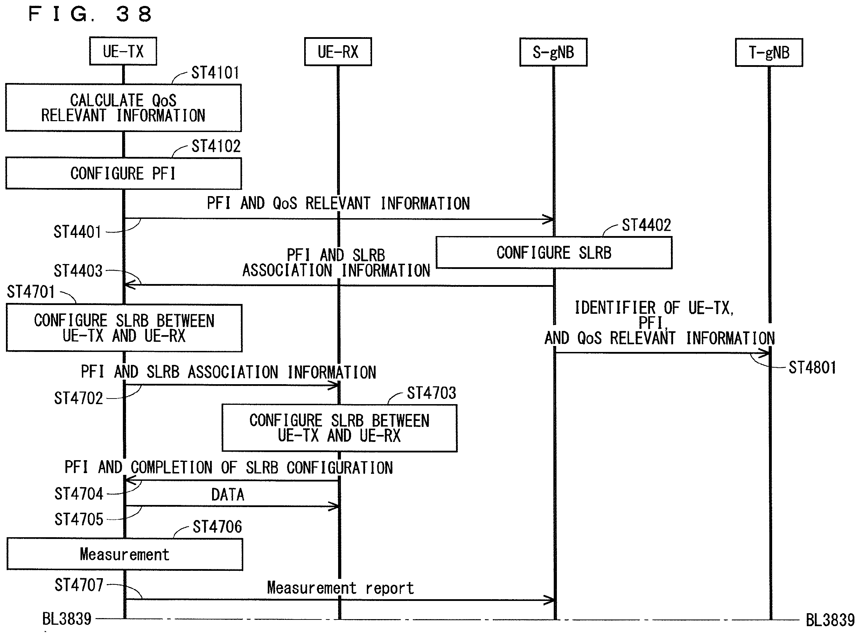

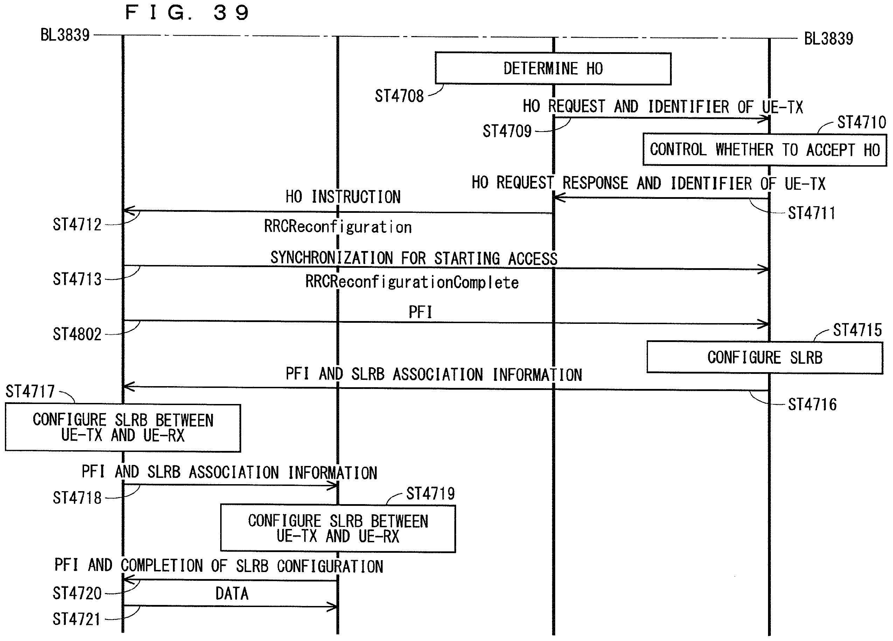

FIGS. 38 and 39 are sequence diagrams illustrating the second example method for configuring the SLRB when the UE is handed over in the UE-to-UE direct communication using the SL according to the ninth modification of the fourth embodiment. FIGS. 38 and 39 are connected across a location of a border BL3839. In FIGS. 38 and 39, the same step numbers are applied to the steps common to those in FIGS. 36 and 37, and the common description thereof is omitted.

In Step ST4401, the UE-TX notifies a gNB to which the UE-TX is connected (an HO-source gNB) of the QoS relevant information calculated from the service to be implemented using the SL communication between the UE-TX and the UE-RX. The UE-TX may notify information for identifying the service from which the QoS relevant information has been calculated, together with the information. The information may be, for example, an identifier of the UE-TX, an identifier of a transmission target UE of the service, an identifier of a transmission source UE of the service, or the PFI configured by the UE-TX. These pieces of information may be combined. The UE-TX may give the notification via the RRC signaling in the Uu.

The HO-source gNB to which the UE-TX is connected may associate the QoS relevant information with information for identifying the service both of which have been received from the UE-TX, and store the pieces of information.

In Step ST4801, the HO-source gNB to which the UE-TX is connected notifies, in advance, a surrounding gNB of the QoS relevant information and the information for identifying the service both of which have been received from the UE-TX. The HO-source gNB may give the notification via the Xn or the X2. Upon receipt of the pieces of information from the HO-source gNB, the surrounding gNB may associate the received QoS relevant information with the received information for identifying the service, and store the pieces of information.

After the UE-TX is connected to the HO-target gNB through the HO procedure in Step ST4713, the HO-target gNB configures, in Step ST4715, the SLRB using the QoS relevant information and the information for identifying the service which have been received from the HO-source gNB in Step ST4801. In Step ST4716, the HO-target gNB notifies the UE-TX of information on the configured SLRB. The HO-target gNB may give the notification via the RRC signaling in the Uu.

Before the UE-TX is connected to the HO-target gNB through the HO procedure, the surrounding gNB may configure the SLRB, using the QoS relevant information and the information for identifying the service which have been received from the HO-source gNB. This enables the surrounding gNB to configure the SLRB earlier.

After the UE-TX is connected to the HO-target gNB through the HO procedure, the UE-TX may notify the HO-target gNB of information indicating a request for configuring the SLRB in Step ST4802. The UE-TX may notify the information for identifying the service together with the information. The aforementioned information may be appropriately applied as the information for identifying the service. The UE-TX may give the notification via the RRC signaling in the Uu. Upon receipt of the information indicating the request for configuring the SLRB from the UE-TX, the HO-target gNB notifies the UE-TX of information on the SLRB configured for the service in Step ST4716. The HO-target gNB may give the notification via the RRC signaling in the Uu.

This enables the UE-TX to implement the service using the SL communication with the UE-RX after the UE-TX is handed over. Since the QoS relevant information is notified between the gNBs in advance, the UE-TX can receive the SLRB configuration from the HO-target gNB early after the UE-TX is handed over. Even when the UE-TX is handed over, the service using the SL can be implemented in the HO destination with low latency.

As described above, when the UE-TX or the relay UE is handed over in the UE-to-UE indirect communication through the relay UE, a method for configuring the SLRB for the SL communication is a problem. Here, another method for solving such a problem is disclosed.

In the UE-to-UE indirect communication through the relay UE in the SL, the HO-source gNB 1 to which the UE-TX is connected notifies, in advance, a surrounding gNB of the QoS relevant information calculated from the service to be implemented using the SL communication between the UE-TX and the UE-RX.

As described above, the HO-source gNB 1 may notify the SLRB association information calculated from the QoS relevant information, instead of the QoS relevant information.

The method disclosed in the eighth modification of the fourth embodiment may be appropriately applied to a method for notifying the QoS relevant information from the HO-source gNB 1 to the surrounding gNB. The method disclosed in the eighth modification of the fourth embodiment may be appropriately applied to a method for notifying the SLRB association information from the HO-source gNB to the surrounding gNB.

The UE-TX notifies the gNB to which the UE-TX is connected (HO-source gNB 1) of the QoS relevant information calculated from the service to be implemented using the SL communication between the UE-TX and the UE-RX. The UE-TX may notify information for identifying the service from which the QoS relevant information has been calculated, together with the information. The information may be, for example, an identifier of the UE-TX, an identifier of a transmission target UE of the service, an identifier of a transmission source UE of the service, or the PFI configured by the UE-TX. These pieces of information may be combined. The UE-TX may give the notification via the RRC signaling in the Uu.

The HO-source gNB 1 to which the UE-TX is connected may associate the QoS relevant information with the information for identifying the service both of which have been received from the UE-TX, and store the pieces of information.

The HO-source gNB 1 to which the UE-TX is connected notifies, in advance, the surrounding gNB of the QoS relevant information and the information for identifying the service both of which have been received from the UE-TX. The HO-source gNB 1 may give the notification via the Xn or the X2. Upon receipt of the pieces of information from the HO-source gNB, the surrounding gNB may associate the received QoS relevant information with the received information for identifying the service, and store the pieces of information.

After the UE-TX is connected to the HO-target gNB 1 through the HO procedure, the HO-target gNB 1 configures the SLRB, using the QoS relevant information and the information for identifying the service which have been received from the HO-source gNB 1. The HO-target gNB 1 notifies the UE-TX of information on the configured SLRB. The HO-target gNB 1 may give the notification via the RRC signaling in the Uu.

Before the UE-TX is connected to the HO-target gNB 1 through the HO procedure, the surrounding gNB may configure the SLRB, using the QoS relevant information and the information for identifying the service which have been received from the HO-source gNB 1. This enables the surrounding gNB to configure the SLRB earlier.

After the UE-TX is connected to the HO-target gNB 1 through the HO procedure, the UE-TX may notify the HO-target gNB 1 of information indicating a request for configuring the SLRB. The UE-TX may notify the information for identifying the service together with the information. The aforementioned information may be appropriately applied as the information for identifying the service. The UE-TX may give the notification via the RRC signaling in the Uu.

Upon receipt of the information indicating the request for configuring the SLRB from the UE-TX, the HO-target gNB 1 notifies the UE-TX of information on the SLRB configured for the service. The HO-target gNB 1 may give the notification via the RRC signaling in the Uu.

The HO-target gNB 1 notifies a part or all the parameters required for the SLRB configuration as the SLRB association information. The HO-target gNB 1 may notify the UE-TX of not only the SLRB parameter associated with the transmitter and the receiver but also the SLRB parameter associated with only the transmitter. Furthermore, the HO-target gNB 1 may notify the SLRB parameter associated with only the receiver.

The UE-TX receives the SLRB association information for the SL communication from the HO-target gNB 1. The UE-TX configures the SLRB for the SL communication with the relay UE, using the SLRB association information received from the HO-target gNB 1. Furthermore, the UE-TX notifies the relay UE of the SLRB association information. The UE-TX may give the notification via the PC5-RRC signaling. The UE-TX notifies the relay UE of all the parameters for the SLRB configuration as the SLRB association information to be notified. The UE-TX notifies not only the SLRB parameter associated with the transmitter and the receiver but also the SLRB parameter associated with only the transmitter. Furthermore, the UE-TX may notify the SLRB parameter associated with only the receiver.

The relay UE configures the SLRB for the SL communication with the UE-TX, using the SLRB association information received from the UE-TX.

The relay UE notifies the UE-RX of the SLRB association information received from the UE-TX. The relay UE may give the notification via the PC5-RRC signaling. The relay UE may notify the UE-RX of only the SLRB parameter associated with the transmitter and the receiver as the SLRB association information to be notified. The UE-RX configures the SLRB for the SL communication with the relay UE, using the SLRB association information received from the relay UE.

Even with the HO to the gNB to which the relay UE is connected, the HO does not change the SLRB configuration. The application of the SLRB configuration notified from the UE-TX to the SLRB between the relay UE and the UE-RX enables the relay UE to avoid the influence of the HO procedure for the relay UE.

Even with the HO to the gNB to which the UE-TX is connected or the HO to the gNB to which the relay UE is connected, this method can configure the SLRBs for the SL communications between the UE-TX and the relay UE and between the relay UE and the UE-RX. Consequently, the UE-TX and the UE-RX can implement the service using the SL communication through the relay UE. Since the QoS relevant information is notified between the gNBs in advance, the UE-TX can receive the SLRB configuration from the HO-target gNB early after the UE-TX is handed over. Even when the UE-TX or the relay UE is handed over, the service using the SL can be implemented in the HO destination with low latency.

The method disclosed herein may be combined with the method disclosed in the fourth embodiment. This can simplify processes in the relay UE. This can also reduce malfunctions in the UE-to-UE indirect communication through the relay UE using the SL communication, and enhance the reliability.

Another method for configuring the SLRB when the UE-TX or the relay UE is handed over is disclosed.

In the UE-to-UE indirect communication through the relay UE in the SL, the HO-source gNB 1 to which the UE-TX is connected notifies, in advance, a surrounding gNB of the QoS relevant information calculated from the service to be implemented using the SL communication between the UE-TX and the UE-RX. The HO-source gNB 2 to which the relay UE is connected notifies, in advance, a surrounding gNB of the QoS relevant information notified from the relay UE and calculated from the service to be implemented using the SL communication between the UE-TX and the UE-RX. The HO-source gNB 2 to which the relay UE is connected may notify, in advance, the surrounding gNB of the QoS relevant information notified from another surrounding gNB and calculated from the service to be implemented using the SL communication between the UE-TX and the UE-RX.

As described above, the HO-source gNB 2 may notify the SLRB association information calculated from the QoS relevant information, instead of the QoS relevant information.

The UE-TX notifies the gNB to which the UE-TX is connected (HO-source gNB 1) of the QoS relevant information calculated from the service to be implemented using the SL communication between the UE-TX and the UE-RX. The UE-TX may notify information for identifying the service from which the QoS relevant information has been calculated, together with the information. The information may be, for example, an identifier of the UE-TX, an identifier of a transmission target UE of the service, an identifier of a transmission source UE of the service, or the PFI configured by the UE-TX. These pieces of information may be combined. The UE-TX may give the notification via the RRC signaling in the Uu.

The HO-source gNB 1 to which the UE-TX is connected may associate the QoS relevant information with the information for identifying the service both of which have been received from the UE-TX, and store the pieces of information.

The HO-source gNB 1 to which the UE-TX is connected notifies, in advance, the surrounding gNB of the QoS relevant information and the information for identifying the service both of which have been received from the UE-TX. The HO-source gNB 1 may give the notification via the Xn or the X2. Upon receipt of the pieces of information from the HO-source gNB 1, the surrounding gNB may associate the received QoS relevant information with the received information for identifying the service, and store the pieces of information.

After the UE-TX is connected to the HO-target gNB 1 through the HO procedure, the HO-target gNB 1 configures the SLRB, using the QoS relevant information and the information for identifying the service which have been received from the HO-source gNB 1. The HO-target gNB 1 notifies the UE-TX of information on the configured SLRB. The HO-target gNB 1 may give the notification via the RRC signaling in the Uu.

Before the UE-TX is connected to the HO-target gNB 1 through the HO procedure, the surrounding gNB may configure the SLRB, using the QoS relevant information and the information for identifying the service which have been received from the HO-source gNB 1. This enables the surrounding gNB to configure the SLRB earlier.

After the UE-TX is connected to the HO-target gNB 1 through the HO procedure, the UE-TX may notify the HO-target gNB 1 of information indicating a request for configuring the SLRB. The UE-TX may notify the information for identifying the service together with the information. The aforementioned information may be appropriately applied as the information for identifying the service. The UE-TX may give the notification via the RRC signaling in the Uu.

Upon receipt of the information indicating the request for configuring the SLRB from the UE-TX, the HO-target gNB 1 notifies the UE-TX of information on the SLRB configured for the service. The HO-target gNB 1 may give the notification via the RRC signaling in the Uu.

The HO-target gNB 1 notifies a part or all the parameters required for the SLRB configuration as the SLRB association information. The HO-target gNB 1 may notify the UE-TX of not only the SLRB parameter associated with the transmitter and the receiver but also the SLRB parameter associated with only the transmitter. Furthermore, the UE-TX may notify the SLRB parameter associated with only the receiver.

The UE-TX receives the SLRB association information for the SL communication from the HO-target gNB 1. The UE-TX configures the SLRB for the SL communication with the relay UE, using the SLRB association information received from the HO-target gNB 1. Furthermore, the UE-TX notifies the relay UE of the SLRB association information. The UE-TX may give the notification via the PC5-RRC signaling. The UE-TX may notify the relay UE of only the SLRB parameter associated with the transmitter and the receiver as the SLRB association information to be notified.

The UE-TX notifies the relay UE of the QoS relevant information calculated from the service to be implemented using the SL communication between the UE-TX and the UE-RX. The UE-TX may give the notification via the PC5-RRC signaling.

The relay UE notifies the gNB to which the relay UE is connected (HO-source gNB 2) of the QoS relevant information received from the UE-TX. The relay UE may notify information for identifying the service from which the QoS relevant information has been calculated, together with the information. The information may be, for example, an identifier of the relay UE, an identifier of the UE-TX, an identifier of a transmission target UE of the service, an identifier of a transmission source UE of the service, the PFI configured by the UE-TX, or the PFI configured by the relay UE. These pieces of information may be combined. The relay UE may give the notification via the RRC signaling in the Uu.

The HO-source gNB 2 to which the relay UE is connected may associate the QoS relevant information with the information for identifying the service both of which have been received from the relay UE, and store the pieces of information.

The HO-source gNB 2 to which the relay UE is connected notifies, in advance, the surrounding gNB of the QoS relevant information and the information for identifying the service both of which have been received from the relay UE. The HO-source gNB 2 may give the notification via the Xn or the X2. Upon receipt of the pieces of information from the HO-source gNB 2, the surrounding gNB may associate the received QoS relevant information with the received information for identifying the service, and store the pieces of information.

After the relay UE is connected to the HO-target gNB 2 through the HO procedure, the HO-target gNB 2 configures the SLRB, using the QoS relevant information and the information for identifying the service which have been received from the HO-source gNB 2. The HO-target gNB 2 notifies the relay UE of information on the configured SLRB. The HO-target gNB 2 may give the notification via the RRC signaling in the Uu.

Before the relay UE is connected to the HO-target gNB 2 through the HO procedure, the surrounding gNB may configure the SLRB, using the QoS relevant information and the information for identifying the service which have been received from the HO-source gNB 2. This enables the surrounding gNB to configure the SLRB earlier.

After the relay UE is connected to the HO-target gNB 2 through the HO procedure, the relay UE may notify the HO-target gNB 2 of information indicating a request for configuring the SLRB. The relay UE may notify the information for identifying the service together with the information. The aforementioned information may be appropriately applied as the information for identifying the service. The relay UE may give the notification via the RRC signaling in the Uu.

Upon receipt of the information indicating the request for configuring the SLRB from the relay UE, the HO-target gNB 2 notifies the relay UE of information on the SLRB configured for the service. The HO-target gNB 2 may give the notification via the RRC signaling in the Uu.

The HO-target gNB 2 notifies a part or all the parameters required for the SLRB configuration as the SLRB association information. The HO-target gNB 2 may notify the relay UE of not only the SLRB parameter associated with the transmitter and the receiver but also the SLRB parameter associated with only the transmitter. Furthermore, the HO-target gNB 2 may notify the SLRB parameter associated with only the receiver.

The relay UE receives the SLRB association information for the SL communication from the HO-target gNB 2. The relay UE configures the SLRB for the SL communication between the relay UE and the UE-RX, using the SLRB association information received from the HO-target gNB 2. Furthermore, the relay UE notifies the UE-RX of the SLRB association information. The relay UE may give the notification via the PC5-RRC signaling. The relay UE may notify the UE-RX of only the SLRB parameter associated with the transmitter and the receiver as the SLRB association information to be notified. The UE-RX configures the SLRB for the SL communication with the relay UE, using the SLRB association information received from the relay UE.

When the UE-TX and/or the relay UE is handed over, notification of the QoS relevant information from the UE-TX to the relay UE may be unnecessary in the HO destination. The QoS relevant information is calculated from the service to be implemented using the SL communication between the UE-TX and the UE-RX. The UE-TX should notify the relay UE of the QoS relevant information when performing the UE-to-UE indirect communication with the UE-RX through the relay UE. When the UE-TX and/or the relay UE is handed over, notification of the QoS relevant information from the UE-TX to the relay UE is unnecessary in the HO destination. This can reduce the amount of signaling.

The HO of the UE-TX need not precede the HO of the relay UE. There is no limit in the timing of the HO of the UE-TX and the timing of the HO of the relay UE. As long as the UE-TX notifies the relay UE of the QoS relevant information, the aforementioned method can be performed with any timing.

When the HO changes the service to be implemented between the UE-TX and the UE-RX or the QoS relevant information to be calculated from the service, the UE-TX may notify the relay UE of the QoS relevant information The UE-TX may give the notification via the RRC signaling. Without being limited by this HO, the UE-TX may give the notification when the service to be implemented between the UE-TX and the UE-RX or the QoS relevant information to be calculated from the service is changed. When the QoS relevant information has been updated, the UE-TX may give the notification. Enabling update of the QoS relevant information can reduce problems of, for example, unsatisfactory QoS and an interruption of the service using the SL communication.

Even with the HO to the gNB to which the UE-TX is connected or the HO to the gNB to which the relay UE is connected, this method can configure the SLRBs for the SL communications between the UE-TX and the relay UE and between the relay UE and the UE-RX. Consequently, the UE-TX and the UE-RX can implement the service using the SL communication through the relay UE. Since the QoS relevant information is notified between the gNBs in advance, the UE-TX and/or the relay UE can receive the SLRB configuration from the HO-target gNB early after the UE-TX and/or the relay UE is handed over. Even when the UE-TX or the relay UE is handed over, the service using the SL can be implemented in the HO destination with low latency.

The method disclosed herein may be combined with the method disclosed in the first modification of the fourth embodiment. The relay UE can configure the SLRB configured by the HO-target gNB as the SLRB between the relay UE and the UE-RX.

What is disclosed herein is a method for implementing a service using the SL in the HO destination with lower latency even when a UE performing the UE-to-UE direct communication or the UE-to-UE indirect communication is handed over.

A method for configuring the SLRB when the UE-TX is handed over from the HO-source gNB to the HO-target gNB in the UE-to-UE direct communication using the SL is disclosed.

The HO-source gNB to which the UE-TX is connected notifies the HO-target gNB of the QoS relevant information calculated from the service to be implemented using the SL communication between the UE-TX and the UE-RX, during the HO procedure of the UE-TX. This enables the HO-target gNB to obtain the QoS relevant information calculated by the UE-TX.

The HO-source gNB to which the UE-TX is connected may notify the HO-target gNB of the SLRB association information calculated from the QoS relevant information during the HO procedure of the UE-TX (may be during the HO preparation procedure). The HO-source gNB notifies all the parameters required for the SLRB configuration as the SLRB association information. The HO-source gNB notifies the HO-target gNB of not only the SLRB parameter associated with the transmitter and the receiver but also the SLRB parameter associated with only the transmitter. Furthermore, the HO-source gNB may notify the SLRB parameter associated with only the receiver. This enables the HO-target gNB to obtain the SLRB configuration for the SL communication between the UE-TX and the UE-RX.

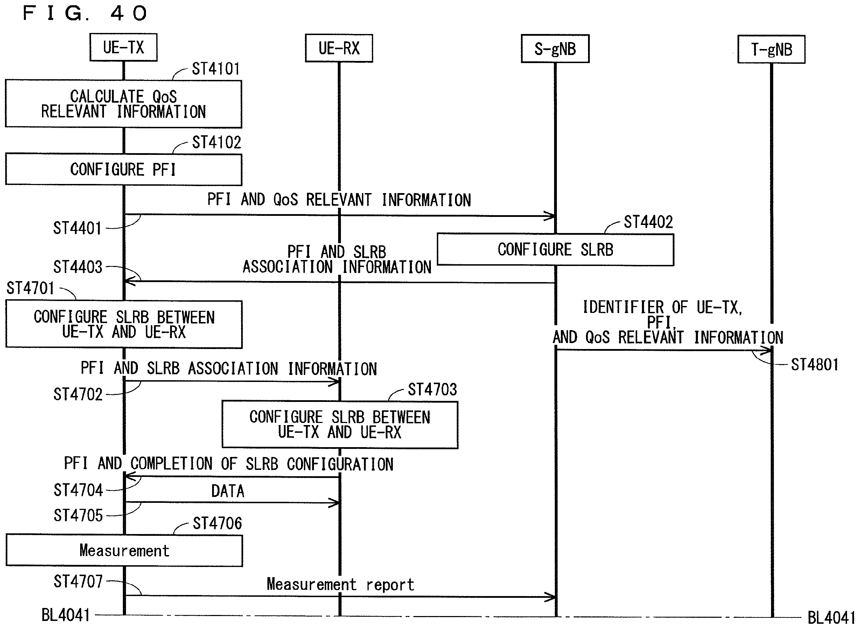

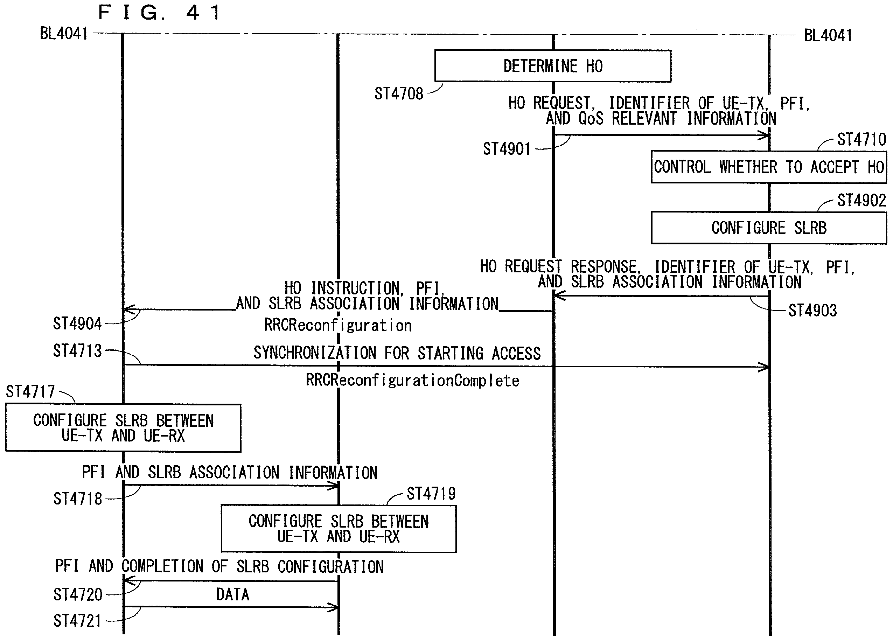

FIGS. 40 and 41 are sequence diagrams illustrating the third example method for configuring the SLRB when the UE is handed over in the UE-to-UE direct communication using the SL according to the ninth modification of the fourth embodiment. FIGS. 40 and 41 are connected across a location of a border BL4041. In FIGS. 40 and 41, the same step numbers are applied to the steps common to those in FIGS. 36 and 37, and the common description thereof is omitted.

In Step ST4401, the UE-TX notifies the gNB to which the UE-TX is connected (HO-source gNB) of the QoS relevant information calculated from the service to be implemented using the SL communication between the UE-TX and the UE-RX. The UE-TX may notify information for identifying the service from which the QoS relevant information has been calculated, together with the information. The information may be, for example, an identifier of the UE-TX, an identifier of a transmission target UE of the service, an identifier of a transmission source UE of the service, or the PFI configured by the UE-TX. These pieces of information may be combined. The UE-TX may give the notification via the RRC signaling in the Uu.

The HO-source gNB to which the UE-TX is connected may associate the QoS relevant information with the information for identifying the service both of which have been received from the UE-TX, and store the pieces of information.

In Step ST4708, the HO-source gNB to which the UE-TX is connected determines to hand over the UE-TX to the HO-target gNB. For example, the HO-source gNB may determine whether to hand over the UE-TX, using the measurement result received from the UE-TX in Step ST4707. In Step ST4901, the HO-source gNB notifies the HO-target gNB of an HO request for the UE-TX. The HO-source gNB notifies the HO-target gNB of the QoS relevant information received from the UE-TX together with the HO request, or includes the QoS relevant information in the HO request and notifies the HO-target gNB of the QoS relevant information.

The HO-source gNB may notify information for identifying the service from which the QoS relevant information has been calculated, together with the information. The HO-source gNB may give the notification via the Xn or X2 signaling. Upon receipt of the pieces of information from the HO-source gNB, the HO-target gNB may associate the received QoS relevant information with the received information for identifying the service, and store the pieces of information.

In Step ST4902, the HO-target gNB configures the SLRB using the received QoS relevant information. When determining to be capable of accepting the HO for the UE-TX in Step ST4710, the HO-target gNB may configure the SLRB.

In Step ST4903, the HO-target gNB notifies the HO-source gNB of information on the configured SLRB. When allowing handover of the UE-TX, the HO-target gNB notifies the HO-source gNB of an HO request response for the UE-TX in Step ST4903. The HO-target gNB notifies the HO-source gNB of the SLRB association information together with the HO request response, or includes the SLRB association information in the HO response and notifies the HO-source gNB of the SLRB association information. The HO-target gNB may notify information for identifying a corresponding service, together with the SLRB association information. The HO-target gNB may give the notification via the Xn or X2 signaling.

Upon receipt of the HO request response for the UE-TX from the HO-target gNB, the HO-source gNB notifies the UE-TX of an instruction on the HO to the HO-target gNB in Step ST4904. The HO-source gNB notifies the UE-TX of the SLRB association information received from the HO-target gNB together with the HO instruction, or includes the SLRB association information in the HO instruction and notifies the UE-TX of the SLRB association information. The HO-source gNB may notify information for identifying a corresponding service, together with the SLRB association information. The HO-source gNB may include an identifier of the T-gNB in the notification of the HO instruction. The HO-source gNB may give the notification via the RRC signaling in the Uu. The HO-source gNB may notify the HO instruction, using an RRCReconfiguration message.

A part or all the parameters required for the SLRB configuration are notified as the SLRB association information. The HO-source gNB may notify the UE-TX of not only the SLRB parameter associated with the transmitter and the receiver but also the SLRB parameter associated with only the transmitter. Furthermore, the SLRB parameter associated with only the receiver may be notified. Consequently, the SLRB for the SL communication between the UE-TX and the UE-RX can be configured.

Upon receipt of the HO instruction from the HO-source gNB, the UE-TX performs a synchronization procedure with the HO-target gNB to start access in Step ST4713. In Step ST4717, the UE-TX configures the SLRB for the SL communication, using the SLRB association information received from the HO-source gNB. In Step ST4718, the UE-TX notifies the UE-RX of the SLRB association information. The UE-TX may give the notification via the PC5-RRC signaling. The UE-TX may notify the UE-RX of only the SLRB parameter associated with the transmitter and the receiver as the SLRB association information to be notified. In Step ST4719, the UE-RX configures the SLRB for the SL communication, using the SLRB association information received from the UE-TX.

This enables the UE-TX to implement the service using the SL communication with the UE-RX after the UE-TX is handed over. When the UE-TX is handed over, the SLRB association information is notified to the UE-TX in the HO procedure. Thus, the UE-TX can receive the SLRB configuration earlier. Even when the UE-TX is handed over, the UE-TX can implement the service using the SL in the HO destination with lower latency. Since the HO-source gNB notifies the HO-target gNB of the QoS relevant information, the amount of signaling between the gNBs can be reduced.

As described above, when the UE-TX or the relay UE is handed over in the UE-to-UE indirect communication through the relay UE, a method for configuring the SLRB for the SL communication is a problem. Here, another method for solving such a problem is disclosed.

In the UE-to-UE indirect communication through the relay UE in the SL, the HO-source gNB to which the UE-TX is connected notifies the HO-target gNB of the QoS relevant information calculated from the service to be implemented using the SL communication between the UE-TX and the UE-RX, during the HO procedure of the UE-TX.

As described above, the HO-source gNB may notify the SLRB association information calculated from the QoS relevant information, instead of the QoS relevant information.

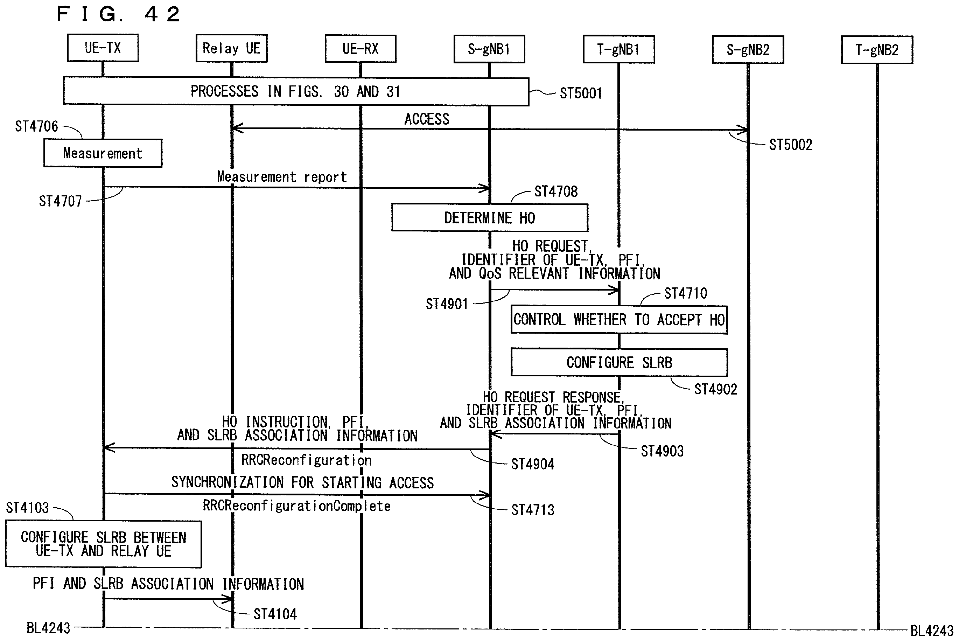

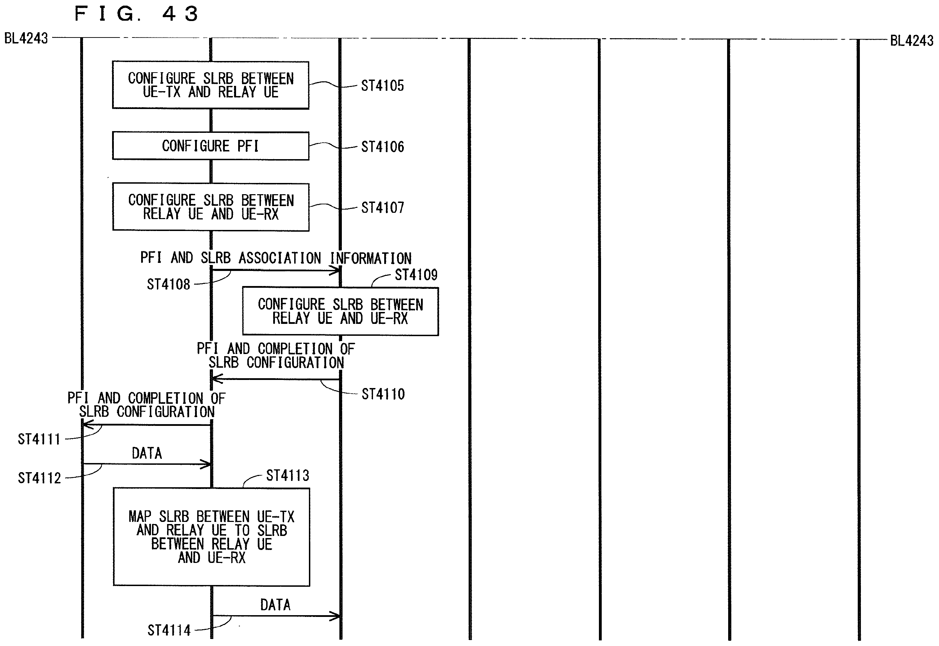

FIGS. 42 and 43 are sequence diagrams illustrating the first example method for configuring the SLRB when the UE-TX is handed over in the UE-to-UE indirect communication using the SL according to the ninth modification of the fourth embodiment. FIGS. 42 and 43 are connected across a location of a border BL4243. In FIGS. 42 and 43, the same step numbers are applied to the steps common to those in FIGS. 25, 30, 31, 40, and 41, and the common description thereof is omitted.

In Step ST5001, the UE-TX, the relay UE, the UE-RX, and the HO-source gNB 1 perform the UE-to-UE indirect communication through the relay UE using the SL communication. For example, the method disclosed in FIGS. 30 and 31 may be applied. In Step ST5002, the relay UE is connected to the HO-source gNB 2.

Since the processes from Step ST4706 to Step ST4713 are identical to those disclosed in FIGS. 40 and 41, the description is omitted.

In Step ST4103, the UE-TX configures the SLRB for the SL communication with the relay UE, using the SLRB association information received from the HO-source gNB 1.

Since the processes from Step ST4104 to Step ST4114 are identical to those disclosed in FIG. 25, the description is omitted.

Even with the HO to the gNB to which the relay UE is connected, the HO does not change the SLRB configuration. The application of the SLRB configuration notified from the UE-TX to the SLRB between the relay UE and the UE-RX enables the relay UE to avoid the influence of the HO procedure for the relay UE.

Even with the HO to the gNB to which the UE-TX is connected or the HO to the gNB to which the relay UE is connected, this method can configure the SLRBs for the SL communications between the UE-TX and the relay UE and between the relay UE and the UE-RX. Consequently, the UE-TX and the UE-RX can implement the service using the SL communication through the relay UE. Since the QoS relevant information is notified between the HO-source gNB and the HO-target gNB during the HO procedure, the UE-TX can receive the SLRB configuration from the HO-target gNB early during the HO procedure. Even when the UE-TX or the relay UE is handed over, the service using the SL can be implemented in the HO destination with low latency. Since the HO-source gNB notifies the HO-target gNB of the QoS relevant information, the amount of signaling between the gNBs can be reduced.

The method disclosed herein may be combined with the method disclosed in the fourth embodiment. This can simplify processes in the relay UE. This can also reduce malfunctions in the UE-to-UE indirect communication through the relay UE using the SL communication, and enhance the reliability.

Another method for configuring the SLRB when the UE-TX or the relay UE is handed over is disclosed.

In the UE-to-UE indirect communication through the relay UE in the SL, the HO-source gNB to which the UE-TX is connected notifies the HO-target gNB of the QoS relevant information calculated from the service to be implemented using the SL communication between the UE-TX and the UE-RX, during the HO procedure of the UE-TX. Furthermore, the HO-source gNB to which the relay UE is connected notifies the HO-target gNB of the QoS relevant information notified from the relay UE and calculated from the service to be implemented using the SL communication between the UE-TX and the UE-RX, during the HO procedure of the relay UE.

As described above, the HO-source gNB may notify the SLRB association information calculated from the QoS relevant information, instead of the QoS relevant information.

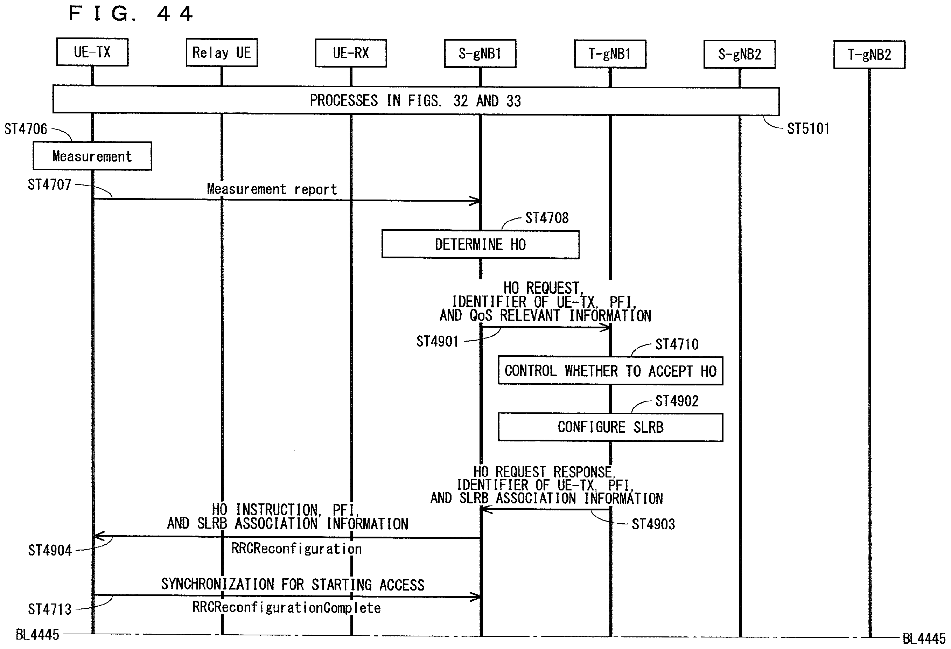

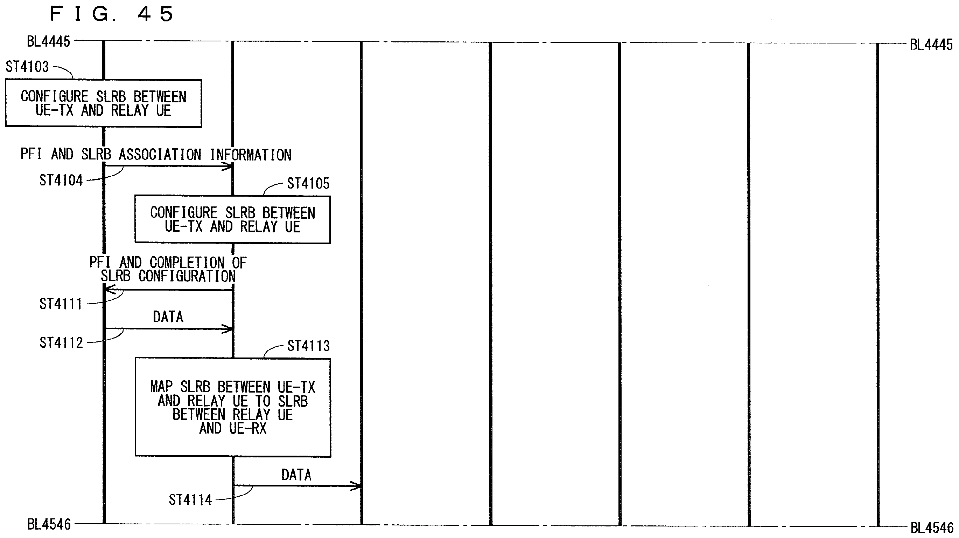

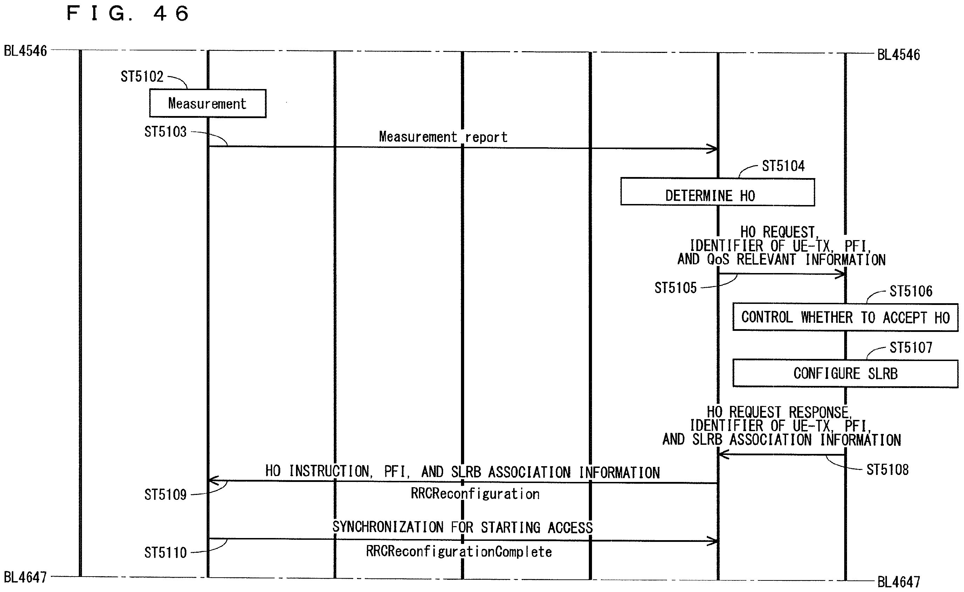

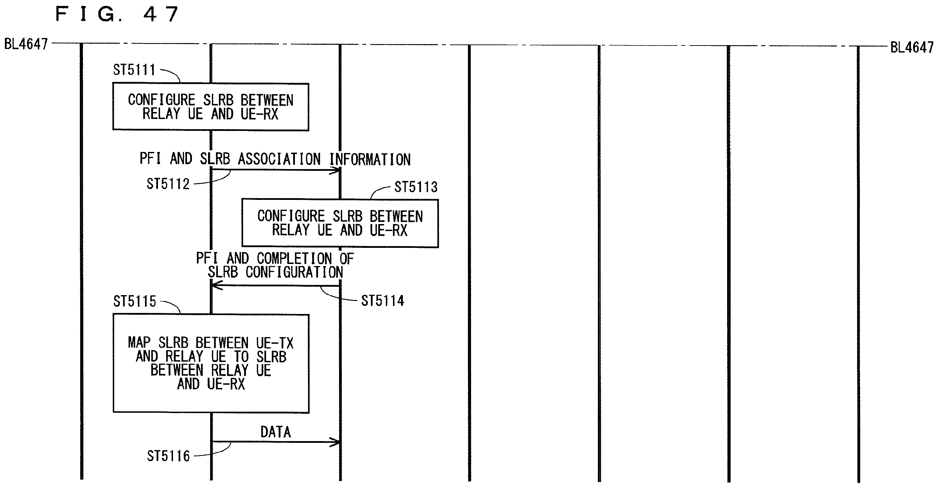

FIGS. 44 to 47 are sequence diagrams illustrating the second example method for configuring the SLRB when the UE-TX is handed over in the UE-to-UE indirect communication using the SL according to the ninth modification of the fourth embodiment. FIGS. 44 to 47 are connected across locations of borders BL4445, BL4546, and BL4647. In FIGS. 44 to 47, the same step numbers are applied to the steps common to those in FIGS. 25, 32, 33, and 40 to 43, and the common description thereof is omitted.

In Step ST5101, the UE-TX, the relay UE, the UE-RX, the HO-source gNB 1, and the HO-source gNB 2 perform the UE-to-UE indirect communication through the relay UE using the SL communication. For example, the method disclosed in FIGS. 32 and 33 may be applied.

Since the processes from Step ST4706 to Step ST4114 are identical to those disclosed in FIGS. 42 and 43, the description is omitted.

In Step ST5102, the relay UE performs measurement. The S-gNB 2 may notify the relay UE of the measurement configuration in advance. In Step ST5103, the relay UE reports a measurement result to the S-gNB 2. In Step ST5104, the S-gNB 2 determines the HO to the T-gNB 2, using the measurement result report from the relay UE.

In Step ST5105, the HO-source gNB 2 notifies the HO-target gNB 2 of an HO request for the relay UE. The HO-source gNB 2 notifies the HO-target gNB 2 of the QoS relevant information received from the relay UE together with the HO request, or includes the QoS relevant information in the HO request and notifies the HO-target gNB 2 of the QoS relevant information. The HO-source gNB 2 may notify information for identifying the service from which the QoS relevant information has been calculated, together with the information.

The HO-source gNB 2 may include an identifier of the relay UE that is to be handed over in the notification of the HO request. The HO-source gNB 2 may give the notification via the Xn or X2 signaling. Upon receipt of the pieces of information from the HO-source gNB 2, the HO-target gNB 2 may associate the received QoS relevant information with the received information for identifying the service, and store the pieces of information.

In Step ST5106, the T-gNB 2 determines whether to accept the HO of the relay UE. When determining to accept the HO, the T-gNB 2 notifies the S-gNB 2 of an HO request response. The T-gNB 2 may include an identifier of the relay UE that is to be handed over in the notification of the HO request response.

In Step ST5107, the HO-target gNB 2 configures the SLRB using the received QoS relevant information. When determining to be capable of accepting the HO for the relay UE in Step ST5106, the HO-target gNB 2 may configure the SLRB.

In Step ST5108, the HO-target gNB 2 notifies the HO-source gNB 2 of information on the configured SLRB. When allowing handover of the relay UE, the HO-target gNB 2 notifies the HO-source gNB 2 of an HO request response for the relay UE in Step ST5108. The HO-target gNB 2 notifies the HO-source gNB 2 of the SLRB association information together with the HO request response, or includes the SLRB association information in the HO request response and notifies the HO-source gNB 2 of the SLRB association information. The HO-target gNB 2 may notify information for identifying a corresponding service, together with the SLRB association information. The HO-target gNB 2 may give the notification via the Xn or X2 signaling.

Upon receipt of the HO request response for the relay UE from the HO-target gNB 2, the HO-source gNB 2 notifies the relay UE of an instruction on the HO to the HO-target gNB 2 in Step ST5109. The HO-source gNB 2 notifies the relay UE of the SLRB association information received from the HO-target gNB 2 together with the HO instruction, or includes the SLRB association information in the HO instruction and notifies the relay UE of the SLRB association information.

The HO-source gNB 2 may notify information for identifying a corresponding service, together with the SLRB association information. The HO-source gNB 2 may include an identifier of the T-gNB in the notification of the HO instruction. The HO-source gNB 2 may give the notification via the RRC signaling in the Uu. The HO-source gNB 2 may notify the HO instruction, using an RRCReconfiguration message.

A part or all the parameters required for the SLRB configuration are notified as the SLRB association information. The HO-source gNB may notify the relay UE of not only the SLRB parameter associated with the transmitter and the receiver but also the SLRB parameter associated with only the transmitter. Furthermore, the SLRB parameter associated with only the receiver may be notified.

Upon receipt of the HO instruction from the HO-source gNB 2, the relay UE performs a synchronization procedure with the HO-target gNB to start access in Step ST5110. In Step ST5111, the relay UE configures the SLRB for the SL communication with the UE-RX, using the SLRB association information received from the HO-source gNB 2. In Step ST5112, the relay UE notifies the UE-RX of the SLRB association information. The relay UE may give the notification via the PC5-RRC signaling. The relay UE may notify the UE-RX of only the SLRB parameter associated with the transmitter and the receiver as the SLRB association information to be notified.

In Step ST5113, the UE-RX configures the SLRB for the SL communication with the relay UE, using the SLRB association information received from the relay UE. In Step ST5114, the UE-RX notifies the relay UE of the completion of the SLRB configuration between the relay UE and the UE-RX. The UE-RX may include the PFI in the completion notification. This enables the relay UE to communicate the service data with the UE-RX using the SL communication.

In Step ST5115, the relay UE maps the SLRB between the UE-TX and the relay UE to the SLRB between the relay UE and the UE-RX. This enables the relay UE to relay, to the UE-RX, the service data between the UE-TX and the relay UE in Step ST5116. Consequently, the UE-TX and the UE-RX can implement the service using the SL communication through the relay UE.

When the UE-TX and/or the relay UE is handed over, notification of the QoS relevant information from the UE-TX to the relay UE may be unnecessary in the HO destination. The QoS relevant information is calculated from the service to be implemented using the SL communication between the UE-TX and the UE-RX. The UE-TX should notify the relay UE of the QoS relevant information when performing the UE-to-UE indirect communication with the UE-RX through the relay UE. When the UE-TX and/or the relay UE is handed over, notification of the QoS relevant information from the UE-TX to the relay UE is unnecessary in the HO destination. This can reduce the amount of signaling.

The HO of the UE-TX need not precede the HO of the relay UE. There is no limit in the timing of the HO of the UE-TX and the timing of the HO of the relay UE. As long as the UE-TX notifies the relay UE of the QoS relevant information, the aforementioned method can be performed with any timing.

When the HO changes the service to be implemented between the UE-TX and the UE-RX or the QoS relevant information to be calculated from the service, the UE-TX may notify the relay UE of the QoS relevant information The UE-TX may give the notification via the RRC signaling. Without being limited by this HO, the UE-TX may give the notification when the service to be implemented between the UE-TX and the UE-RX or the QoS relevant information to be calculated from the service is changed. When the QoS relevant information has been updated, the UE-TX may give the notification. Enabling update of the QoS relevant information can reduce problems of, for example, unsatisfactory QoS and an interruption of the service using the SL communication.

Even with the HO to the gNB to which the UE-TX is connected or the HO to the gNB to which the relay UE is connected, this method can configure the SLRBs for the SL communications between the UE-TX and the relay UE and between the relay UE and the UE-RX. Consequently, the UE-TX and the UE-RX can implement the service using the SL communication through the relay UE. Since the QoS relevant information is notified between the HO-source gNB and the HO-target gNB during the HO procedure, the UE-TX and/or the relay UE can receive the SLRB configuration from the HO-target gNB early after the UE-TX and/or the relay UE is handed over.

Even when the UE-TX or the relay UE is handed over, the service using the SL can be implemented in the HO destination with low latency. Since the HO-source gNB notifies the HO-target gNB of the QoS relevant information, the amount of signaling between the gNBs can be reduced.

The method disclosed herein may be combined with the method disclosed in the first modification of the fourth embodiment. The relay UE can configure the SLRB configured by the HO-target gNB as the SLRB between the relay UE and the UE-RX.

In the aforementioned method, the S-gNB 1 may be identical to the S-gNB 2, or the T-gNB 1 may be identical to the T-gNB 2. This can produce the same advantages as previously described.

When the UE-TX connected to a gNB is handed over, the HO procedure changes the gNB to which the UE-TX is connected. Here, what is used as the SLRB configuration during the HO procedure is a problem. Thus, a method for solving such a problem is disclosed.

When the UE-TX receives the SLRB for the SL communication which has been configured by the HO-target gNB through this HO procedure, the UE-TX applies the received SLRB configuration to the SL communication. When the UE-TX does not receive the SLRB for the SL communication which has been configured by the HO-target gNB, the UE-TX applies the SLRB configuration for the SL communication which has been established by the HO-source gNB. This enables the SL communication using the SLRB configuration even when the gNB to which the UE-TX is connected is being shifted from the HO-source gNB to the HO-target gNB.

The aforementioned method may be applied not only to the UE-to-UE direct communication using the SL communication but also to the UE-to-UE indirect communication using the SL communication. The aforementioned method is applicable to, for example, the HO to the gNB to which the relay UE is connected. This can produce the same advantages as previously described.

When the SLRB configuration is changed by the HO procedure, the flow of service data undergoes a mapping change from the SLRB configured by the HO-source gNB to the SLRB configured by the HO-target gNB. Here, when data processing does not coincide with the mapping change timing, data that is not communicated between UEs remains. Here, a method for solving such a problem is disclosed.

When the SLRB configuration is changed by the HO procedure, data mapped to the SLRB configured by the HO-source gNB is transmitted and received using the changed SLRB configuration. Until the completion of transmission and reception of the data mapped to the SLRB configured by the HO-source gNB, the SLRB is not released. These processes are performed between the UEs performing the SL communication. Even when the SLRB configuration is changed by the HO procedure, loss of data to be communicated between the UEs performing the SL communication can be reduced. This saves a process of forwarding data. Thus, processes of transmitting and receiving data can be facilitated.

The aforementioned method may be applied not only to the UE-to-UE direct communication using the SL communication but also to the UE-to-UE indirect communication using the SL communication. The aforementioned method is applicable to the SL communication between the UE-TX and the UE-RX, between the UE-TX and the relay UE, and between the relay UE and the UE-RX. This can produce the same advantages as previously described.

The aforementioned method may be applied when mapping in the relay UE is changed from the SLRB between the UE-TX and the relay UE to the SLRB between the relay UE and the UE-RX. When the SLRB between the UE-TX and the relay UE and/or the SLRB between the relay UE and the UE-RX is changed, data mapped to the SLRB before change is transmitted and received using the SLRB configuration before change. Until the completion of transmission and reception of the data mapped to the SLRB before change, the SLRB is not released. These processes are performed between the UEs performing the SL communication. This can reduce loss of data in the UE-to-UE indirect communication through the relay UE. This saves a process of forwarding data. Thus, processes of transmitting and receiving data can be facilitated.

The method disclosed in the ninth modification of the fourth embodiment can configure the SLRB for the SL communication even with the HO to the gNB to which the UE-TX or the relay UE is connected, during the UE-to-UE direct communication using the SL communication or the UE-to-UE indirect communication through the relay UE using the SL communication. This enables communication of the service data through the UE-to-UE direct communication using the SL communication or the UE-to-UE indirect communication through the relay UE using the SL communication.

### The tenth modification of the fourth embodiment

The tenth modification of the fourth embodiment discloses another method for solving the problem described in the fourth embodiment. Differences with the methods disclosed in the fourth embodiment and the first modification of the fourth embodiment are mainly described.

The UE-TX notifies the UE-RX of the SLRB configuration. The UE-TX notifies the UE-RX of the SLRB association information. The UE-TX may notify the UE-RX of the SLRB association information through the relay UE. The relay UE need not decode the SLRB association information received from the UE-TX. The relay UE may notify the UE-RX of the SLRB association information received from the UE-TX as container information. The relay UE should notify information associated with the transmitter and the receiver as the SLRB association information. This enables the SLRB configuration for the SL communication between the UE-TX and the UE-RX.

The method disclosed in the fourth embodiment may be appropriately applied to the notification method. This enables the UE-TX to notify the UE-RX of the SLRB association information. The UE-RX receives the SLRB association information from the UE-TX. This enables the SLRB configuration for the SL communication between the UE-TX and the UE-RX.

A message for transmitting information to be notified from the UE-TX to the UE-RX through the relay UE may be provided. Examples of the message may include an SL information transfer message. The UE-TX should start a process of transmitting the message when needing to transmit the information to the UE-RX. The UE-TX may transmit the message via the PC5-S signaling or the PC5-RRC signaling. In the process of transmitting the message, the relay UE need not decode the message. The relay UE transmits the message received from the UE-TX to the UE-RX, without decoding it.

The UE-TX may include the SLRB association information in the message, and notify the relay UE of the information. Upon receipt of the message, the relay UE notifies the UE-TX of the information included in the message, without decoding it. This can facilitate the procedure in the relay UE. This can also reduce malfunctions in the relay UE, and enhance the reliability in the UE-to-UE indirect communication through the relay UE.

The aforementioned method should be combined with the method disclosed in the fourth embodiment. The UE-TX notifies the UE-RX of the SLRB association information. The UE-TX notifies the relay UE of the SLRB association information. Consequently, the relay UE can configure the SLRB for the SL communication between the UE-TX and the relay UE, and the SLRB for the SL communication between the relay UE and the UE-RX.

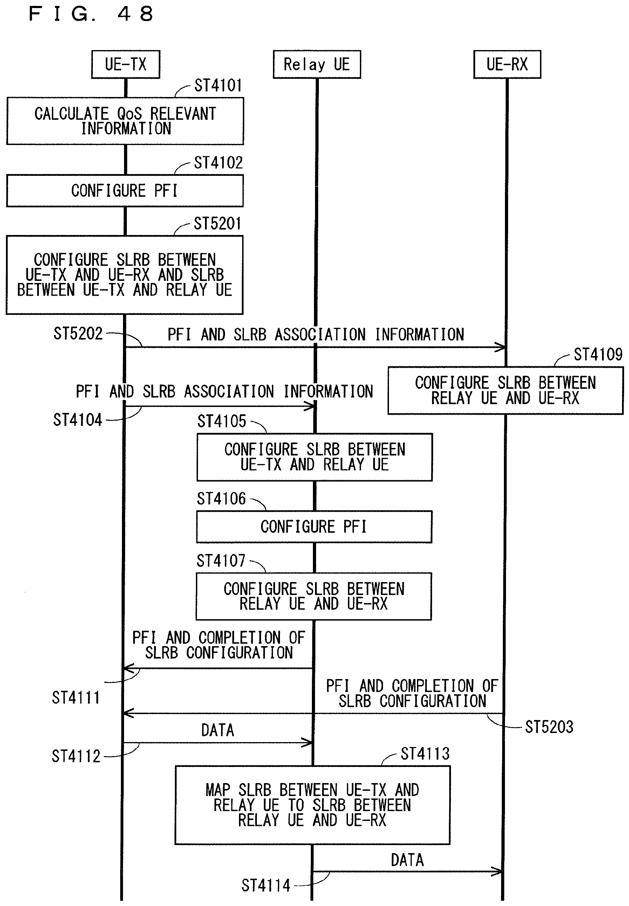

FIG. 48 is a sequence diagram illustrating the first example method for notifying the SLRB configuration from the UE-TX to the UE-RX in the UE-to-UE indirect communication using the SL according to the tenth modification of the fourth embodiment. FIG. 48 illustrates an example where the V2X service has been generated in the UE-TX. The UE-TX communicates the service data to the UE-RX through the relay UE in the example of FIG. 48. In FIG. 48, the same step numbers are applied to the steps common to those in FIG. 25, and the common description thereof is omitted.

In Step ST4101, the UE-TX calculates the QoS relevant information from the generated service. In Step ST4102, the UE-TX configures the PFI using the QoS relevant information.

In Step ST5201, the UE-TX configures the SLRB for the SL communication between the UE-TX and the UE-RX. Furthermore, the UE-TX configures the SLRB for the SL communication between the UE-TX and the relay UE. The SLRB configuration between the UE-TX and the UE-RX is consistent with that between the UE-TX and the relay UE. The UE-TX uses the SLRB configuration calculated using the QoS relevant information calculated from the generated service, as the SLRB configuration between the UE-TX and the UE-RX and the SLRB configuration between the UE-TX and the relay UE.

In Step ST5202, the UE-TX notifies the UE-RX of the configured PFI and SLRB association information. The UE-TX should notify information associated with the transmitter and the receiver as the SLRB association information. In Step ST4109, the UE-RX configures the SLRB for the SL communication between the relay UE and the UE-RX, using the SLRB association information received from the UE-TX.

The UE-TX may perform Step ST5202 through the relay UE. For example, the UE-TX may notify the relay UE of the PFI and the SLRB association information as container information. Then, the relay UE may notify the UE-RX of the PFI and the SLRB association information which have been received from the UE-TX,
without decoding them.

Although the UE-TX configures the SLRB for the SL communication between the UE-TX and the UE-RX in Step ST5201 and notifies the UE-RX of the configured SLRB in Step ST5202, the UE-TX may configure the SLRB for the SL communication between the UE-TX and the relay UE and notify the UE-RX of the configured SLRB. The UE-RX applies the SLRB configuration received from the UE-TX to the SL communication between the relay UE and the UE-RX.

In Step ST5203, the UE-RX notifies the UE-TX of the completion of the SLRB configuration between the relay UE and the UE-RX. The UE-RX may include the PFI in the completion notification. The UE-RX may perform Step ST5203 through the relay UE. For example, the UE-RX may notify the relay UE of the PFI and information indicating the completion of the SLRB configuration as container information. Then, the relay UE may notify the UE-TX of the PFI and the information indicating the completion of the SLRB configuration which have been received from the UE-RX, without decoding them.

Consequently, the UE-RX can receive the service data transmitted from the UE-TX through the relay UE.

The UE-TX configures the SLRB with the relay UE, and the relay UE configures, using the configured SLRB, the SLRB between the relay UE and the UE-RX in Steps ST4104 to ST4111 as disclosed in FIG. 25.

The relay UE may omit notifying the UE-RX of the SLRB configuration between the relay UE and the UE-RX. Step ST4108 disclosed in FIG. 25 may be omitted. Since the UE-TX notifies the UE-RX of the SLRB configuration in Step ST5202, the UE-TX can configure the SLRB with the relay UE without the process in Step ST4108.

Upon receipt of the completion notifications of the SLRB configuration from the relay UE in Step ST4111 and from the UE-RX in ST5203, the UE-TX can determine that the UE-TX can communicate with the UE-RX through the relay UE. In Steps ST4112 to ST4114, the UE-TX communicates the service data with the UE-RX through the relay UE.

The relay UE may be allowed to decode the notification of the SLRB configuration from the UE-TX to the UE-RX (Step ST5202 in the example of FIG. 48). The UE-TX notifies the UE-RX of a part or all the parameters required for the SLRB configuration as the SLRB association information to be notified. The UE-TX may notify not only the SLRB parameter associated with the transmitter and the receiver but also the SLRB parameter associated with only the transmitter. Furthermore, the UE-TX may notify the SLRB parameter associated with only the receiver. The relay UE can recognize the SLRB configuration from the UE-TX to the UE-RX.

The relay UE applies the SLRB configuration from the UE-TX to the UE-RX as the SLRB configuration with the UE-TX and the SLRB configuration with the UE-RX. This can omit the notification of the SLRB configuration from the UE-TX to the relay UE (Step ST4104 in the example of FIG. 41). Consequently, the amount of signaling can be reduced.

The UE-TX may notify the relay UE of the configuration of layers lower than the RLC layer in the SLRB configuration. This should be applied to the L2 relay. For the L2 relay, data is forwarded between the RLC and the PDCP in the relay UE. The notification of the configuration of the layers lower than the RLC layer in the SLRB configuration from the UE-TX to the relay UE enables the relay UE to receive data from the UE-TX and transmit the data to the UE-RX, using the configuration of the layers lower than the RLC layer.

Specific examples of the SLRB parameters of the layers lower than the RLC layer include an RLC bearer configuration, a logical channel identifier (LCID), and a cell group configuration.

In the UE-to-UE indirect communication through the relay UE, the aforementioned method can satisfy the QoS required for the service using the communication. Furthermore, the relay UE can simply configure the SLRB. This can reduce malfunctions in the UE-to-UE indirect communication through a relay.

Although a method combined with the method disclosed in the fourth embodiment is disclosed, the method disclosed in the first modification of the fourth embodiment may be combined. The UE-TX notifies the UE-RX of the SLRB association information. The UE-TX notifies the relay UE of the SLRB association information and the QoS relevant information. The relay UE configures the SLRB for the SL communication between the UE-TX and the relay UE, using the SLRB association information. The relay UE configures the SLRB for the SL communication between the relay UE and the UE-RX, using the QoS relevant information.

The relay UE notifies the UE-RX of the SLRB configuration between the relay UE and the UE-RX. When the relay UE configures the SLRB between the relay UE and the UE-RX differently from the SLRB between the UE-TX and the relay UE, the relay UE may notify the UE-RX of the SLRB configuration between the relay UE and the UE-RX. The UE-RX configures the SLRB for the SL communication between the relay UE and the UE-RX, using the SLRB configuration received from the relay UE.

Consequently, the relay UE can configure the SLRB for the SL communication between the UE-TX and the relay UE, and the SLRB for the SL communication between the relay UE and the UE-RX.

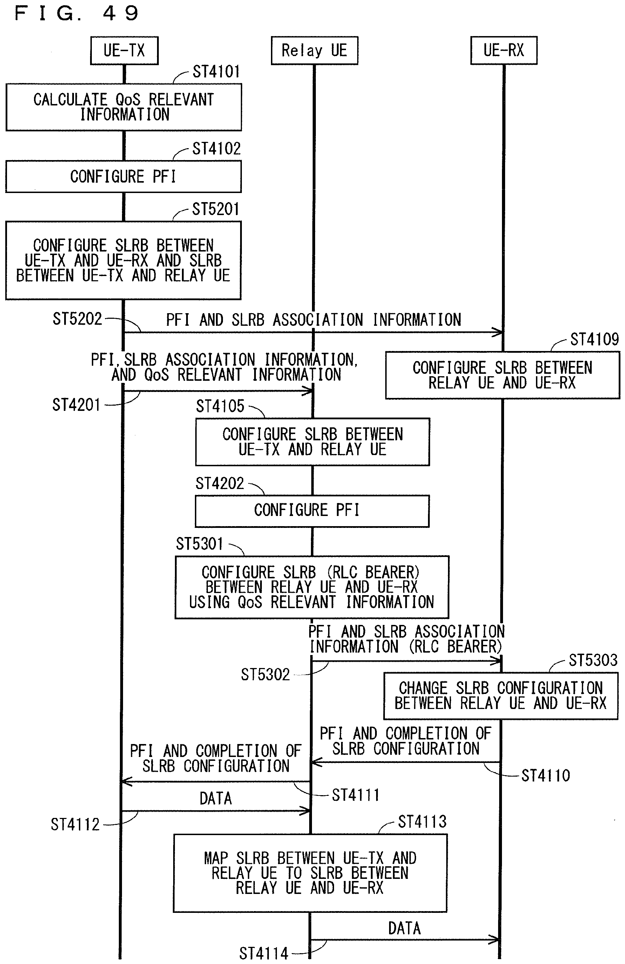

FIG. 49 is a sequence diagram illustrating the second example method for notifying the SLRB configuration from the UE-TX to the UE-RX in the UE-to-UE indirect communication using the SL according to the tenth modification of the fourth embodiment. FIG. 49 illustrates an example where the V2X service has been generated in the UE-TX. The UE-TX communicates the service data to the UE-RX through the relay UE in the example of FIG. 49. In FIG. 49, the same step numbers are applied to the steps common to those in FIGS. 26 and 48, and the common description thereof is omitted.

In Step ST4201, the UE-TX notifies the relay UE of the calculated QoS relevant information, the configured PFI, and the SLRB association information on the SLRB to which the PC5 QoS flow corresponding to the PFI is mapped. The SLRB association information may be the SLRB parameter associated with the transmitter and the receiver.

In Step ST5301, the relay UE configures the SLRB for the SL communication between the relay UE and the UE-RX. The relay UE may establish the configuration of the layers lower than the RLC layer as the SLRB configuration. The relay UE may consistently configure layers higher than the RLC layer in the SLRB configuration received from the UE-TX. This should be applied to the L2 relay. For the L2 relay, data is forwarded between the RLC and the PDCP in the relay UE. After establishing the configuration of the layers lower than the RLC layer and notifying the configuration to the UE-RX, the relay UE can receive data from the UE-TX and transmit the data to the UE-RX.

In Step ST5302, the relay UE notifies the UE-RX of the configured PFI and SLRB association information. The relay UE should notify information associated with the transmitter and the receiver as the SLRB association information. In Step ST5303, the UE-RX changes the SLRB configuration for the SL communication between the relay UE and the UE-RX, using the SLRB association information received from the relay UE. When the relay UE notifies the SLRB association information of the layers lower than the RLC layer, the UE-RX changes the SLRB configuration of the layers lower than the RLC layer as the SLRB configuration for the SL communications between the relay UE and the UE-RX.

In Step ST4110, the UE-RX notifies the relay UE of the completion of the SLRB configuration between the relay UE and the UE-RX. The UE-RX may include the PFI in the completion notification. In Step ST4111, the relay UE notifies the UE-TX of the completion of the SLRB configuration between the relay UE and the UE-RX and the completion of the SLRB between the UE-TX and the relay UE. The relay UE may include the PFI in the completion notification.

This enables the UE-TX to communicate the service data with the UE-RX through the relay UE.

Upon receipt of the completion notification of the SLRB configuration from the relay UE and the UE-RX in Step ST4111, the UE-TX can determine that the UE-TX can communicate with the UE-RX through the relay UE. In Steps ST4112 to ST4114, the UE-TX communicates the service data with the UE-RX through the relay UE.

In the UE-to-UE indirect communication through the relay UE, the aforementioned method can satisfy the QoS required for the service using the communication. This increases the use efficiency of the radio resources of the relay UE and the communication quality of the SL communication between the relay UE and the UE-RX.

The method disclosed in the tenth modification of the fourth embodiment can configure the SLRB between the UE-TX and the UE-RX. Thus, the UE-TX and the UE-RX can reliably configure the SLRB that satisfies the QoS required for the service to be implemented between the UE-TX and the UE-RX. Consequently, the reliability in the UE-to-UE indirect communication through the relay UE can be enhanced.

In the present invention, the UE-TX is the UE in which the service data has been generated. Suppose, for example, a UE 1 denotes the UE-TX and a UE 2 denotes the UE-RX. When the service data has been generated in the UE 2 and the UE 2 transmits the data to the UE 1, the disclosed methods should be applied by reading the UE 2 as the UE-TX and reading the UE 1 as the UE-RX. This can produce the same advantages as previously described.

The embodiments and the modifications are mere exemplifications, and can be freely combined. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

For example, the methods disclosed in the embodiments and its modifications may be applied not only to the vehicle-to-everything (V2X) services but also to services using the SL communication. The methods may be applied to, for example, the SL communication to be used in various services, for example, the proximity-based service, public safety, communication between wearable devices, and Device-to-Device communication in factories.

While the present invention is described in detail, the foregoing description is in all aspects illustrative and does not restrict the present invention. Therefore, numerous modifications and variations that have not yet been exemplified can be devised.

### Description of References

- 200: communication system
- 202: communication terminal device
- 203: base station device
- 210: communication system

## Claims

1. A communication system, comprising:
- a communication terminal; and
- a base station configured to perform radio communication with the communication terminal,
- wherein the communication terminal or the base station determines whether the base station supports a desired slice that is a Radio Access Network (RAN) slice that the communication terminal desires to use.

2. The communication system according to claim 1,
wherein the base station includes support information in one of a broadcast signal and a dedicated signal addressed to the communication terminal, and transmits the support information, the support information being information on RAN slices that the base station can support, and
wherein the communication terminal receives, from the base station, one of the broadcast signal and the dedicated signal, and determines whether the base station supports the desired slice, based on the support information included in the received one of the broadcast signal and the dedicated signal.

3. The communication system according to claim 2,
wherein the broadcast signal is a signal for transmitting one of a master information block (MIB), a system information block (SIB), and a synchronization signal (SS) block, and
wherein the dedicated signal is a signal for transmitting one of a radio resource control (RRC) setup instruction, an RRC resumption instruction, an RRC reconfiguration instruction, a handover request, and a random access response.

4. The communication system according to claim 1,
wherein the communication terminal transmits information on the desired slice to the base station, and
wherein the base station receives the information from the communication terminal, and determines whether the base station supports the desired slice, based on the received information.

5. The communication system according to claim 4,
wherein when the base station does not support the desired slice, the base station transmits, to the communication terminal, a rejection of registration of the communication terminal together with a cause of the rejection.

6. A communication terminal
configured to perform radio communication with a base station,
wherein the communication terminal determines whether the base station supports a desired slice that is a Radio Access Network (RAN) slice that the communication terminal desires to use.

7. A base station
configured to perform radio communication with a communication terminal, wherein the base station determines whether to support a desired slice that is a Radio Access Network (RAN) slice that the communication terminal desires to use.
